(19) Europäisches Patentamt / European Patent Office / Office européen des brevets

(11) **EP 2 104 360 A1**

(12) **EUROPEAN PATENT APPLICATION**
published in accordance with Art. 153(4) EPC

(43) Date of publication:
**23.09.2009 Bulletin 2009/39**

(51) Int Cl.:
***H04N 7/32*** *(2006.01)*

(21) Application number: **07860213.3**

(22) Date of filing: **26.12.2007**

(86) International application number:
**PCT/JP2007/074984**

(87) International publication number:
**WO 2008/078782 (03.07.2008 Gazette 2008/27)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **27.12.2006 JP 2006352312**

(71) Applicant: **NTT DoCoMo, Inc.**
**Chiyoda-ku**
**Tokyo 100-6150 (JP)**

(72) Inventors:
• **FUJIBAYASHI, Akira**
  **Tokyo 100-6150 (JP)**
• **BOON, Choong Seng**
  **Tokyo 100-6150 (JP)**
• **KATO, Sadaatsu**
  **Tokyo 100-6150 (JP)**

(74) Representative: **Viering, Jentschura & Partner**
**Grillparzerstrasse 14**
**81675 München (DE)**

(54) **DYNAMIC IMAGE ENCODING DEVICE, DYNAMIC IMAGE DECODING DEVICE, DYNAMIC IMAGE ENCODING METHOD, DYNAMIC IMAGE DECODING METHOD, DYNAMIC IMAGE ENCODING PROGRAM, AND DYNAMIC IMAGE DECODING PROGRAM**

(57) An object of the present invention is to perform encoding and decoding at a high compression rate even with a video consisting of a mixture of pictures of different bandwidths.

In a video encoding device 10, a predicted signal generator 121 extracts spatial frequency components in a predetermined band from a predetermined extraction reference picture except for a target reference picture used as a picture for prediction of a target picture as an object to be encoded, among reference pictures stored in memory 108. The predicted signal generator 121 generates a predicted signal for the target picture from the target reference picture and the extracted spatial frequency components.

**Fig.1**

## Description

**Technical Field**

The present invention relates to a video encoding device, video decoding device, video encoding method, video decoding method, video encoding program, and video decoding program.

**Background Art**

A video is comprised of a series of "frames" being single still pictures. Magnitudes of spatial frequency components in a frame imply sharpness and blur-contrast (which will be referred to as resolution) of a picture and thus relate to evaluation on quality of a video.

It is often the case that a video taken by a consumer video camera is one consisting of a mixture of frames of different bandwidths where spatial frequency components are present. A reason for it is that the autofocus function of the camera becomes active to automatically adjust focus during photography so as to vary bands of adjacent pictures taken, with the result of such recording that a picture with a signal of a broad bandwidth is adjacent to a picture with a signal of a narrow bandwidth.

Non-patent Document 1 describes that even if a video consists of individual frames of low resolution, when it is displayed as a video consisting of a series of frames, it looks sharp with enhanced contrast of image when compared with still pictures because of optical illusion. This optical illusion is called motion sharpening. It also describes the experiment result that when frames of varying bandwidths of spatial frequencies are inserted in an original image with regular use of a filter, the motion sharpening makes the quality of the video perceived high when viewed as a video and evaluated in comparison with the original image.

On the other hand, the compression encoding technology is used for efficiently performing transmission and efficiency of video data. The systems of MPEG1-4 and H.261-H.264 are widely used for videos. For encoding a video, a predicted signal for a target picture as an object to be encoded is generated using another picture adjacent thereto on the time axis and a difference between the target picture and the predicted signal is encoded, thereby achieving reduction in data amount. This technique is called inter-frame predictive coding.

In H.264, a picture of one frame is divided into regions of blocks each consisting of $16 \times 16$ pixels and the image encoding process is carried out for each of the block units. In the inter-frame predictive coding, the predicted signal is generated by performing motion prediction using another frame previously encoded and decoded, as a reference picture, for a target block of a picture as an object to be encoded. Then the residual is obtained between this target block and the predicted signal and discrete cosine transform and quantization are carried out therewith to generate encoded data. Thereafter, quantized transform coefficients are subjected to inverse quantization and inverse transform to generate reconstructed transform coefficients. Thereafter, the predicted signal is added to the reconstructed transform coefficients to restore a reconstructed picture. The reconstructed picture thus restored is temporarily stored as a reference picture for encoding and decoding of the next picture.

In this compressive coding of video, a video with narrow bandwidths of pictures does not contain high frequency components and thus provides small transform coefficients, enabling reduction in encoded data. For this reason, high encoding efficiency can be expected in encoding a video containing pictures of different bandwidths in respective frames, or a video containing frames of low resolution with expectation of motion sharpening.

In H.264 there is a prediction method called the B-frame technology to generate encoded data of a target block of a picture as an object to be encoded, using two decoded frames as reference pictures. In general, the B-frame technology is characterized in that the use of two pictures reduces noise so that encoding can be done in a very small information amount. It is also known that when B-frames prepared as described above are applied to encoding of a target block of a picture as another object to be encoded, the number of frames applicable to prediction increases, so as to further enhance the encoding efficiency. Non-patent Document 1: Takeuchi, T. & De Valois, K.K. (2005) Sharpening image motion based on spatio-temporal characteristics of human vision. Human Vision and Electronic Imaging X

## Disclosure of the Invention

**Problem to be Solved by the Invention**

On the other hand, there is also a disadvantage that because of the property of the B-frame technology, B-frames do not contain high frequency components, so as to lead to low resolution. For this reason, when encoding is carried out using the B-frames as reference pictures, there is a case where the bandwidth of the picture as an object to be encoded is wider than that of the B-frames. In the case of the video with expectation of motion sharpening, the video can consist of a mixture of images of different bandwidths.

However, the conventional video encoding and decoding methods do not allow efficient compression of the video if it consists of a mixture of pictures of different bandwidths. The conventional methods have a problem that when a first picture of a narrow bandwidth is predicted with reference to a second picture of a wide bandwidth, a search for a prediction object fails or a difference signal of the first picture contains a difference of components over the bandwidth of the second picture to increase the information amount, resulting in reduction in compression rate.

They also have another problem that if a second picture of a wide bandwidth is predicted with reference to a first picture of a narrow bandwidth, a search for a prediction object fails and the difference signal needs to be compensated for spatial frequency components over the bandwidth of the first picture to increase the information amount, resulting in reduction in compression rate.

Concerning the former, the problem can be overcome by adjusting the bandwidth of the second picture of the wide bandwidth with a filter or the like and then using the adjusted second picture as a reference picture. However, concerning the latter, it is very difficult to overcome the problem because there are originally no high frequency components in the first picture greater than the bandwidth of the second picture. It can be contemplated that if the video regularly contains pictures of different bandwidths, the prediction is performed with reference to a picture of a nearly identical resolution. However, it raises problems that information indicating the time axis increases in order to specify the picture of the nearly identical resolution and that it is difficult to make accurate prediction, particularly, for a video with large motion (because motion between a target picture and a reference picture becomes large), to increase the information amount, resulting in reduction in compression rate.

The present invention has been accomplished in order to solve the above problems and an object of the present invention is to provide a video encoding device, video decoding device, video encoding method, video decoding method, video encoding program, and video decoding program capable of implementing encoding and decoding at a high compression rate even with a video consisting of a mixture of pictures of different bandwidths.

**Means for Solving the Problem**

In order to achieve the above object, a video encoding device according to the present invention comprises input means to input a target picture as an object to be encoded, from a plurality of pictures forming a video; storage means to store a reference picture used for generation of a predicted signal for the target picture input by the input means; predicted signal generating means to obtain at least two band-dependent predicted signals for a predetermined band of the target picture, using different reference pictures dependent on band among reference pictures stored in the storage means, and to generate predicted signal generation information for generation of the predicted signal for the target picture by a predetermined method using the band-dependent predicted signals obtained; subtracting means to obtain a difference between the target picture and the predicted signal generated by the predicted signal generating means, to generate a difference signal; encoding means to encode the difference signal generated by the subtracting means, to generate an encoded difference signal; decoding means to decode the encoded residual signal generated by the encoding means, to generate a decoded residual signal; adding means to add the predicted signal generated by the predicted signal generating means, to the decoded residual signal generated by the decoding means, to generate a reconstructed picture, and to make the storage means store the generated reconstructed picture as a reference picture; and output means to output the encoded residual signal generated by the encoding means.

In the video encoding device according to the present invention, the band-dependent predicted signals are generated from the plurality of reference pictures and the predicted signal is generated from these. Therefore, the predicted signal contains the spatial frequency components in a wider band. For this reason, even if the video as an object to be encoded consists of a mixture of pictures of different bandwidths and if the bandwidth of the target picture is wide, because the predicted signal contains the spatial frequency components in the wider band, the residual signal of the predicted signal becomes reduced, thus enabling encoding at a high compression rate.

In order to achieve the above object, a video encoding device according to the present invention comprises input means to input a target picture as an object to be encoded, from a plurality of pictures forming a video; storage means to store a reference picture used for generation of a predicted signal for the target picture input by the input means; spatial frequency extracting means to extract spatial frequency components in a predetermined band from a predetermined extraction reference picture except for a target reference picture used as a picture for prediction of the target picture among reference pictures stored in the storage means, and to generate spatial frequency extraction information indicating an extracted content of the spatial frequency components; predicted signal generating means to generate the predicted signal for the target picture from the target reference picture and the spatial frequency components extracted by the spatial frequency extracting means, and to generate predicted signal generation information indicating a generation content of the predicted signal while containing the spatial frequency extraction information generated by the spatial frequency extracting means; subtracting means to obtain a difference between the target picture and the predicted signal generated by the predicted signal generating means, to generate a residual signal; encoding means to encode the residual signal generated by the subtracting means, to generate an encoded residual signal; decoding means to decode the encoded residual signal generated by the encoding means, to generate a decoded residual signal; adding means to add the predicted signal generated by the predicted signal generating means, to the decoded residual signal generated by the decoding means, to generate a reconstructed picture, and to make the storage means store the generated reconstructed picture as a reference picture; and output means to output the encoded residual signal generated by the encoding means and the predicted signal generation information generated by the predicted signal generating means.

In the video encoding device according to the present invention, the spatial frequency components in the predetermined band are extracted from the extraction reference picture and the spatial frequency components, together with the target reference picture, are used for generation of the predicted signal. Therefore, the predicted signal contains the spatial frequency components in the band not included in the target reference picture. For this reason, even if the video as an object to be encoded consists of a mixture of pictures of different bandwidths, when the bandwidth of the target reference picture is narrower than that of the target picture, the target reference picture is compensated for the spatial frequency components in the band not included in the target reference picture and this reduces the residual signal of the predicted signal in the band, thus enabling encoding at a high compression rate.

Preferably, the spatial frequency extracting means acquires information indicating spatial frequency components of the target picture and the target reference picture, makes a comparison between the acquired information, and determines the predetermined band for extraction of the spatial frequency components from the extraction reference picture, based on a result of the comparison. This configuration allows the device to appropriately extract the spatial frequency components in the band included in the target picture but not included in the target reference picture, so as to further reduce the residual signal, thus enabling encoding at a higher compression rate.

Preferably, the spatial frequency extracting means extracts the spatial frequency components using a relation of motion between the target reference picture and the extraction reference picture. This configuration permits more appropriate extraction of the spatial frequency components from the extraction reference picture, thus enabling encoding at a higher compression rate.

Preferably, the spatial frequency extracting means subjects the extraction reference picture to motion compensation relative to the target reference picture and extracts the spatial frequency components from the extraction reference picture subjected to the motion compensation. Since this configuration reduces an error between the extraction reference picture and the target reference picture, it permits more appropriate extraction of the spatial frequency components from the extraction reference picture, thus enabling encoding at a higher compression rate

Preferably, the spatial frequency extracting means acquires information indicating spatial frequency components of the target picture, the target reference picture, and a reference picture other than the target reference picture stored in the storage means, and determines the extraction reference picture, based on at least any part of the acquired information. This configuration permits use of the extraction reference picture with the spatial frequency components in the band included in the target picture but not included in the target reference picture, thus enabling encoding at a much higher compression rate

Preferably, the predicted signal generating means subjects the target reference picture to processing using the spatial frequency components extracted by the spatial frequency extracting means, and generates the predicted signal using the target reference picture subjected to the processing. This configuration implements the processing with the extracted spatial frequency components for the target reference picture before generation of the predicted signal, thus enabling secure implementation of the present invention.

Preferably, the predicted signal generating means generates the predicted signal for the target picture using the target reference picture, subjects the generated predicted signal to processing using the spatial frequency components extracted by the spatial frequency extracting means, and defines the predicted signal subjected to the processing, as the predicted signal for the target picture. This configuration implements the processing with the extracted spatial frequency components for the predicted signal after execution of the generation of the predicted signal, thus enabling secure implementation of the present invention.

Preferably, the storage means stores the picture generated by the processing by the predicted signal generating means, as the reference picture. This configuration increases the pictures available as reference pictures, thus enabling encoding at a higher compression rate.

In order to achieve the above object, a video encoding device according to the present invention comprises input means to input a target picture as an object to be encoded, from a plurality of pictures forming a video; storage means to store a reference picture used for generation of a predicted signal for the target picture input by the input means; first predicted signal generating means to generate a predicted signal in a predetermined band of the target picture from a first reference picture stored in the storage means; first subtracting means to obtain a difference between the target picture and the first predicted signal generated by the first predicted signal generating means, to generate a first residual signal; second predicted signal generating means to generate a second predicted signal for the first predicted signal from at least one second reference picture different from the first reference picture, which is stored in the storage means; specific band signal extracting means to extract a specific band signal corresponding to spatial frequency components in a predetermined band of the second predicted signal generated by the second predicted signal generating means, and to generate specific band signal extraction information indicating an extracted content of the specific band signal; second subtracting means to obtain a difference between the first residual signal generated by the first subtracting means and the specific band signal extracted by the specific band signal extracting means, to generate a second residual signal; encoding means to encode the second residual signal generated by the second subtracting means, by a predetermined method to generate an encoded residual signal; decoding means to decode the encoded residual signal generated by the encoding means, to generate a decoded residual signal; first adding means to add the specific band signal generated by the specific band signal extracting means, to the decoded residual signal generated by the decoding means, to generate a first sum signal; second adding means to add the first predicted signal generated by the first predicted signal generating means, to the first sum signal generated by the first adding means, to generate a reconstructed picture, and to make the storage means store the generated reconstructed picture as a reference picture; and output means to output the encoded residual signal generated by the encoding means and the specific band signal extraction information generated by the specific band signal extracting means.

In the video encoding device according to the present invention, the spatial frequency components in the predetermined band are extracted from the second predicted signal generated from the second reference picture, and the spatial frequency components, together with the first predicted signal, are used for generation of the residual signal of the encoded object. Therefore, the spatial frequency components in the band not included in the first predicted signal are used for generation of the residual signal. For this reason, even if the video as an object to be encoded consists of a mixture of pictures of different bandwidths, when the bandwidth of the target reference picture is narrower than that of the first target picture, the target reference picture is compensated for the spatial frequency components in the band not included in the target reference picture, so as to reduce the residual signal in the band, thus enabling encoding at a high compression rate.

In order to achieve the above object, a video decoding device according to the present invention comprises storage means to store a reconstructed picture as a reference picture for generation of a predicted signal used in decoding an encoded video; input means to input an encoded residual signal resulting from predictive coding of the video; decoding means to decode the encoded residual signal input by the input means, to generate a decoded residual signal; predicted signal generating means to generate at least two band-dependent predicted signals for a predetermined band of the decoded residual signal generated by the decoding means, using different reference pictures dependent on band among reference pictures stored in the storage means, and to generate predicted signal generation information for generation of a predicted signal for the decoded residual signal by a predetermined method using the band-dependent predicted signals generated; adding means to add the predicted signal generated by the predicted signal generating means, to the decoded residual signal to generate a reconstructed picture, and to make the storage means store the generated reconstructed picture; and output means to output the reconstructed picture generated by the adding means. The video decoding device according to the present invention is able to decode the video encoded at a high compression rate by the video encoding device according to the present invention.

In order to achieve the above object, a video decoding device according to the present invention comprises storage means to store a reconstructed picture as a reference picture for generation of a predicted signal used in decoding an encoded video; input means to input an encoded residual signal resulting from predictive coding of the video, and predicted signal generation information indicating a generation content of the predicted signal; decoding means to decode the encoded residual signal input by the input means, to generate a decoded residual signal; predicted signal generating means to refer to the predicted signal generation information input by the input means, to generate a predicted signal for the decoded residual signal generated by the decoding means, using a reference picture stored in the storage means; adding means to add the predicted signal generated by the predicted signal generating means, to the decoded residual signal generated by the decoding means, to generate a reconstructed picture, and to make the storage means store the generated reconstructed picture; and output means to output the reconstructed picture generated by the adding means, wherein the predicted signal generation information contains spatial frequency extraction information indicating an extracted content of spatial frequency components in a predetermined band from a predetermined reference picture stored in the storage means, and wherein the predicted signal generating means refers to the frequency extraction information to extract spatial frequency components in the predetermined band from a predetermined extraction reference picture stored in the storage means, and generates the predicted signal from a target reference picture used as a picture for generation of the predicted signal among reference pictures stored in the storage means, and the spatial frequency components extracted.

The video decoding device according to the present invention is able to decode the video encoded at a high compression rate by the video encoding device according to the present invention.

Preferably, the predicted signal generating means extracts the spatial frequency components using a relation of motion between the target reference picture and the extraction reference picture. This configuration uses the spatial frequency components extracted using the relation of motion between the target reference picture and the extraction reference picture and enables the device to decode the video encoded at a higher compression rate.

Preferably, the predicted signal generating means subjects the extraction reference picture to motion compensation relative to the target reference picture and extracts the spatial frequency components from the extraction reference picture subjected to the motion compensation. This configuration uses the spatial frequency components extracted from the motion-compensated extraction reference picture and enables the device to decode the video encoded at a higher compression rate.

Preferably, the predicted signal generating means subjects the target reference picture to processing using the spatial frequency components extracted, and generates the predicted signal using the target reference picture subjected to the processing. This configuration implements the processing with the extracted spatial frequency components for the target reference picture before generation of the predicted signal, and enables the device to decode the video encoded at a high compression rate.

Preferably, the predicted signal generating means generates the predicted signal for the target picture with the target reference picture, subjects the generated predicted signal to processing using the spatial frequency components extracted, and defines the predicted signal subjected to the processing, as the predicted signal for the target picture. This configuration implements the processing with the extracted spatial frequency components for the predicted signal after execution of the generation of the predicted signal, and enables the device to decode the video encoded at a high compression rate.

Preferably, the storage means stores the picture generated by the processing by the predicted signal generating means, as the reference picture. This configuration increases the pictures available as reference pictures, and thus enables the device to decode the video encoded at a higher compression rate.

In order to achieve the above object, a video decoding device according to the present invention comprises storage means to store a reconstructed picture as a reference picture for generation of a predicted signal used in decoding an encoded video; input means to input an encoded residual signal resulting from predictive coding of the video, and specific band signal extraction information; decoding means to decode the encoded residual signal input by the input means, to generate a decoded residual signal; first predicted signal generating means to generate a predicted signal as a first predicted signal for the decoded residual signal generated by the decoding means, using a first reference picture stored in the storage means; second predicted signal generating means to generate a second predicted signal for the first predicted signal from at least one second reference picture different from the first reference picture, which is stored in the storage means; specific band signal extracting means to refer to the specific band signal extraction information input by the input means, to extract a specific band signal corresponding to spatial frequency components in a predetermined band of the second predicted signal generated by the second predicted signal generating means; first adding means to add the specific band signal extracted by the specific band signal extracting means, to the decoded residual signal generated by the decoding means, to generate a first decoded residual signal; second adding means to add the first predicted signal generated by the first predicted signal generating means, to the first decoded residual signal generated by the first adding means, to generate a reconstructed picture, and to make the storage means store the generated reconstructed picture; and output means to output the reconstructed picture generated by the second adding means, wherein the specific band signal extraction information contains the specific band signal extraction information indicating an extracted content of the spatial frequency components in the predetermined band of the second predicted signal with the predetermined second reference picture stored in the storage means and the first reference picture subjected to motion compensation relative to the first predicted signal, and wherein the specific band signal extracting means refers to the specific band signal extraction information to extract a signal corresponding to the spatial frequency components in the predetermined band from the second predicted signal, and generates the specific band signal. The video decoding device according to the present invention is able to decode the video encoded at a high compression rate by the video encoding device according to the present invention.

Incidentally, while the present invention can be described as the invention of the video encoding devices and video decoding devices as described above, it can also be described as the invention of video encoding methods, video decoding methods, video encoding programs, and video decoding programs as presented below. These are different only in category and are substantially the same invention, with the same action and effect.

Specifically, a video encoding method according to the present invention comprises an input step of inputting a target picture as an object to be encoded, from a plurality of pictures forming a video; a predicted signal generating step of obtaining at least two band-dependent predicted signals for a predetermined band of the target picture, using different reference pictures dependent on band among reference pictures stored for generation of a predicted signal for the target picture input in the input step, and generating predicted signal generation information for generation of the predicted signal for the target picture by a predetermined method using the band-dependent predicted signals obtained; a subtracting step of obtaining a difference between the target picture and the predicted signal generated in the predicted signal generating step, to generate a residual signal; an encoding step of encoding the residual signal generated in the subtracting step, to generate an encoded residual signal; a decoding step of decoding the encoded residual signal generated in the encoding step, to generate a decoded residual signal; an adding step of adding the predicted signal generated in the predicted signal generating step, to the decoded residual signal generated in the decoding step, to generate a reconstructed picture, and making the generated reconstructed picture stored as a reference picture; and an output step of outputting the encoded residual signal generated in the encoding step.

Another video encoding method according to the present invention comprises an input step of inputting a target picture as an object to be encoded, from a plurality of pictures forming a video; a spatial frequency extracting step of extracting spatial frequency components in a predetermined band from a predetermined extraction reference picture except for a target reference picture used as a picture for prediction of the target picture among reference pictures stored for generation of a predicted signal for the target picture input in the input step, and generating spatial frequency extraction information indicating an extracted content of the spatial frequency components; a predicted signal generating step of generating the predicted signal for the target picture from the target reference picture and the spatial frequency components extracted in the spatial frequency extracting step, and generating predicted signal generation information indicating a generation content of the predicted signal while containing the spatial frequency extraction information generated in the spatial frequency extracting step; a subtracting step of obtaining a difference between the target picture and the predicted signal generated in the predicted signal generating step, to generate a residual signal; an encoding step of encoding the residual signal generated in the subtracting step, to generate an encoded residual signal; a decoding step of decoding the encoded residual signal generated in the encoding step, to generate a decoded residual signal; an adding step of adding the predicted signal generated in the predicted signal generating step, to the decoded residual signal generated in the decoding step, to generate a reconstructed picture, and making the generated reconstructed picture stored as a reference picture; and an output step of outputting the encoded residual signal generated in the encoding step and the predicted signal generation information generated in the predicted signal generating step.

Another video encoding method according to the present invention comprises an input step of inputting a target picture as an object to be encoded, from a plurality of pictures forming a video; a first predicted signal generating step of generating a predicted signal for a predetermined band of the target picture from a first reference picture stored for generation of the predicted signal for the target picture input in the input step; a first subtracting step of obtaining a difference between the target picture and the first predicted signal generated in the first predicted signal generating step, to generate a first residual signal; a second predicted signal generating step of generating a second predicted signal for the first predicted signal from at least one second reference picture different from the first reference picture, which is stored for generation of the predicted signal for the target picture input in the input step; a specific band signal extracting step of extracting a specific band signal corresponding to spatial frequency components in a predetermined band of the second predicted signal generated in the second predicted signal generating step, and generating specific band signal extraction information indicating an extracted content of the specific band signal; a second subtracting step of obtaining a difference between the first residual signal generated in the first subtracting step and the specific band signal extracted in the specific band signal extracting step, to generate a second residual signal; an encoding step of encoding the second residual signal generated in the second subtracting step, by a predetermined method to generate an encoded residual signal; a decoding step of decoding the encoded residual signal generated in the encoding step, to generate a decoded residual signal; a first adding step of adding the specific band signal generated in the specific band signal extracting step, to the decoded residual signal generated in the decoding step, to generate a first sum signal; a second adding step of adding the first predicted signal generated in the first predicted signal generating step, to the first sum signal generated in the first adding step, to generate a reconstructed picture, and making the generated reconstructed picture stored as a reference picture; and an output step of outputting the encoded residual signal generated in the encoding step and the specific band signal extraction information generated in the specific band signal extracting step.

A video decoding method according to the present invention comprises an input step of inputting an encoded residual signal resulting from predictive coding of a video; a decoding step of decoding the encoded residual signal input by the input means, to generate a decoded residual signal; a predicted signal generating step of generating at least two band-dependent predicted signals for a predetermined band of the decoded residual signal generated in the decoding step, using different reference pictures dependent on band among reference pictures as reconstructed pictures stored for generation of a predicted signal used in decoding the encoded video, and generating predicted signal generation information for generation of a predicted signal for the decoded residual signal by a predetermined method using the band-dependent predicted signals generated; an adding step of adding the predicted signal generated in the predicted signal generating step, to the decoded residual signal to generate a reconstructed picture, and making the generated reconstructed picture stored; and an output step of outputting the reconstructed picture generated by the adding means.

Another video decoding method according to the present invention comprises an input step of inputting an encoded residual signal resulting from predictive coding of a video, and predicted signal generation information indicating a generation content of a predicted signal; a decoding step of decoding the encoded residual signal input in the input step, to generate a decoded residual signal; a predicted signal generating step of referring to the predicted signal generation information input in the input step, to generate a predicted signal for the decoded residual signal generated in the decoding step, using a reference picture as a reconstructed signal stored for generation of the predicted signal used in decoding the encoded video; an adding step of adding the predicted signal generated in the predicted signal generating step, to the decoded residual signal generated in the decoding step, to generate a reconstructed picture, and making the generated reconstructed picture stored; and an output step of outputting the reconstructed picture generated in the adding step, wherein the predicted signal generation information contains spatial frequency extraction information indicating an extracted content of spatial frequency components in a predetermined band from a predetermined reference picture stored, and wherein the predicted signal generating step comprises referring to the frequency extraction information to extract spatial frequency components in the predetermined band from a predetermined extraction reference picture stored, and generating the predicted signal from a target reference picture used as a picture for generation of the predicted signal among reference pictures stored, and the spatial frequency components extracted.

Another video decoding method according to the present invention comprises an input step of inputting an encoded residual signal resulting from predictive coding of a video, and specific band signal extraction information; a decoding step of decoding the encoded residual signal input in the input step, to generate a decoded residual signal; a first predicted signal generating step of generating a predicted signal as a first predicted signal for the decoded residual signal generated in the decoding step, using a first reference picture as a reconstructed picture stored for generation of a predicted signal used in decoding the encoded video; a second predicted signal generating step of generating a second predicted signal for the first predicted signal from at least one second reference picture different from the first reference picture, which is stored for generation of the predicted signal used in decoding the encoded video; a specific band signal extracting step of referring to the specific band signal extraction information input in the input step, to extract a specific band signal corresponding to spatial frequency components in a predetermined band of the second predicted signal generated in the second predicted signal generating step; a first adding step of adding the specific band signal extracted in the specific band signal extracting step, to the decoded residual signal generated in the decoding step, to generate a first decoded residual signal; a second adding step of adding the first predicted signal generated in the first predicted signal generating step, to the first decoded residual signal generated in the first adding step, to generate a reconstructed picture, and making the generated reconstructed picture stored; and an output step of outputting the reconstructed picture generated in the second adding step, wherein the specific band signal extraction information contains the specific band signal extraction information indicating an extracted content of the spatial frequency components in the predetermined band of the second predicted signal with the predetermined second reference picture and the first reference picture subjected to motion compensation relative to the first predicted signal, and wherein the specific band signal extracting step comprises referring to the specific band signal extraction information to extract a signal corresponding to the spatial frequency components in the predetermined band from the second predicted signal, and generating the specific band signal.

A video encoding program according to the present invention lets a computer execute: an input function to input a target picture as an object to be encoded, from a plurality of pictures forming a video; a storage function to store a reference picture used for generation of a predicted signal for the target picture input by the input function; a predicted signal generating function to obtain at least two band-dependent predicted signals for a predetermined band of the target picture, using different reference pictures dependent on band among reference pictures stored in the storage function, and to generate predicted signal generation information for generation of the predicted signal for the target picture by a predetermined method using the band-dependent predicted signals obtained; a subtracting function to obtain a difference between the target picture and the predicted signal generated by the predicted signal generating function, to generate a residual signal; an encoding function to encode the residual signal generated by the subtracting function, to generate an encored residual 1 signal; a decoding function to decode the encoded residual signal generated by the encoding function, to generate a decoded residual signal; an adding function to add the predicted signal generated by the predicted signal generating function, to the decoded residual signal generated by the decoding function, to generate a reconstructed picture, and to make the storage function store the generated reconstructed picture as a reference picture; and an output function to output the encoded residual signal generated by the encoding function.

Another video encoding program according to present invention lets a computer execute: an input function to input a target picture as an object to be encoded, from a plurality of pictures forming a video; a storage function to store a reference picture used for generation of a predicted signal for the target picture input by the input function; a spatial frequency extracting function to extract spatial frequency components in a predetermined band from a predetermined extraction reference picture except for a target reference picture used as a picture for prediction of the target picture among reference pictures stored in the storage function, and to generate spatial frequency extraction information indicating an extracted content of the spatial frequency components; a predicted signal generating function to generate the predicted signal for the target picture from the target reference picture and the spatial frequency components extracted by the spatial frequency extracting function, and to generate predicted signal generation information indicating a generation content of the predicted signal while containing the spatial frequency extraction information generated by the spatial frequency extracting function; a subtracting function to obtain a difference between the target picture and the predicted signal generated by the predicted signal generating function, to generate a residual signal; an encoding function to encode the residual signal generated by the subtracting function, to generate an encoded residual signal; a decoding function to decode the encoded residual signal generated by the encoding function, to generate a decoded residual signal; an adding function to add the predicted signal generated by the predicted signal generating function, to the decoded residual signal generated by the decoding function, to generate a reconstructed picture, and to make the storage function store the generated reconstructed picture as a reference picture; and an output function to output the encoded residual signal generated by the encoding function and the predicted signal generation information generated by the predicted signal generating function.

Another video encoding program according to the present invention lets a computer execute: an input function to input a target picture as an object to be encoded, from a plurality of pictures forming a video; a storage function to store a reference picture used for generation of a predicted signal for the target picture input by the input function; a first predicted signal generating function to generate a predicted signal in a predetermined band of the target picture from a first reference picture stored in the storage function; a first subtracting function to obtain a difference between the target picture and the first predicted signal generated by the first predicted signal generating function, to generate a first residual signal; a second predicted signal generating function to generate a second predicted signal for the first predicted signal from at least one second reference picture different from the first reference picture, which is stored in the storage function; a specific band signal extracting function to extract a specific band signal corresponding to spatial frequency components in a predetermined band of the second predicted signal generated by the second predicted signal generating function, and to generate specific band signal extraction information indicating an extracted content of the specific band signal; a second subtracting function to obtain a residual between the first residual signal generated by the first subtracting function and the specific band signal extracted by the specific band signal extracting function, to generate a second residual signal; an encoding function to encode the second residual signal generated by the second subtracting function, by a predetermined method to generate an encoded residual signal; a decoding function to decode the encoded residual signal generated by the encoding function, to generate a decoded residual signal; a first adding function to add the specific band signal generated by the specific band signal extracting function, to the decoded residual signal generated by the decoding function, to generate a first sum signal; a second adding function to add the first predicted signal generated by the first predicted signal generating function, to the first sum signal generated by the first adding function, to generate a reconstructed picture, and to make the storage function store the generated reconstructed picture as a reference picture; and an output function to output the encoded residual signal generated by the encoding function and the specific band signal extraction information generated by the specific band signal extracting function.

A video decoding program according to the present invention lets a computer execute: a storage function to store a reconstructed picture as a reference picture for generation of a predicted signal used in decoding an encoded video; an input function to input an encoded residual signal resulting from predictive coding of the video; a decoding function to decode the encoded residual signal input by the input function, to generate a decoded residual signal; a predicted signal generating function to generate at least two band-dependent predicted signals for a predetermined band of the decoded residual signal generated by the decoding function, using different reference pictures dependent on band among reference pictures stored in the storage function, and to generate predicted signal generation information for generation of a predicted signal for the decoded residual signal by a predetermined method, using the band-dependent predicted signals generated; an adding function to add the predicted signal generated by the predicted signal generating function, to the decoded residual signal to generate a reconstructed picture, and to make the storage function store the generated reconstructed picture; and an output function to output the reconstructed picture generated by the adding function.

Another video decoding program according to the present invention lets a computer execute: a storage function to store a reconstructed picture as a reference picture for generation of a predicted signal used in decoding an encoded video; an input function to input an encoded residual signal resulting from predictive coding of the video, and predicted signal generation information indicating a generation content of the predicted signal; a decoding function to decode the encoded residual signal input by the input function, to generate a decoded residual signal; a predicted signal generating function to refer to the predicted signal generation information input by the input function, to generate a predicted signal for the decoded residual signal generated by the decoding function, using a reference picture stored in the storage function; an adding function to add the predicted signal generated by the predicted signal generating function, to the decoded residual signal generated by the decoding function, to generate a reconstructed picture, and to make the storage function store the generated reconstructed picture; and an output function to output the reconstructed picture generated by the adding function, wherein the predicted signal generation information contains spatial frequency extraction information indicating an extracted content of spatial frequency components in a predetermined band from a predetermined reference picture stored in the storage function, and wherein the predicted signal generating function refers to the frequency extraction information to extract spatial frequency components in the predetermined band from a predetermined extraction reference picture stored in the storage function, and generates the predicted signal from a target reference picture used as a picture for generation of the predicted signal among reference pictures stored in the storage, and the spatial frequency components extracted.

Another video decoding program according to the present invention lets a computer execute: a storage function to store a reconstructed picture as a reference picture for generation of a predicted signal used in decoding an encoded video; an input function to input an encoded residual signal resulting from predictive coding of the video, and specific band signal extraction information; a decoding function to decode the encoded residual signal input by the input function, to generate a decoded residual signal; a first predicted signal generating function to generate a predicted signal as a first predicted signal for the decoded residual signal generated by the decoding function, using a first reference picture stored in the storage function; a second predicted signal generating function to generate a second predicted signal for the first predicted signal from at least one second reference picture different from the first reference picture, which is stored in the storage function; a specific band signal extracting function to refer to the specific band signal extraction information input by the input function, to extract a specific band signal corresponding to spatial frequency components in a predetermined band of the second predicted signal generated by the second predicted signal generating function; a first adding function to add the specific band signal extracted by the specific band signal extracting function, to the decoded residual signal generated by the decoding function, to generate a first decoded residual signal; a second adding function to add the first predicted signal generated by the first predicted signal generating function, to the first decoded residual signal generated by the first adding function, to generate a reconstructed picture, and to make the storage function store the generated reconstructed picture; and an output function to output the reconstructed picture generated by the second adding function, wherein the specific band signal extraction information contains specific band signal extraction information indicating an extracted content of the spatial frequency components in the predetermined band of the second predicted signal with the predetermined second reference picture stored in the storage function and the first reference picture subjected to motion compensation relative to the first predicted signal, and wherein the specific band signal extracting function refers to the specific band signal extraction information to extract a signal corresponding to the spatial frequency components in the predetermined band from the second predicted signal, and generates the specific band signal.

**Effect of the Invention**

According to the present invention, even if an object to be encoded is a video consisting of a mixture of pictures of different bandwidths, when the bandwidth of the target reference picture is narrower than that of the target picture, the target reference picture is compensated for components in the band not included in the target reference picture, so as to reduce the residual signal of the predicted signal in the band, thus enabling the encoding and decoding at a high compression rate.

**Brief Description of the Drawings**

Fig. 1 is a drawing showing a configuration of a video encoding device according to the first embodiment of the present invention.
Fig. 2 is a drawing showing a configuration of a predicted signal generator in the video encoding device according to the first and second embodiments of the present invention.
Fig. 3 is a flowchart showing processing in the predicted signal generator in the video encoding device according to the first embodiment of the present invention.
Fig. 4 is a flowchart showing processing (video encoding method) in the video encoding device according to the first embodiment of the present invention.
Fig. 5 is a drawing showing a configuration of a video decoding device according to the first embodiment of the present invention.
Fig. 6 is a flowchart showing processing in a reference picture processor in the video decoding device according to the first embodiment of the present invention.
Fig. 7 is a flowchart showing processing (video decoding method) in the video decoding device according to the first embodiment of the present invention.
Fig. 8 is a drawing showing a configuration of the predicted signal generator in the video encoding device according to the second embodiment of the present invention.
Fig. 9 is a flowchart showing processing in the predicted signal generator in the video encoding device according to the second embodiment of the present invention.
Fig. 10 is a flowchart showing processing (video encoding method) in the video encoding device according to the second embodiment of the present invention.
Fig. 11 is a drawing showing a configuration of a video decoding device according to the second embodiment of the present invention.
Fig. 12 is a flowchart showing processing in a predicted signal processor in the video decoding device according to the second embodiment of the present invention.
Fig. 13 is a flowchart showing processing (video decoding method) in the video decoding device according to the second embodiment of the present invention.

Fig. 14 is a drawing showing a configuration of a video encoding device according to the third embodiment of the present invention.

Fig. 15 is a drawing showing a configuration of a video decoding device according to the third embodiment of the present invention.

Fig. 16 is a flowchart showing processing (video encoding method) in the video encoding device according to the third embodiment of the present invention.

Fig. 17 is a flowchart showing processing (video decoding method) in the video decoding device according to the first embodiment of the present invention.

Fig. 18 is a drawing showing a configuration of a video encoding program according to an embodiment of the present invention.

Fig. 19 is a drawing showing a configuration of a video decoding program according to an embodiment of the present invention.

Fig. 20 is a drawing showing a hardware configuration of a computer for executing a program to be executed as a program recorded in a recording medium.

Fig. 21 is a perspective view of a computer for executing a program to be executed as a program recorded in a recording medium.

Fig. 22 shows graphs showing spatial frequency components of pictures.

**Description of Reference Symbols**

10, 10a video encoding devices; 101 input terminal; 102 subtracter; 103 transformer; 104 quantizer; 105 dequantizer; 106 inverse transformer; 107 adder; 108 memory; 120 spatial frequency analyzer; 121 predicted signal generator; 130 entropy coder; 131 output terminal; 200 predicted signal generator; 201 extracted spatial frequency determiner; 202 reference picture processor; 203 motion detection-motion compensation unit; 204 information-spatial frequency information storage: 800 predicted signal generator; 801 extracted spatial frequency determiner; 802 information-spatial frequency information storage; 803 motion detection-motion compensation unit; 804 predicted signal processor; 50, 110 video decoding devices; 500, 1100 input terminals; 501, 1100 data analyzers; 502, 1102 dequantizers; 503, 1103 inverse transformers; 504, 1104 adders; 505, 1105 output terminals; 506, 1106 memories; 507, 1107 predicted signal generators; 508 reference picture processor; 1108 predicted signal processor; 140 video encoding device; 1401 input terminal; 1402 first subtracter; 1403 second subtracter; 1404 transformer; 1405 quantizer; 1406 dequantizer; 1407 inverse transformer; 1408 first adder; 1409 second adder; 1410 memory; 1411 predicted signal generator; 1412 motion searcher; 1413 motion compensator; 1414 specific band signal extractor; 1420 entropy coder; 1421 output terminal; 150 video decoding device; 1500 input terminal; 1501 data analyzer; 1502 dequantizer; 1503 inverse transformer; 1504 first adder; 1505 second adder; 1520 output terminal; 1506 memory; 1507 predicted signal generator; 1508 motion searcher; 1509 motion compensator; 1510 specific band signal extractor; 1800 image input module; 1801 spatial frequency analyzing module; 1803 predicted signal generating module; 1804 residual signal generating module; 1805 transform module; 1806 quantizing module; 1807 dequantizing module; 1808 inverse transform module; 1809 adding module; 1810 storage module; 1811 entropy coding module; 1812 recording medium; P1812 video encoding program; 1900 compressed data input module; 1901 entropy decoding module; 1902 reference picture processing module; 1903 predicted signal generating module; 1904 dequantizing module; 1905 inverse transform module; 1906 adding module; 1907 storage module; 1908 recording medium; P 1908 video decoding program; 11 recording medium; 12 reading device; 14 working memory; 16 memory; 18 display device; 20 mouse; 22 keyboard; 24 communication device; 26 CPU; 30 computer; 40 computer data signal.

**Best Mode for Carrying Out the Invention**

The preferred embodiments of the present invention will be described below in detail with the drawings. In the description of the drawings the same elements will be denoted by the same reference symbols, without redundant description.

[First Embodiment]

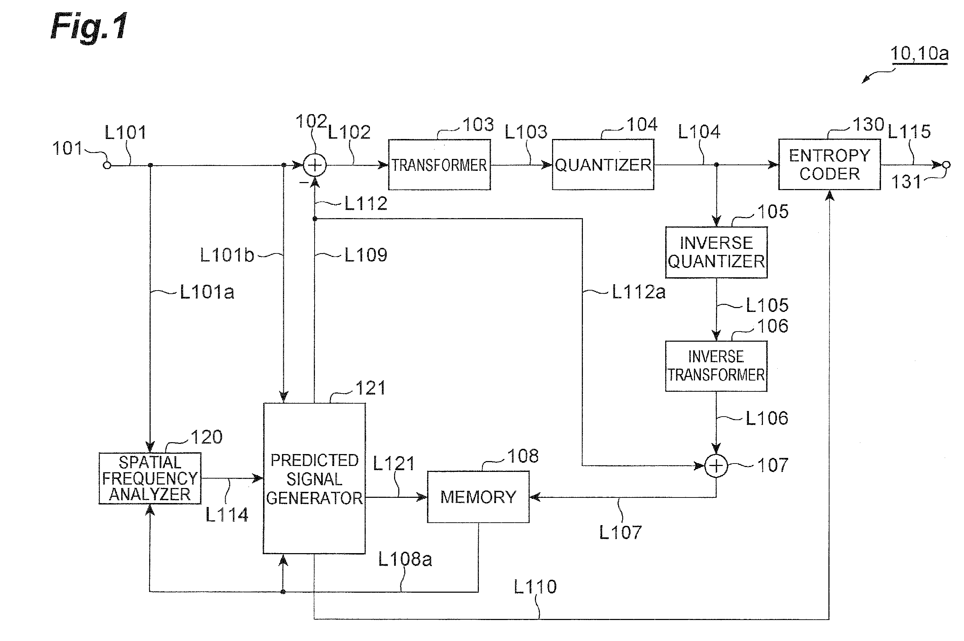

Fig. 1 shows a functional configuration of video encoding device 10 according to the first embodiment of the present invention. The video encoding device 10 is a device that imports pictures (data) (frames) forming a video (data) and that sequentially encodes the pictures to generate compressed data (encoded data) resulting from the encoding of the video. As shown in Fig. 1, the video encoding device 10 is constructed with input terminal 101, subtracter 102, transformer 103, quantizer 104, inverse quantizer or dequantizer 105, inverse transformer 106, adder 107, memory 108, spatial frequency analyzer 120, predicted signal generator 121, entropy coder 130, and output terminal 131.

The input terminal 101 is a terminal that is an input means for inputting a target picture as an object to be encoded, from a plurality of (still images) pictures forming a video. The input terminal 101 is connected to a video camera, a memory storing a video, or the like and inputs pictures forming a video output from one of those, one by one. The input terminal 101 outputs an input picture through line L101 to the subtracter 102, through lines L101, L101a to the spatial frequency analyzer 120, and through lines L101, L101b to the predicted signal generator 121. The picture output to the subtracter 102 and the predicted signal generator 121 is divided into blocks each of which consists of a region of a predetermined size, e.g., 16×16 pixels, by an unrepresented picture divider or the like, and an encoding process is carried out on a block basis.

The video data input by the input terminal 101 can also be, for example, such an input object as a video taken by a consumer video camera (including a camera mounted on a cell phone). In this case, the autofocus function of autofocus of the camera becomes active to automatically adjust focus during photography and this can cause the following phenomenon: temporally adjacent pictures taken have varying bands, resulting in acquiring adjacent pictures, one having a signal of a wide bandwidth and the other having a signal of a narrow bandwidth. Another input object can be a video composed of pictures of different bandwidths as alternation of high-resolution and low-resolution frames with expectation of the effect of motion sharpening. There is also a case where a video with a stable bandwidth is input.

The subtracter 102 is a subtracting means that calculates a difference between a target picture (target block) input through line L101 and a predicted signal generated by the predicted signal generator 121 and input through lines L109, L112, to generate a residual signal. The subtracter 102 outputs the generated residual signal through line L102 to the transformer 103.

The transformer 103 is a means that subjects the residual signal input through line L102, to a discrete cosine transform process to transform the residual signal into a signal in the frequency domain. Namely, the transformer 103 is a function of an encoding means which encodes a residual signal to generate an encoded residual signal. The transformer 103 outputs the signal in the frequency domain through line L103 to the quantizer 104.

The quantizer 104 is a means that quantizes the signal in the frequency domain input through line L103, to obtain quantized transform coefficients of the signal in the frequency domain. Namely, the quantizer 104 is a function of the encoding means that encodes the residual signal to generate the encoded residual signal. The quantizer 104 outputs the quantized transform coefficients obtained, through line L104 to the entropy coder 130 and the dequantizer 105. The quantizer 104 also outputs quantization information indicating a quantization value in the quantized transform coefficients, together to the entropy coder 130 and the dequantizer 105.

The dequantizer 105 is a means that subjects the quantized transform coefficients input through line L104, to an inverse quantization process to obtain a signal in the frequency domain. Namely, the dequantizer 105 is a function of a decoding means that decodes an encoded residual signal to generate a decoded residual signal. In the present embodiment, the encoded residual signal decoded by the decoding means corresponds to the quantized transform coefficients. The dequantizer 105 outputs the signal in the frequency domain thus obtained, through line L105 to the inverse transformer 106.

The inverse transformer 106 is a means that subjects the signal in the frequency domain input through the line L105, to inverse discrete cosine transform to obtain a reconstructed residual signal in the space domain. Namely, the inverse transformer 106 is a function of the decoding means that decodes the encoded residual signal to generate the decoded residual signal. In the present embodiment, the decoded residual signal corresponds to the reconstructed residual signal in the space domain. The inverse transformer 106 outputs the reconstructed residual signal in the space domain thus obtained, through line L106 to the adder 107.

The adder 107 is an adding means that adds the predicted signal input through lines L109, L112a from the predicted signal generator 121, to the reconstructed residual signal in the space domain input through line L106, to generate a reconstructed signal. The adder 107 outputs the reconstructed signal thus generated, through line L107 to the memory 108 to make the memory 108 store the reconstructed picture as a reference picture.

The memory 108 is a storage means that stores the reconstructed picture input through line L107, as a reference picture to be used for generation of a predicted signal for a target picture, in encoding the target picture. The spatial frequency analyzer 120 and the predicted signal generator 121 can retrieve the reference picture stored in the memory 108, through line L108a.

The spatial frequency analyzer 120 is a means that acquires information indicating spatial frequency components of the target picture input through line L101a and the reference picture retrieved through line L108. Namely, the spatial frequency analyzer 120 is a function of a spatial frequency extracting means. The function of the spatial frequency analyzer 120 will be described below in more detail. The spatial frequency analyzer 120 outputs the information indicating the spatial frequency components of the target picture and the reference picture thus acquired, through line L 141 to the predicted signal generator 121.

The predicted signal generator 121 is a predicted signal generating means that generates a predicted signal for the target picture input through line L101b. The generation of the predicted signal is carried out using reference pictures acquired through line L108a. The reference pictures to be used herein are a target reference picture used as the picture for prediction of a target picture, and a predetermined extraction reference picture except for the target reference picture. The target reference picture is selected based on a rule to specify the target reference picture, which is preliminarily stored in the video encoding device 10.

The rule to specify the target reference picture can be one of the following rules: a rule based on an encoding sequence which defines use of a picture encoded immediately before the target picture, as the target reference picture to be used; a rule to perform motion search between the target picture and the reference pictures stored in the storage means and select a reference picture with a minimum residual signal as the target reference picture, based on the result of the motion search. Besides these, any rule may be applied to the selection of the target reference picture, e.g., a rule to determine the target reference picture, based on characteristics of image-spatial frequency components of the reference picture or the like.

The predicted signal generator 121 is also a spatial frequency extracting means that extracts spatial frequency components in a predetermined band from the extraction reference picture with reference to the information indicating the spatial frequency components input through line L141 and that generates spatial frequency extraction information indicating the extracted content of the spatial frequency components. The generation of the predicted signal is carried out also using the extracted spatial frequency components. The predicted signal generator 121 outputs the generated predicted signal through lines L 109, L112 to the subtracter 102 and through lines L109, L112a to the adder 107. The predicted signal generator 121 also generates predicted signal generation information indicating the generation content of the predicted signal including the spatial frequency extraction information and outputs the information through line L110 to the entropy coder 130.

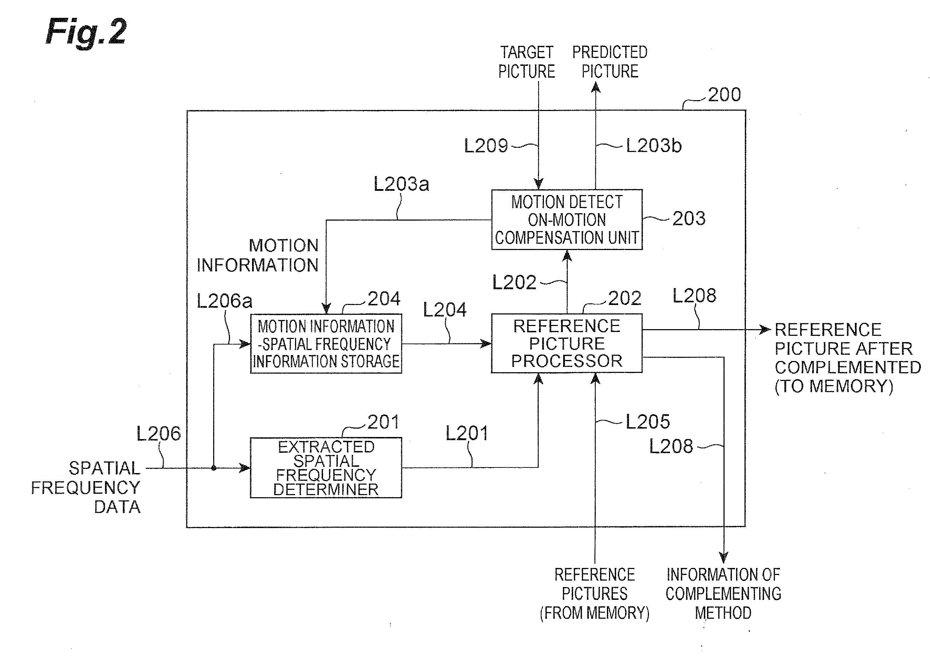

Fig. 2 shows a functional configuration of predicted signal generator 200 (predicted signal generator 121 in Fig. 1). The predicted signal generator 200 is constructed with extracted spatial frequency determiner 201, reference picture processor 202, motion detection-motion compensation unit 203, and motion information-spatial frequency information storage 204. The details on how these constituent elements achieve the above-described functions will be described later.

The entropy coder 130 is an encoding means that converts the quantized transform coefficients of the signal in the frequency domain and the quantization information input through line L104 and the predicted signal generation information input through line L110, into variable length codes. Namely, in the present embodiment, an encoded residual signal to be output corresponds to variable-length coded or arithmetic coded data. The entropy coder 130 outputs the variable length codes resulting from the conversion, through line L115 to the output terminal 131. This process may be carried out by applying arithmetic coding instead of the variable-length coding.

The output terminal 131 is a means that outputs the variable length codes input through line L115, to an external device (e.g., a video decoding device) or the like. Namely, the output terminal 131 is an output means that outputs the encoded residual signal and the predicted signal generation information. The above described the functional configuration of the video encoding device 10.

The below will describe the functions and operations of the spatial frequency analyzer 120 and the predicted signal generator 121, which are characterizing portions of the present invention.

The spatial frequency analyzer 120 receives the target picture as an object to be encoded and the reference picture as a reference for generation of the predicted signal for the target picture. The reference picture is one stored in the memory 108 and is input through line L108a into the spatial frequency analyzer 120.

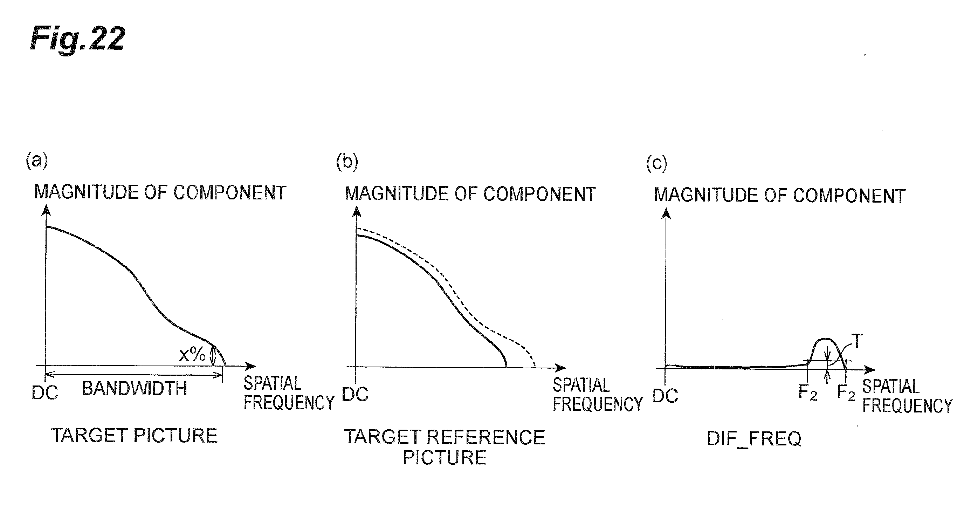

In the present embodiment, the target reference picture is assumed to be one picture, but a plurality of target reference pictures may be used. As described above, the spatial frequency analyzer 120 acquires information of spatial frequency component quantity indicating the spatial frequency components of the target picture. The spatial frequency component quantity herein is, for example, magnitudes of spatial frequency components at respective frequencies (bands) or a bandwidth of a picture as shown in a graph of Fig. 22 (a). The graphs of Fig. 22 are those in which the horizontal axis represents the spatial frequency and the vertical axis the magnitude of spatial frequency component. Specifically, in a case where the spatial frequency component quantity is the magnitudes of spatial frequency components at respective frequencies (bands), a certain pixel line in the target picture is Fourier transformed as a one-dimensional data sequence to generate a series of frequency coefficients, and spatial frequencies are calculated using amplitude values from the series of frequency coefficients. Namely, a square root of the sum of squares of the real part and the imaginary part of each Fourier coefficient is calculated as a magnitude of amplitude of each spatial frequency. Specific frequency components with amplitude values of spatial frequencies calculated as above are determined to be (the magnitudes of) the spatial frequency components.

In a case where the spatial frequency component quantity is the bandwidth, a maximum frequency component in a range where the magnitude of amplitude of each spatial frequency is not more than x% relative to the amplitude of the direct current component (DC component) is defined as a bandwidth of the pixel line (cf. the graph of Fig. 22 (a)). In the present embodiment, x=1, but x may be any other value.

The representation method of the spatial frequency component quantity does not have to be limited to this method, but may be any other representation method. The present embodiment employed the Fourier transform for the frequency transformation in order to acquire the spatial frequency component quantity, but any other frequency transformation such as discrete cosine transform or discrete wavelet transform may also be applied. The representation method of the bandwidth is not limited to the above-described one, but may be any other representation method.

The spatial frequency analyzer 120 determines the spatial frequency component quantity for each pixel line of the target picture as described above. When the spatial frequency component quantity is the bandwidth, the largest among bandwidths is determined to be the bandwidth in the vertical direction of the target picture. Similarly, bandwidths are obtained for pixel lines in respective rows of the target picture and the largest among them is determined to be the bandwidth in the horizontal direction of the target picture. In the present embodiment, the maximum of the bandwidths in the vertical direction and in the horizontal direction is determined to be the spatial frequency component quantity of the target picture.

In the present embodiment the maximum of the bandwidths in the vertical direction and in the horizontal direction was determined to be the spatial frequency component quantity, but the bandwidths in the vertical and horizontal directions may also be used as spatial frequency component quantities as they are. In the present embodiment the spatial frequency data in the vertical and horizontal directions were calculated, but it is sufficient to obtain the spatial frequencies in at least one direction.

The spatial frequency analyzer 120 also measures the spatial frequency component quantity of the target reference picture by the same method. If the device is arranged to store the information of the spatial frequency component quantity measured for the target picture on the occasion of encoding the reference picture, the information about the spatial frequencies of the target reference picture does not have to be calculated again. For that, the information of the spatial frequency component quantity such as the bandwidth of the target picture is stored for encoding of subsequent pictures. The target reference picture used herein is a reconstructed picture stored in the memory 108, but the spatial frequency component quantity may be calculated using an original picture corresponding to the target reference picture. The spatial frequency analyzer 120 calculates the spatial frequency component quantities of the target picture and the target reference picture as described above and feeds the information of the calculated spatial frequency component quantities through line L114 to the predicted signal generator 121.

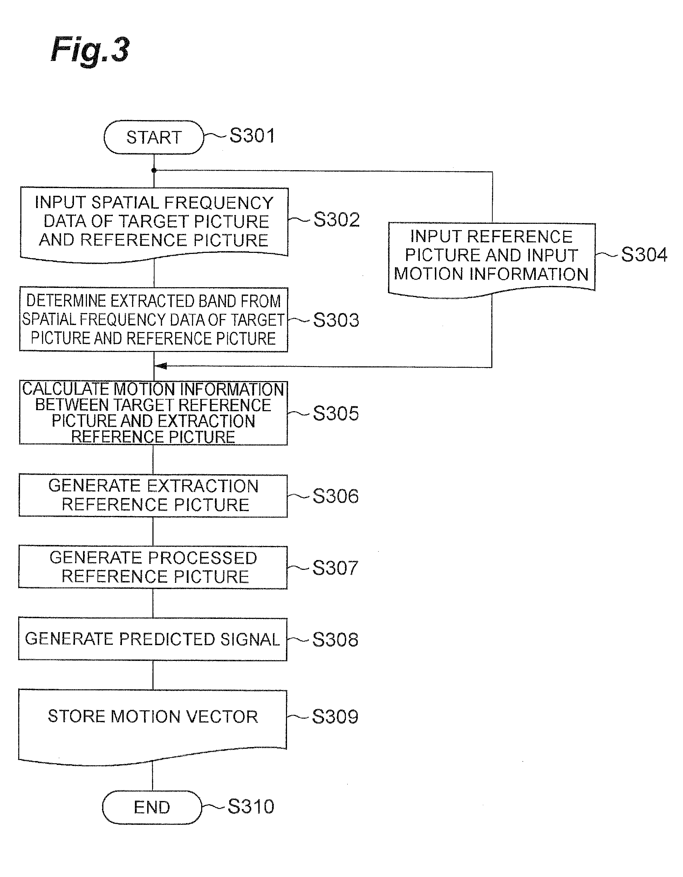

The following will describe the function and operation of the predicted signal generator 121 (predicted signal generator 200 in Fig. 2), using Figs. 2 and 3. Fig. 3 is a flowchart showing the process to generate the predicted signal, which is carried out in the predicted signal generator 121. The information of the spatial frequency component quantities of the target picture and the target reference picture is input through line L114 (line L206 in Fig. 2) into the predicted signal generator 121 (S302). The input information of each spatial frequency component quantity is stored through line L206a into the motion information-spatial frequency information storage 204 and is used under the instructions of the reference picture processor 202. Each spatial frequency component quantity is input through line L206 into the extracted spatial frequency determiner 201. The extracted spatial frequency determiner 201 calculates DIF_FREQ, a difference between the spatial frequency component quantity of the target picture and the spatial frequency component quantity of the target reference picture thus input, based on the following equation:

$$\text{DIF\_FREQ} = \text{spatial frequency component quantity of target}$$
$$\text{picture} - \text{spatial frequency component quantity of target reference}$$
$$\text{picture.}$$

For example, where the spatial frequency component quantity of the target reference picture is one as shown in the graph of Fig. 22 (b) (in which the spatial frequency component quantity of the target picture is indicated by a dashed line), the difference DIF_FREQ is shown as magnitudes of spatial frequency components at respective spatial frequencies as shown in Fig. 22 (c).

In the present embodiment the difference between the spatial frequency component quantities was calculated as DIF_FREQ, but it is also possible to calculate the quotient of spatial frequency (components). Any function may be applied to the calculation as long as it allows us to calculate the difference between two spatial frequency component quantities.

Next, the extracted spatial frequency determiner 201 determines a band in which DIF_FREQ indicates a value not less than a certain threshold T (S303, spatial frequency extracting step). The threshold T herein is preliminarily stored in the extracted spatial frequency determiner 201. Specifically, as shown in Fig. 22 (c), the band is determined in a region in the form of a given band F1 [Hz]-F2 [Hz] out of the band where the spatial frequency component quantity exists. F1 and F2 indicating the determined band are output as specific band information through line L201 to the reference picture processor 202.

In the present embodiment the range of value indicating values not less than the threshold was determined to be the band, but the band may be determined based on any standard other than it. For example, it is possible to determine a range of value indicating value not more than a threshold, or to preliminarily define a band to be specified. The range may be selected from predetermined combinations of F1 and F2. The specific band information may be one input from the outside. In the present embodiment the band was determined in one region, but it is also possible to determine bands in a plurality of regions. In that case, information capable of indicating the bands in the plurality of regions can be prepared as the specific band information.

The operation of the reference picture processor 202 will be described below. The reference picture processor 202 receives the target reference picture and the extraction reference picture through line L205 (line L108a in Fig. 1) and receives motion information through line L204 (S304). The extraction reference picture herein is assumed to be a reference picture used as a target reference picture in predicting the foregoing target reference picture. The details of the motion information will be described later. The reference picture processor 202 also receives the specific band information through line L201.

First, the reference picture processor 202 calculates a relation of relative motion between the target reference picture and the extraction reference picture (S305, spatial frequency extracting step). Specifically, the motion detection-motion compensation unit 203 calls a motion vector calculated between the target reference picture and the extraction reference picture by the motion detection-motion compensation unit 203, from the motion information-spatial frequency information storage 204.

The present embodiment shows the example using the single reference picture, but it is also possible to use a plurality of reference pictures. If the motion vector between the target reference picture and the extraction reference picture is not stored in the motion information-spatial frequency information storage 204, it may be determined by motion search or the like, using the target reference picture and the extraction reference picture. When the motion search is carried out using the target reference picture and the extraction reference picture, the motion search may be carried out after processing of the extraction reference picture. A specific example of this processing is to filter the extraction reference picture with a filter or the like so as to vary spatial frequencies, and the motion search may be carried out after the filtering. In that case, the motion search may be carried out after the variation in spatial frequencies. In this connection, it is preferable to perform the motion search after the variation in spatial frequencies based on the spatial frequency data.

The relative motion vector between the target reference picture and the extraction reference picture may be calculated from motion vectors previously stored in the motion information-spatial frequency information storage 204. In that case, the motion vector may be determined through calculation based on combination of motion vectors with respective frames present between the target reference picture and the extraction reference picture.

The present embodiment showed the example using the motion vector as the motion information being the information indicating the relation of motion, but any motion information other than it may be used. For example, all pixels of two frame pictures are subjected each to discrete Fourier transform or the like to implement transformation from the pixel space to the frequency space, and identical frequency components of the same frames are subjected to division, to determine a moving amount using the magnitude of phase. After calculation of the phase of each frequency component, values of all phases are summed up and the total is used as the motion information. The use of the phases after the frequency transformation is not limited to this, but the motion information may be obtained by any method as long as it can represent the motion amount between two frames.

The present embodiment showed the case where the extraction reference picture was the reference picture used in predicting the target reference picture, but any reference picture except for the current target reference picture may be used among the reference pictures in the memory 108. Which reference picture is to be used may be determined based on a certain standard. For example, it is preferable to select the extraction reference picture according to a standard to select a reference picture with a bandwidth larger than that of the target reference picture, based on the spatial frequency information stored in the motion information-spatial frequency information storage 204, or according to a standard to select a reference picture with the largest bandwidth among those stored in the memory 108.

Next, the reference picture processor 202 performs a motion compensation using the calculated motion vector and the extraction reference picture to generate an extraction predicted picture as a predicted signal (for the target reference picture) (S306, spatial frequency extracting step). The operations of the motion detection and motion compensation in the reference picture processor 202 are assumed to be the same as those of the motion detection-motion compensation unit 203, and the details thereof will be described later.

Thereafter, the spatial frequency components in the band F1 [Hz]-F2 [Hz] are extracted, based on the specific band information, from the extraction predicted picture. First, the spatial frequency component quantity of the extraction predicted picture is obtained by Fourier transform. Specifically, a certain pixel line in the extraction predicted picture is subjected as a one-dimensional data sequence to Fourier transform to generate a series of frequency coefficients, and the spatial frequency component quantity is calculated using amplitude values from the series of frequency coefficients.

Namely, a square root of the sum of squares of the real part and the imaginary part of each Fourier coefficient is calculated as the amplitude and the phase of each spatial frequency. The spatial frequency components in the band F1 [Hz]-F2 [Hz] out of the spatial frequency components calculated as described above are extracted as the spatial frequency component quantity.

The representation method of the spatial frequency component quantity is not limited to this method, but it may be another representation method. The present embodiment used the Fourier transform as the frequency transformation in order to obtain the spatial frequency component quantity, but any of other frequency transformations such as the discrete cosine transform and discrete wavelet transform may also be applied. It is preferable to calculate the spatial frequency component quantity by the same method as that in the spatial frequency analyzer 120.

The present embodiment is the example to extract the spatial frequency components in the specific band directly from the extraction predicted picture, but the extraction may be carried out after the extraction predicted picture is processed. For example, the extraction predicted picture may be processed by deblocking or image filtering. It is also possible to adjust only specific spatial frequencies in the spatial frequency domain.

The present embodiment was the example in which the extraction predicted picture was generated and in which the spatial frequency components were extracted from it, but the specific spatial frequency components may be extracted directly from the extraction reference picture, without the generation of the extraction predicted picture. In that case, the spatial frequency components may be extracted by selecting pixels in a region for extraction of the spatial frequency components using a plurality of motion vectors, and transforming the pixels into the spatial frequency domain.

Next, the reference picture processor 202 performs processing using the extracted spatial frequency components and the target reference picture. In this step the spatial frequency component quantity in the band F1 [Hz]-F2 [Hz] among the spatial frequency components of the target reference picture is replaced by the extracted spatial frequency component quantity. Specifically, the spatial frequency component quantity of the target reference picture is first calculated. The calculation method is the same as the aforementioned method. Thereafter, amplitudes and phases of respective spatial frequencies in the band F2 [Hz]-F2 [Hz] of the target reference picture are replaced with those of spatial frequencies of the extraction predicted picture, and inverse transformation from the frequency domain to the pixel domain is carried out to implement processing of the reference picture to generate a processed reference picture (S307, spatial frequency extracting step and predicted signal generating step). The processed reference picture thus generated is fed through line L202 to the motion detection-motion compensation unit 203.

Furthermore, the reference picture processor 202 combines at least the information indicating the processing method in generating the processed reference picture, with the band specific information to generate predicted signal generation information. The predicted signal generation information is fed through line L208 (line L110 in Fig. 1) to the entropy coder 130 in Fig. 1 to be encoded. The predicted signal generation information herein is information indicating the generation content of the predicted signal. The band specific information herein is one of the spatial frequency extraction information indicating the extracted content of the spatial frequency components. The predicted signal generation information contains the information to specify the extraction reference picture, as the spatial frequency extraction information. The predicted signal generation information may contain information other than the above, as the spatial frequency extraction information.

The present embodiment adopted the processing of the target reference picture on a frame basis, but the processing may be carried out in units of a plurality of blocks of a predetermined size. In that case, a predicted signal is generated for each of the blocks, based on the predicted signal generation information thereof. In the case of the processing in block units, bands to be processed may be different among the blocks.

In the present embodiment, the processing of the target reference picture was to replace both the amplitudes and phases of spatial frequencies in replacing the spatial frequency component quantity of the target reference picture with the extracted spatial frequency component quantity, but only the amplitudes may be replaced. In cases using them transformation without phases like discrete cosine transform, values of respective frequency components may also be replaced.

In the present embodiment, the processing of the target reference picture was to replace the spatial frequency component quantity of the target reference picture with the extracted spatial frequency component quantity, but the processing may be carried out by a method other than it. For example, the extracted spatial frequency component quantity may be added to the spatial frequency component quantity of the target reference picture. Furthermore, the extracted spatial frequency component quantity may be added after subjected to some processing. With reference to the extracted spatial frequency component quantity, the spatial frequency components of the target reference picture may be subjected to some processing and then it may be added. For example, the extracted spatial frequency component quantity is multiplied by weight factor W and thereafter the addition or replacement is carried out based thereon, and it is also possible to use the average, median, maximum, or minimum of spatial frequency components of the two pictures. In addition thereto, any method may be applied as long as it is a method to process the specific band of the target reference picture using or referring to the spatial frequencies of the extraction predicted picture.

In the present embodiment the processing was carried out in the spatial frequency domain, but the processing may be carried out in the pixel domain. In that case, values of pixels corresponding to the specific spatial frequency component quantity are preliminarily calculated and the processing is carried out using the pixels.

The present embodiment showed the example of one extraction reference picture, but if a plurality of extraction reference pictures are available, the processing may be carried out by extracting spatial frequency components from the plurality of extraction reference pictures. In that case, the processing may be performed using the plurality of extracted spatial frequency components. For example, the processing of spatial frequency components may be carried out based on the weighted addition, or the calculation of the average, maximum, minimum, median, or the like.

The present embodiment showed the generation of the processing method and band specific information as the predicted signal generation information, but the predicted signal generation information may be generated also containing the motion information in the processing of the reference picture.

Next, the motion detection-motion compensation unit 203 performs processing of motion detection using the processed reference picture and a target block. The motion detection-motion compensation unit 203 receives the processed reference picture through line L202 and the target block through line L209. In the present embodiment, the motion detection is carried out using the method of block matching as in the conventional technology, to determine an optimal motion vector to a position giving a reference block with the smallest error for the target block, and motion compensation is carried out to generate a predicted signal (S308, predicted signal generating step).

The motion detection-motion compensation unit 203 outputs the predicted signal generated in this manner, through line L203b (line L 109 in Fig. 1) and it is fed from the predicted signal generator 121 in Fig. 1 to the subtracter 102 and to the adder 107. Furthermore, the calculated motion vector is sent as motion information through line L203a to the motion information-spatial frequency information storage 204 to be stored therein (S309, predicted signal generating step). The motion vector is also output to the entropy coder 130 in order to be output as one of encoded data. The above described the functions and operations of the spatial frequency analyzer 120 and the predicted signal generator 121, which are the characterizing portions of the present invention.

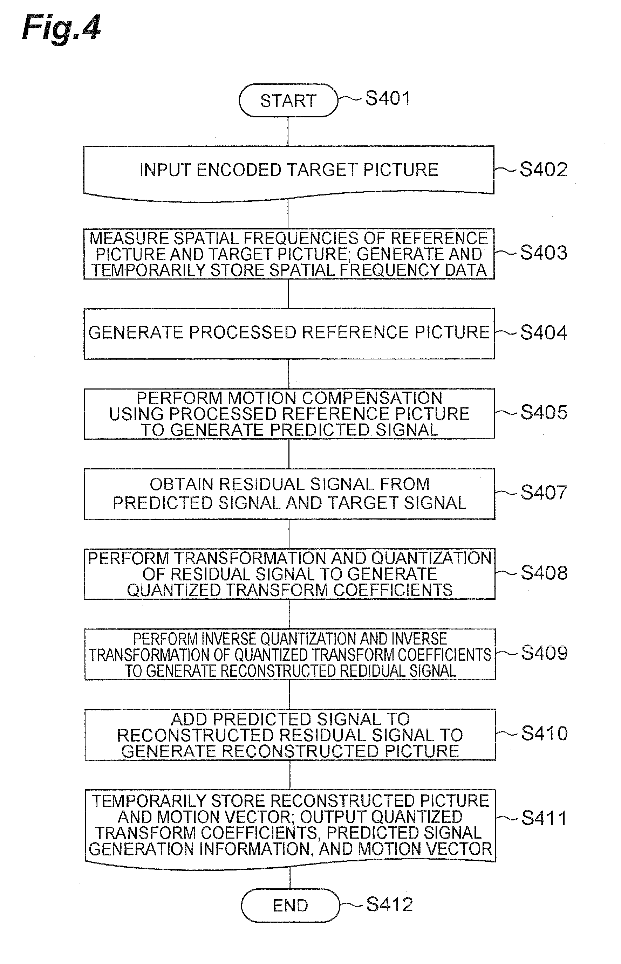

The below will describe a video encoding method being the processing executed by the video encoding device 10 according to the present embodiment, using the flowchart of Fig. 4. The video encoding device 10 first imports the target picture as an object to be encoded, through the input terminal 101 (S402, input step). Then the spatial frequency analyzer 120 measures the spatial frequency component quantities of the target picture and the target reference picture to generate the spatial frequency data containing the information of the spatial frequency component quantities (S403, spatial frequency extracting step). The method of measuring the spatial frequency component quantities is as described above. In the present embodiment, the data is obtained about the spatial frequency component quantities of the entire pictures, but the data may be obtained about spatial frequency components in each block unit.

Thereafter, the predicted signal generator 121 performs the processing of the target reference picture to generate the processed reference picture (S404, spatial frequency extracting step and predicted signal generating step). The method of generating the processed reference picture is as described above, and the processed reference picture is generated using the extraction reference picture present in the memory 108 and the motion information. Subsequently, the predicted signal generator 121 generates the predicted signal through the use of the processed reference picture (S405, predicted signal generating step). Next, the subtracter 102 subtracts the predicted signal obtained in this manner, from the target signal to obtain the residual signal (S407, subtracting step).

Thereafter, the transformer 103 transforms the residual signal by discrete cosine transform and the quantizer 104 quantizes the resulting transform coefficients to generate the quantized transform coefficients (S408, encoding step). Then the dequantizer 105 dequantizes the quantized transform coefficients and the inverse transformer 106 performs inverse transformation thereof to generate the reconstructed residual signal (S409, decoding step). Next, the adder 107 adds the predicted signal to the reconstructed residual signal to generate the reconstructed picture (S410, reconstructed picture generating step and adding step). Finally, the reconstructed picture and the motion vector are temporarily stored into the memory 108 or the like and, at the same time as it, the entropy coder 130 performs the entropy coding of data including the quantized transform coefficients, the predicted signal generation information about the generation of the predicted signal, and the motion vector and the result is output from the output terminal 131 (S411, encoding step and output step). The aforementioned processes of S301-S310 shown in Fig. 3 correspond to the above-described processes S403-S405. The above described the video encoding device 10 and video encoding method according to the present embodiment.

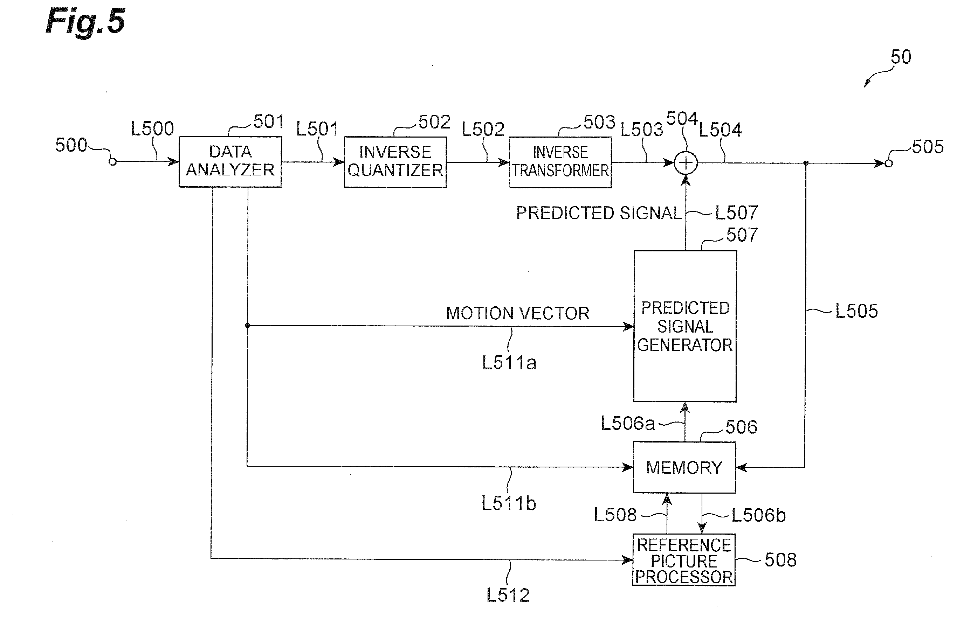

Fig. 5 shows a functional configuration of video decoding device 50 according to the first embodiment of the present invention. The video decoding device 50 is a device that decodes compressed data (encoded data) being the video encoded by the video encoding device 10 of the present embodiment. As shown in Fig. 5, the video decoding device 50 is constructed with input terminal 500, data analyzer 501, inverse quantizer or dequantizer 502, inverse transformer 503, adder 504, output terminal 505, memory 506, predicted signal generator 507, and reference picture processor 508.

The input terminal 500 is an input means that inputs the quantized transform coefficients being the encoded residual signal obtained by predictive coding of the video, the quantization information indicating the quantization value, the motion vector, and the predicted signal generation information indicating the generation content of the predicted signal, in the form of compressed data. In the present embodiment, the input terminal 500 inputs the video encoded by the video encoding device 10 of the present embodiment. The input terminal 500 outputs the input encoded data through line L500 to the data analyzer 501.

The data analyzer 501 is a means that analyzes the compressed data input through line L500 and performs an entropy decoding process to extract the quantized transform coefficients resulting from the quantization, the quantization information indicating the quantization value, the motion vector, and the predicted signal generation information. The data analyzer 501 outputs the quantized transform coefficients resulting from the quantization and the quantization information indicating the quantization value, thus extracted, through line L501 to the dequantizer 502. The data analyzer 501 further outputs the motion vector through line L511 a to the predicted signal generator 507 and through line L511b to the memory 506. The data analyzer 501 also outputs the predicted signal generation information through line L512 to the reference picture processor 508.

The dequantizer 502 is a means that generates transform coefficients by dequantizing the quantized transform coefficients resulting from the quantization, based on the quantization information indicating the quantization value, which was fed through line L501. Namely, the dequantizer 502 is a function of a decoding means which decodes the encoded residual signal to generate a decoded residual signal. The dequantizer 502 outputs the generated transform coefficients through line L502 to the inverse transformer 503.

The inverse transformer 503 is a portion which transforms the transform coefficients input through line L502, by inverse discrete cosine transform to generate a reconstructed residual signal. Namely, the inverse transformer 503 is a function of the decoding means which decodes the encoded residual signal to generate the decoded residual signal. In the present embodiment the decoded residual signal corresponds to the reconstructed residual signal. The inverse transformer 503 outputs the reconstructed residual signal thus generated, through line L503 to the adder 504.

The adder 504 is an adding means that adds a predicted signal input through line L507 from the predicted signal generator 507, to the reconstructed residual signal input through line L503, to generate a reconstructed signal. The adder 504 outputs the reconstructed signal thus generated, through lines L504, L505 to the memory 506 to make the memory 506 store the reconstructed picture as the reference picture. Furthermore, the adder 504 outputs the generated reconstructed signal as the reconstructed picture through line L504 to the output terminal 505.

The output terminal 505 is an output means that outputs the reconstructed picture input through line L504, to an external device (e.g., a display) or the like.

The memory 506 is a storage means which stores the reconstructed picture input through line L505, as a reference picture to be used for generation of the predicted signal used in decoding of compressed data. The predicted signal generator 507 can retrieve the reference picture stored in the memory 506, through line L506a. The reference picture processor 508 can also retrieve the reference picture stored in the memory 506, through line L506b. The memory 506 stores the motion vector input through line L511b, in order to use it for processing of the reference picture.

The predicted signal generator 507 is a predicted signal generating means that generates a predicted signal for the reconstructed residual signal generated by the dequantizer 502 and the inverse transformer 503, using the reference picture stored in the memory 506. The predicted signal generator 507 outputs the predicted signal generated, through line L507 to the adder 504.

The reference picture processor 508 refers to the frequency extraction information included in the predicted signal generation information, to extract spatial frequency components in a predetermined band from a predetermined extraction reference picture stored in the memory 506, and generates a processed reference picture for generation of the predicted signal from the target reference picture used as a picture for generation of the predicted signal among the reference pictures stored in the memory 506, and the extracted spatial frequency components. Namely, the reference picture processor 508 is a function of a predicted signal generating means.

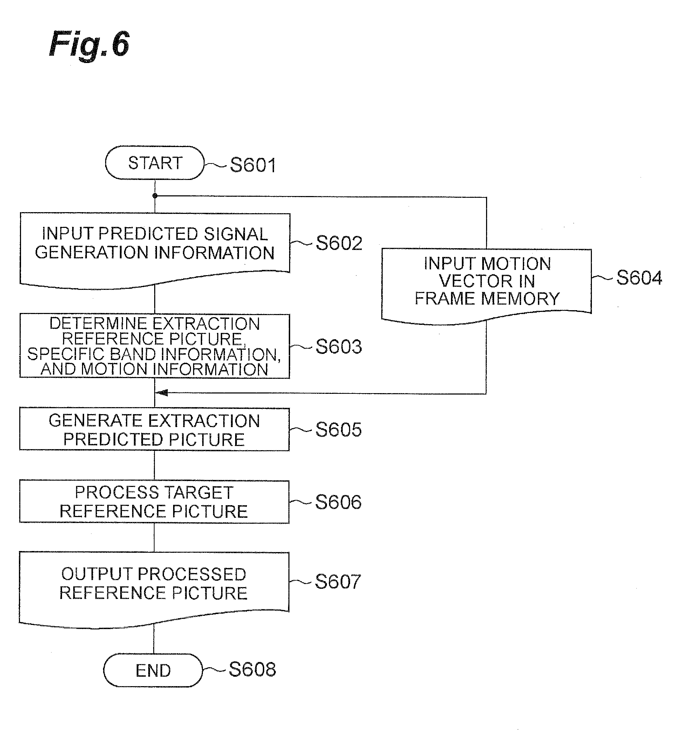

The below will describe the function and operation of the reference picture processor 508, which is a characterizing portion of the present invention, in more detail using the flowchart of Fig. 6.

The reference picture processor 508 receives the predicted signal generation information through line L512 from the data analyzer 501 (S602). In the present embodiment, the predicted signal generation information contains the spatial frequency extraction information indicating the extracted content of spatial frequency components in the predetermined band from the predetermined reference picture stored in the memory 506. Furthermore, the predicted signal generation information contains the information indicating the processing method to determine how to process the reference picture for the target picture as a target of decoding. The spatial frequency extraction information, specifically, contains the information to specify a reference picture as an extraction target (extraction reference picture), and the specific band information indicating a band for extraction of spatial frequency components. The reference picture processor 508 also acquires the motion vector stored in the memory 506, through line L506b from the memory 506 (S604).

The next step is to perform a process of generating an extraction predicted picture from the predicted signal generation information of the target picture. The reference picture processor 508 calculates the spatial frequency component quantity of the target reference picture used as a picture for generation of the predicted signal among the reference pictures stored in the memory 506. Specifically, a certain pixel line in the target reference picture is subjected as a one-dimensional data sequence to Fourier transform to generate a series of frequency coefficients, and the spatial frequency component quantity is calculated using amplitude values from the series of frequency coefficients. The method of calculating the spatial frequency components is as described above. The target reference picture is selected based on a rule to specify a target reference picture, which is preliminarily stored in the video decoding device 50.

Thereafter, the reference picture processor 508 performs extraction of the specific band information included in the predicted signal generation information. Then the reference picture processor 508 refers to the information to specify the extraction reference picture included in the predicted signal generation information, to acquire the extraction reference picture from the reference pictures stored in the memory 506. Furthermore, the reference picture processor 508 refers to the predicted signal generation information to perform the motion compensation for the extraction reference picture, based on the motion vector stored in the memory 506, to generate the extraction predicated picture (S603, S605, predicted signal generating step).

Next, the reference picture processor 508 calculates the spatial frequency component quantity of the extraction predicted picture. The method of calculating the spatial frequency component quantity is as described above. Then it extracts the spatial frequency component quantity in the band F1 [Hz]-F2 [Hz] from the extraction predicted picture, based on the information of the specific band information extracted. Thereafter, it generates the processed reference picture, based on the information indicating the processing method in the predicted signal generation information, from the extracted spatial frequency components and the target reference picture (S606, predicted signal generating step). The above processing, specifically, is to replace the spatial frequency components in the band F1 [Hz]-F2 [Hz] of the target reference picture with the extracted spatial frequency components as described above. The reference picture processor 508 outputs the processed reference picture thus generated, through line L508 to the memory 506 (S607). The processed reference picture stored in the memory 506 is used for the generation of the predicted signal by the predicted signal generator 507.

The present embodiment showed the generation of the extraction predicted picture using the previously received motion vector, but the motion information may be calculated by performing the motion detection using the target reference picture and the extraction reference picture. When the motion information is contained in the predicted signal generation information, the extraction predicted picture may be generated using the motion information and the extraction reference picture.

The present embodiment showed the case where there was the motion vector between the target reference picture and the extraction reference picture, but in the case where there is no motion vector, the relative motion vector between the target reference picture and the extraction reference picture may be calculated from the motion vectors stored in the memory 506. In that case, the motion vector can be determined through calculation of combination of vectors with respective frames present between the target reference picture and the extraction reference picture, based on the predicted signal generation information.

The present embodiment showed the example of one extraction reference picture, but if a plurality of extraction reference pictures are available, the processing may be carried out by extracting spatial frequency components, based on the predicted signal generation information, from the plurality of extraction reference pictures.

The present embodiment showed the generation of the predicted signal after the processing of the specific spatial frequency components of the target reference picture, but the predicted signal may be generated while performing the processing. Furthermore, the present embodiment showed the example of one target reference picture, but if a plurality of target reference pictures are available, the predicted signal may be generated from the plurality of target reference pictures including the processed reference picture, or the predicted signal may be generated from a plurality of processed reference pictures only. The above described the function and operation of the reference picture processor 508.

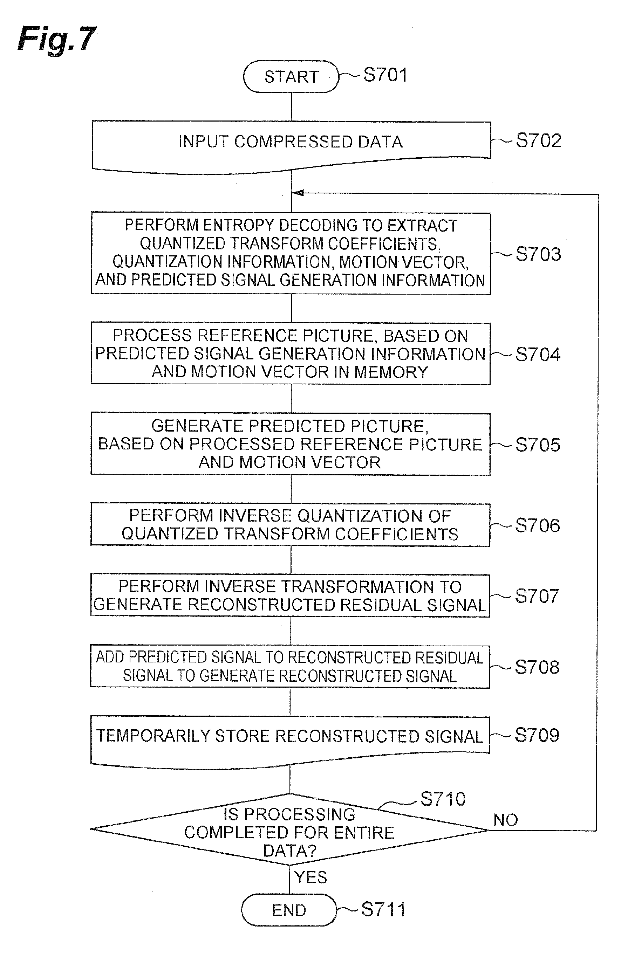

The below will describe a video decoding method being the processing executed by the video decoding device 50 of the present embodiment, using the flowchart of Fig. 7. The video decoding device 50 first imports the compressed data containing the data of the encoded residual signal, the data about the motion vector, and the predicted signal generation information through the input terminal 500 (S702, input step). Subsequently, the data analyzer 501 performs the entropy decoding process of the compressed data to extract the quantized transform coefficients, the information about quantization, the motion vector about generation of the predicted signal, and the predicted signal generation information about the picture as a target of decoding (S703). Thereafter, the reference picture processor 508 processes the target reference picture using the extraction reference picture, based on the motion vector resulting from the extraction and based on the predicted signal generation information extracted. The details are as described with Fig. 6 (S704, predicted signal generating step).

Subsequently, the predicted signal generator 507 generates the predicted signal using the processed target reference picture (S705, predicted signal generating step). Then the dequantizer 502 dequantizes the quantized transform coefficients to generate dequantized transform coefficients (S706, decoding step). Next, the inverse transformer 503 transforms the dequantized transform coefficients by inverse discrete cosine transform to generate a reconstructed residual signal (S707, decoding step). Thereafter, the adder 504 adds the predicted signal generated in S705, to the reconstructed residual signal to generate a reconstructed picture, and the reconstructed picture is temporarily stored in the memory 506 for decoding of the next picture and output through the output terminal 505 (S708 and S709, adding step and output step). This processing is repeated before completion of decoding of entire data (S710). The above described the video decoding device 50 and video decoding method according to the present embodiment.

[Second Embodiment]

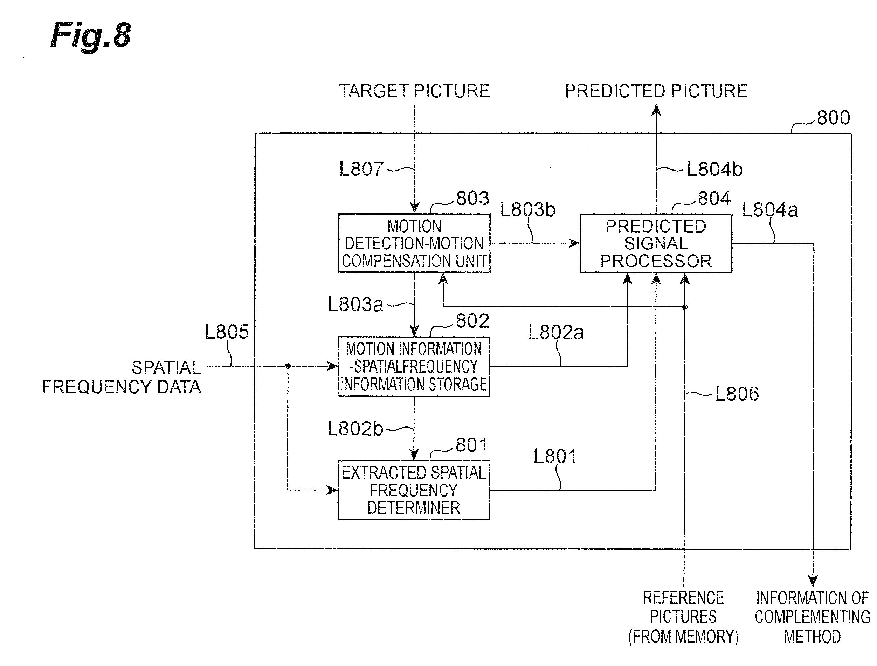

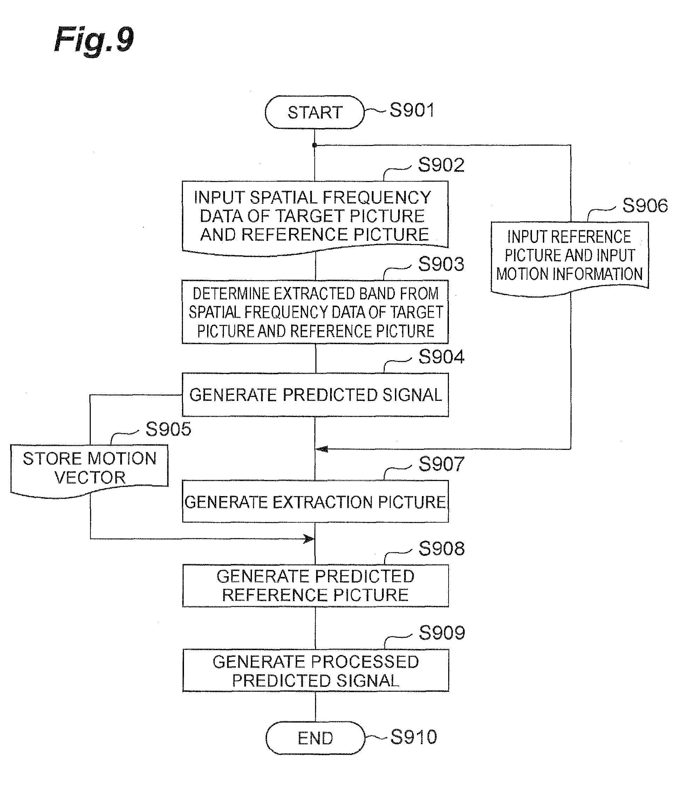

A video encoding device according to the second embodiment of the present invention will be described below. The video encoding device 10a of the second embodiment has the constituent elements per se identical with those of the video encoding device 10 shown in Fig. 1. The video encoding device 10a of the second embodiment is different in the configuration inside the predicted signal generator 121 from the video encoding device 10 shown in Fig. 1. Fig. 8 shows the configuration of predicted signal generator 800 (corresponding to the predicted signal generator 121 in Fig. 1) in the video encoding device 10a of the second embodiment. The predicted signal generator 800 is constructed with extracted spatial frequency determiner 801, motion information-spatial frequency information storage 802, motion detection-motion compensation unit 803, and predicted signal processor 804. The function and operation of the predicted signal generator 800 will be explained using Figs. 8 and 9. Fig. 9 is a flowchart showing the processing to generate the predicted signal, which is carried out in the predicted signal generator 800.

The information of the spatial frequency component quantities of the target picture and the target reference picture is input through line L805 (line L114 in Fig. 1) into the predicted signal generator 800 (S902). The input information of each spatial frequency component quantity is stored through line L805 into the motion information-spatial frequency information storage 802 and used under the instructions of the predicted signal processor 804. The extracted spatial frequency determiner 801 receives each spatial frequency component quantity through line L805. The extracted spatial frequency determiner 801 calculates DIF_FREQ, the difference between the spatial frequency component quantity of the target picture and the spatial frequency component quantity of the target reference picture thus input, based on the following equation:

$$DIF\_FREQ = \text{spatial frequency component quantity of target}$$
$$\text{picture} - \text{spatial frequency component quantity of target reference}$$
$$\text{picture.}$$

The present embodiment showed the calculation of the difference between the spatial frequency component quantities as DIF_FREQ, but it is also possible to calculate the quotient of the spatial frequency (components). The calculation may be performed using any function as long as the function permits the calculation of the difference between two spatial frequency component quantities.

Then the extracted spatial frequency determiner 801 determines a band in which DIF_FREQ indicates a value not less than the threshold T (S903, spatial frequency extracting step). The threshold T herein is preliminarily stored in the extracted spatial frequency determiner 801. Specifically, the band is determined in a region in the form of a given band F1 [Hz]-F2 [Hz] out of the band where the spatial frequency component quantity exists. F1 and F2 indicating the determined band are output as specific band information through line L801 to the predicted signal processor 804.

In the present embodiment the range of value indicating values not less than the threshold was determined to be the band, but the band may be determined based on any standard other than it. For example, it is possible to determine a range of value indicating values not more than a threshold, or to preliminarily define a band to be specified. The range may be selected from predetermined combinations of F1 and F2. The specific band information may be one input from the outside. In the present embodiment the band was determined in one region, but it is also possible to determine bands in a plurality of regions. In that case, information capable of indicating the bands in the plurality of regions can be prepared as the specific band information.

The operation of the motion detection-motion compensation unit 803 will be described below. The motion detection-motion compensation unit 803 receives the target reference picture and the extraction reference picture through lines L806, L803 (line L108a in Fig. 1). The extraction reference picture herein is assumed to be a reference picture used as a target reference picture in predicting the foregoing target reference picture. The motion detection-motion compensation unit 803 performs processing of motion detection using the reference picture and a target block. In the present embodiment, the motion detection is carried out using the block matching method as in the conventional technology, to determine an optimal motion vector to a position giving a reference block with the smallest error for the target block, and motion compensation is performed to generate a predicted signal (target reference picture subjected to the motion compensation) (S904, predicted signal generating step).

The motion detection-motion compensation unit 803 outputs the predicted signal generated in this manner, through line L803b to the predicted signal processor 804. Furthermore, the calculated motion vector is fed as motion information through line L803a to the motion information-spatial frequency information storage 802 to be stored therein (S905). The motion vector is also output to the entropy coder 130 in order to be output as one of encoded data.

The operation of the predicted signal processor 804 will be described below. The predicted signal processor 804 receives the extraction reference picture stored in the memory 108, through line L806 (L108a in Fig. 1) and receives the motion information through line L802a (S906). The extraction reference picture herein is assumed to be a reference picture used as a target reference picture in predicting the foregoing target reference picture. The predicted picture processor 802 also receives the specific band information through line L801.

Next, the predicted signal processor 804 performs the motion compensation for the extraction reference picture, using the motion vector input through line L803b, to generate an extraction picture (S907, predicted signal generating step). Furthermore, the predicted signal processor 804 performs the motion compensation for the extraction picture, using the motion vector called from the motion information-spatial frequency information storage 802, to generate an extraction predicted picture (S908, predicted signal generating step).

In the present embodiment the extraction predicted picture was generated after the generation of the extraction picture, but the extraction predicted picture may be directly generated by calculating a relative motion vector between the predicted signal and the extraction reference picture using the motion vector called from the motion information-spatial frequency information storage 204 and the motion vector input through line L803b.

The present embodiment showed the example using the motion vector as the motion information being the information indicating the relation of motion, but any motion information other than it may be used. For example, all pixels of two frame pictures are subjected each to discrete Fourier transform or the like to implement transformation from the pixel space to the frequency space, and identical frequency components of the same frames are subjected to division, to determine a moving amount using the magnitude of phase. After calculation of the phase of each frequency component, values of all phases are summed up and the total is used as the motion information. The use of the phases after the frequency transformation is not limited to this, but the motion information may be obtained by any method as long as the resultant can represent the motion amount between two frames.

The present embodiment showed the case where the extraction reference picture was the reference picture used in predicting the target reference picture, but any reference picture except for the current target reference picture may be used among the reference pictures in the memory 108. Which reference picture is to be used may be determined based on a certain standard. For example, it is preferable to select the extraction reference picture according to a standard to select a reference picture with a bandwidth larger than that of the target reference picture, based on the spatial frequency information stored in the motion information-spatial frequency information storage 802, or according to a standard to select a reference picture with the largest bandwidth among those stored in the memory 108.

Thereafter, the predicted signal processor 804 extracts the spatial frequency components in the band F1 [Hz]-F2 [Hz], based on the specific band information, from the extraction predicted picture. First, the spatial frequency component quantity of the extraction predicted picture is obtained by Fourier transform. Specifically, a certain pixel line in the extraction predicted picture is subjected as a one-dimensional data sequence to Fourier transform to generate a series of frequency coefficients, and the spatial frequency component quantity is calculated using amplitude values from the series of frequency coefficients. Namely, a square root of the sum of squares of the real part and the imaginary part of each Fourier coefficient is calculated as the amplitude and the phase of each spatial frequency. The spatial frequency components in the band F1 [Hz]-F2 [Hz] out of the spatial frequency components calculated as described above are extracted as the spatial frequency component quantity.

The representation method of the spatial frequency component quantity is not limited to this method, but it may be another representation method. The present embodiment used the Fourier transform as the frequency transformation in order to obtain the spatial frequency component quantity, but any of other frequency transformations such as the discrete cosine transform and discrete wavelet transform may also be applied. It is preferable to calculate the spatial frequency component quantity by the same method as that in the spatial frequency analyzer 120.

The present embodiment is the example to extract the spatial frequency components in the specific band directly from the extraction predicted picture, but the extraction may be carried out after the extraction predicted picture is processed. For example, the extraction predicted picture may be processed by deblocking or image filtering. It is also possible to adjust only specific spatial frequencies in the spatial frequency domain.

The present embodiment was the example in which the extraction predicted picture was generated and in which the spatial frequency components were extracted from it, but the specific spatial frequency components may be extracted directly from the extraction reference picture, without the generation of the extraction predicted picture. In that case, the spatial frequency components may be extracted by selecting pixels in a region for extraction of the spatial frequency components using a plurality of motion vectors, and transforming the pixels into the spatial frequency domain.

Then the predicted signal processor 804 performs processing using the extracted spatial frequency components and the predicted signal. If replace the spatial frequency components quantity in the band F1 [Hz]-F2[Hz] among the spatial frequency components of the predicted signal, with the extracted spatial frequency component quantity. Specifically, it first calculates the spatial frequency component quantity of the predicted signal. The calculation method is the same as the aforementioned method. Thereafter, amplitudes and phases of respective spatial frequencies in the band F1 [Hz]-F2 [Hz] of the predicted signal are replaced with those of spatial frequencies of the extraction predicted picture, and the predicted signal is processed by inverse transformation from the frequency domain to the pixel domain to generate a processed predicted signal (S909, spatial frequency extracting step and predicted signal generating step). The predicted signal processor 804 outputs the processed predicted signal thus generated, through line L804c. Namely, the processed predicted signal is output as the predicted signal from the predicted signal generator 121 in Fig. 1, to the subtracter 102 and to the adder 107.

Furthermore, the reference picture processor 202 combines at least the information indicating the processing method in generating the processed predicted signal, with the band specific information to generate predicted signal generation information. The predicted signal generation information is fed through line L804a (line L110 in Fig. 1) to the entropy coder 130 in Fig. 1 to be encoded. The predicted signal generation information herein is information indicating the generation content of the predicted signal. The band specific information herein is one of the spatial frequency extraction information indicating the extracted content of the spatial frequency components. The predicted signal generation information contains the information to specify the extraction reference picture, as the spatial frequency extraction information. The predicted signal generation information may contain information other than the above, as the spatial frequency extraction information.

The present embodiment adopted the processing of the predicted signal on a frame basis, but the processing may be carried out in units of a plurality of blocks of a predetermined size. In the case of the processing in block units, bands to be processed may be different among the blocks.

In the present embodiment, the processing of the predicted signal was to replace both the amplitudes and phases of spatial frequencies in replacing the spatial frequency component quantity of the predicted signal with the extracted spatial frequency component quantity, but only the amplitudes may be replaced. In cases using the transformation without phases like discrete cosine transform, values of respective frequency components may also be replaced.

In the present embodiment, the processing of the predicted signal was to replace the spatial frequency component quantity of the predicted signal with the extracted spatial frequency component quantity, but the processing may be carried out by a method other than it. For example, the extracted spatial frequency component quantity may be added to the spatial frequency component quantity of the predicted signal. Furthermore, the extracted spatial frequency component quantity may be added after subjected to some processing. For example, the extracted spatial frequency component quantity is multiplied by weight factor W and thereafter the addition or replacement is carried out based thereon, and it is also possible to use the average, median, maximum, or minimum of spatial frequency components of the two pictures. In addition thereto, any method may be applied as long as it is a method to process the specific band of the predicted signal using the spatial frequencies of the extraction predicted picture.

In the present embodiment the processing was carried out in the spatial frequency domain, but the processing may be carried out in the pixel domain. In that case, values of pixels corresponding to the specific spatial frequency component quantity are preliminarily calculated and the processing is carried out using the pixels.

The present embodiment showed the example of one extraction reference picture, but if a plurality of extraction reference pictures are available, the processing may be carried out by extracting spatial frequency components from the plurality of extraction reference pictures. In that case, the processing may be performed using the plurality of extracted spatial frequency components. For example, the processing of spatial frequency components may be carried out based on the weighted addition, or the calculation of the average, maximum, minimum, median, or the like.

The present embodiment showed the generation of the processing method and band specific information as the predicted signal generation information, but the predicted signal generation information may be generated also containing the motion information in the processing of the reference picture.

In the present embodiments the processing of the predicted signal was carried out after the transformation into the spatial frequency components, but the processing may be carried out in the pixel domain. In that case, components being high frequency components may be subjected to addition and subtraction and others. The above described the function and operation of the predicted signal generator 800, which is the characterizing portion of the present invention.

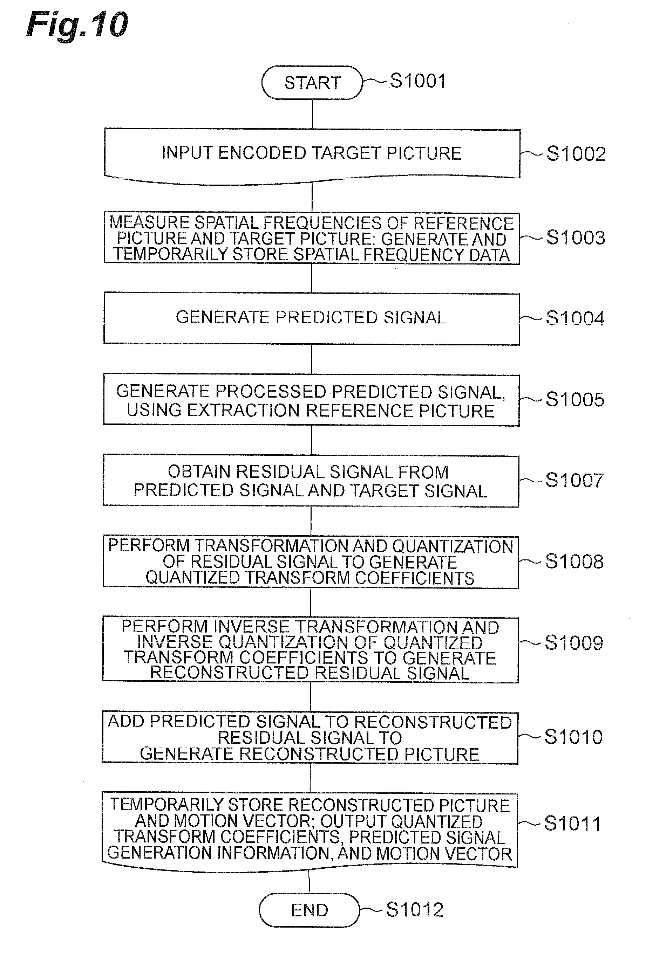

The below will describe a video encoding method being the processing executed by the video encoding device 10a according to the present embodiment, using the flowchart of Fig. 10. The video encoding device 10a first imports the target picture as an object to be encoded, through the input terminal 101 (S1002, input step). Then the spatial frequency analyzer 120 measures the spatial frequency component quantities of the target picture and the target reference picture to generate the spatial frequency data containing the information of the spatial frequency component quantities (S1003, spatial frequency extracting step). The method of measuring the spatial frequency component quantities is as described above. In the present embodiment, the data is obtained about the spatial frequency component quantities of the entire pictures, but the data may be obtained about spatial frequency components in each block unit.

Subsequently, the predicted signal generator 121 performs the motion search and motion compensation for the target block from the target reference picture to generate the predicted signal (S1004, predicted signal generating step). Then the predicted signal generator 121 performs the processing of the predicted signal using the motion vector obtained in the generation of the predicted signal and the extraction reference picture stored in the memory 108, to generate the processed predicted signal (S1005, spatial frequency extracting step and predicted signal generating step). Then the subtracter 102 subtracts the (processed) predicted signal thus obtained, from the target signal to obtain the residual signal (S 1007, subtracting step).

Thereafter, the transformer 103 transforms the residual signal by discrete cosine transform and the quantizer 104 quantizes the resulting transform coefficients to generate the quantized transform coefficients (S1008, encoding step). Then the dequantizer 105 dequantizes the quantized transform coefficients and the inverse transformer 106 performs inverse transformation thereof to generate the reconstructed residual signal (S1009, decoding step). Next, the adder 107 adds the predicted signal to the reconstructed residual signal to generate the reconstructed picture (S1010, reconstructed picture generating step). Finally, the reconstructed picture and the motion vector are temporarily stored into the memory 108 or the like and, at the same time as it, the entropy coder 130 performs the entropy coding of data including the quantized transform coefficients, the predicted signal generation information about the generation of the predicted signal, and the motion vector and the result is output from the output terminal 131 (S1011, output step). The aforementioned processes of S901-S910 shown in Fig. 9 correspond to the above-described processes S1003-S1005. The above described the video encoding device 10a and video encoding method according to the present embodiment.

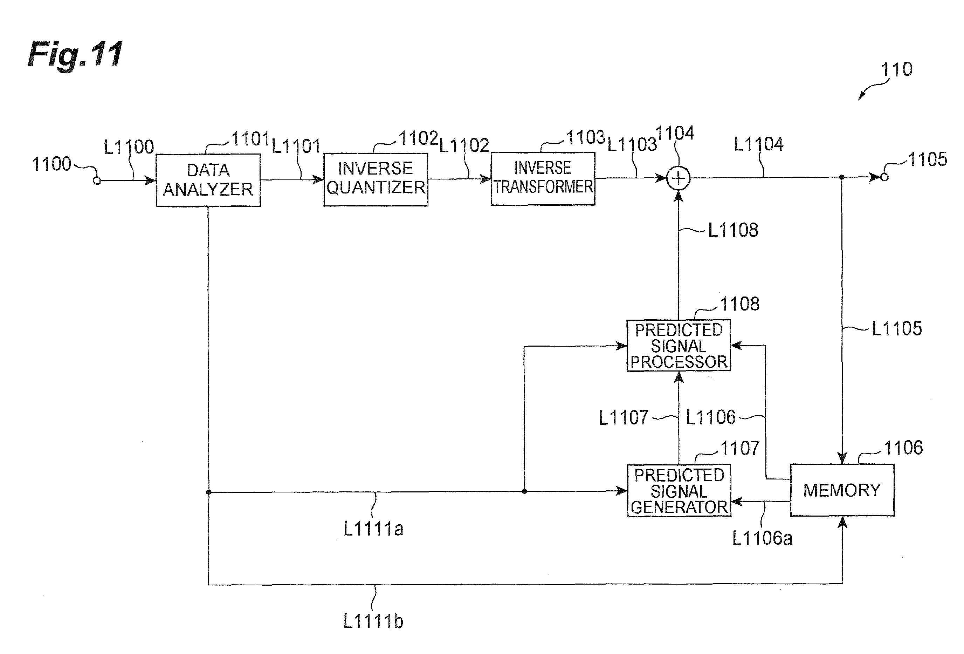

Fig. 11 shows a functional configuration of video decoding device 110 According to the second embodiments of the present invention. The video decoding device 110 is a device that decodes compressed data (encoded data) being the video encoded by the video encoding device 10a of the present embodiment. As shown in Fig. 11, the video decoding device 110 is constructed with input terminal 1100, data analyzer 1101, dequantizer 1102, inverse transformer 1103, adder 1104, output terminal 1105, memory 1106, predicted signal generator 1107, and predicted signal processor 1108.

The input terminal 1100 is an input means that inputs the quantized transform coefficients being the encoded residual signal obtained by predictive coding of the video, the quantization information indicating the quantization value, the motion vector, and the predicted signal generation information indicating the generation content of the predicted signal, in the form of compressed data. In the present embodiment, the input terminal 1100 inputs the video encoded by the video encoding device 10a of the present embodiment. The input terminal 1100 outputs the input encoded data through line L 1100 to the data analyzer 1101.

The data analyzer 1101 is a means that analyzes the compressed data input through line L1100 and performs an entropy decoding process to extract the quantized transform coefficients resulting from the quantization, the quantization information indicating the quantization value, the motion vector, and the predicted signal generation information. The data analyzer 1101 outputs the quantized transform coefficients resulting from the quantization and the quantization information indicating the quantization value, thus extracted, through line L1101 to the dequantizer 1102. The data analyzer 1101 further outputs the motion vector through line L1111 a to the predicted signal generator 1107 and through line L1111b to the memory 1106. The data analyzer 1101 also outputs the predicted signal generation information through line L1112 to the memory 1106.

The dequantizer 1102 is a means that generates transform coefficients by dequantizing the quantized transform coefficients resulting from the quantization, based on the quantization information indicating the quantization value, which was fed through line L1101. Namely, the dequantizer 1102 is a function of a decoding means which decodes the encoded residual signal to generate a decoded residual signal. The dequantizer 1102 outputs the generated transform coefficients through line L1102 to the inverse transformer 1103.

The inverse transformer 1103 is a portion which transforms the transform coefficients input through line L1102, by inverse discrete cosine transform to generate a reconstructed residual signal. Namely, the inverse transformer 1103 is a function of the decoding means which decodes the encoded residual signal to generate the decoded residual signal. In the present embodiment the decoded residual signal corresponds to the reconstructed residual signal. The inverse transformer 1103 outputs the reconstructed residual signal thus generated, through line L503 to the adder 1104.

The adder 1104 is an adding means that adds a (processed) predicted signal input through line L1108 from the predicted signal processor 1108, to the reconstructed residual signal input through line L1103, to generate a reconstructed signal. The adder 1104 outputs the reconstructed signal thus generated, through lines L1104, L1105 to the memory 1106 to make the memory 1106 store the reconstructed picture as a reference picture. Furthermore, the adder 1104 outputs the generated reconstructed signal as the reconstructed picture through line L 1104 to the output terminal 1105.

The output terminal 1105 is an output means that outputs the reconstructed picture input through line L1104, to an external device (e.g., a display) or the like.

The memory 1106 is a storage means which stores the reconstructed picture input through line L1105, as a reference picture to be used for generation of the predicted signal used in decoding of compressed data. The predicted signal generator 1107 can retrieve the reference picture stored in the memory 1106, through line L1106a. The predicted signal processor 1108 can also retrieve the reference picture stored in the memory 1106, through line L1106b. The memory 1106 stores the motion vector and the predicted signal generation information input through line L1111b, in order to use them for processing of the predicted signal.

The predicted signal generator 1107 is a function of a predicted signal generating means for generating a predicted signal (motion-compensated target reference picture) from the motion vector input through line L1111 a and the target reference picture stored in the memory 1106. The predicted signal generator 1107 outputs the generated predicted signal through line L1107 to the predicted signal processor 1108. The target reference picture is selected based on a rule to specify the target reference picture, preliminarily stored in the video decoding device 110.

The predicted signal processor 1108 refers to the frequency extraction information included in the predicted signal generation information, to extract spatial frequency components in a predetermined band from the predetermined extraction reference picture stored in the memory 506, and generates the processed predicted signal from the predicted signal input through line L1107 and the extracted spatial frequency components. Namely, the predicted signal processor 1108 is a function of the predicted signal generating means.

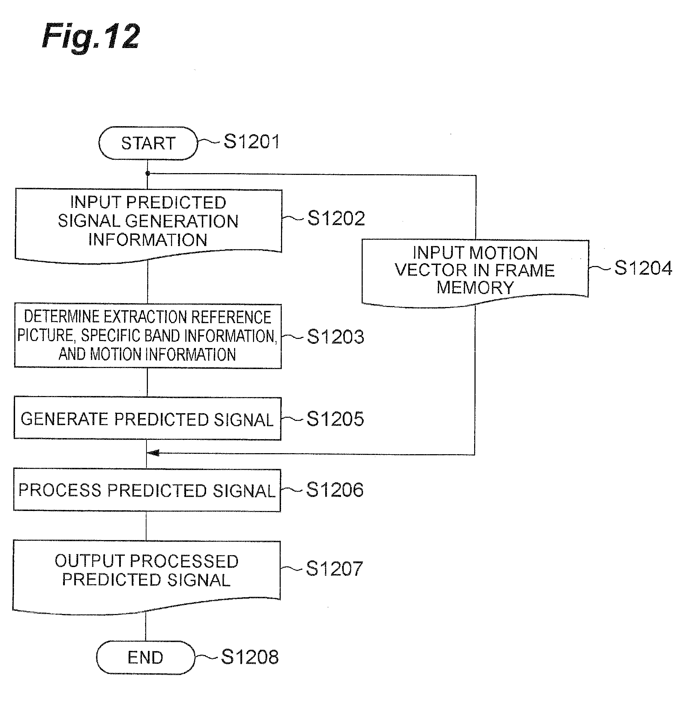

The following will describe the function and operation of the predicted signal processor 1108, which is a characterizing portion of the present invention, in more detail, using the flowchart of Fig. 12.

The predicted signal processor 1108 receives the motion vector, the predicted signal generation information, and the reference picture through line L1106 from the memory 1106. The predicted signal processor 1108 also receives the motion vector for decoding of the target picture through line L1111a (S 1204). Furthermore, the predicted signal processor 1108 receives the predicted signal generation information through line L1111a (S1202). In the present embodiment, the predicted signal generation information contains the spatial frequency extraction information indicating the extracted content of spatial frequency components in the predetermined band from the predetermined reference picture stored in the memory 1106. Furthermore, the predicted signal generation information contains the information indicating the processing method to determine how to process the reference picture for the target picture as a target of decoding. The spatial frequency extraction information, specifically, contains the information to specify a reference picture as an extraction target (extraction reference picture), and the specific band information indicating a band for extraction of spatial frequency components.

Thereafter, the predicted signal processor 1108 performs extraction of the specific band information included in the predicted signal generation information (S1203). The predicted signal processor 1108 also receives the predicted signal generated by the predicted signal generator 1107, through line L1107 (S1205).

The predicted signal processor 1108 performs processing of the predicted signal from the predicted signal generation information of the target picture (S 1206, predicted signal generating step). First, the predicted signal processor 1108 calculates spatial frequency components of the predicted signal. Specifically, a certain pixel line in the predicted signal is subjected as a one-dimensional data sequence to Fourier transform to generate a series of frequency coefficients, and the spatial frequency component quantity is calculated using amplitude values from the series of frequency coefficients. The method of calculating the spatial frequency components is as described above.

Next, the predicted signal processor 1108 refers to the information to specify the extraction reference picture, which is contained in the predicted signal generation information, to acquire the extraction reference picture from the memory 1106, and motion compensation is carried out based on the motion vector stored in the memory 1106, to generate an extraction picture. Then the predicted signal processor 1108 performs the motion compensation based on the extraction picture and the motion vector for decoding of the target picture input through line L1111a, to generate an extraction predicted picture.

Next, the predicted signal processor 1108 calculates the spatial frequency component quantity of the extraction predicted picture. The method of calculating the spatial frequency component quantity is as described above. Then it extracts the spatial frequency component quantity in the band F1 [Hz]-F2 [Hz] from the extraction predicted picture, based on the information of the specific band information extracted. Thereafter, it generates the processed predicted signal, based on the information indicating the processing method in the predicted signal generation information, from the extracted spatial frequency components and the predicted signal. The above processing, specifically, is to replace the spatial frequency components in the band F1 [Hz]-F2 [Hz] of the predicted signal with the extracted spatial frequency components as described above. The predicted signal processor 1108 outputs the processed predicted signal thus generated, through line L1108 to the adder 1104 (S1207). The adder 1104 adds the reconstructed residual signal to the processed predicted signal to generate a reconstructed signal.

The present embodiment showed the generation of the extraction predicted picture using the previously received motion vectors, but the motion information may be calculated by performing the motion detection using the predicted signal and the extraction reference picture. When the motion information is contained in the predicted signal generation information, the extraction predicted picture may be generated using the motion information and the extraction reference picture.

In the present embodiment the extraction picture was first generated and the extraction predicted picture was then generated; however, the extraction predicted picture may be directly generated by calculating the relative motion vector between the predicted signal and the extraction reference picture, using the motion vector called from the memory 1106 and the motion vector input through line L1106b.

The present embodiment showed the case where there was the motion vector between the predicted signal and the extraction reference picture, but in the case where there is no motion vector, the relative motion vector between the predicted signal and the extraction reference picture may be calculated from the motion vectors stored in the memory 1106. In that case, the motion vector can be determined through calculation of combination of vectors with respective frames present between the predicted signal and the extraction reference picture, based on the predicted signal generation information.

The present embodiment showed the example of one extraction reference picture, but if a plurality of extraction reference pictures are available, the processing may be carried out by extracting spatial frequency components, based on the predicted signal generation information, from the plurality of extraction reference pictures.

In the present embodiment the processed predicted signal was generated after the generation of the predicted signal, but the processed predicted signal may be generated while performing processing. Furthermore, the present embodiment showed the example of one target reference picture, but if a plurality of target reference pictures are available, the processed predicted signal may be generated from the plurality of target reference pictures including the processed reference picture. The above described the function and operation of the reference picture processor 508.

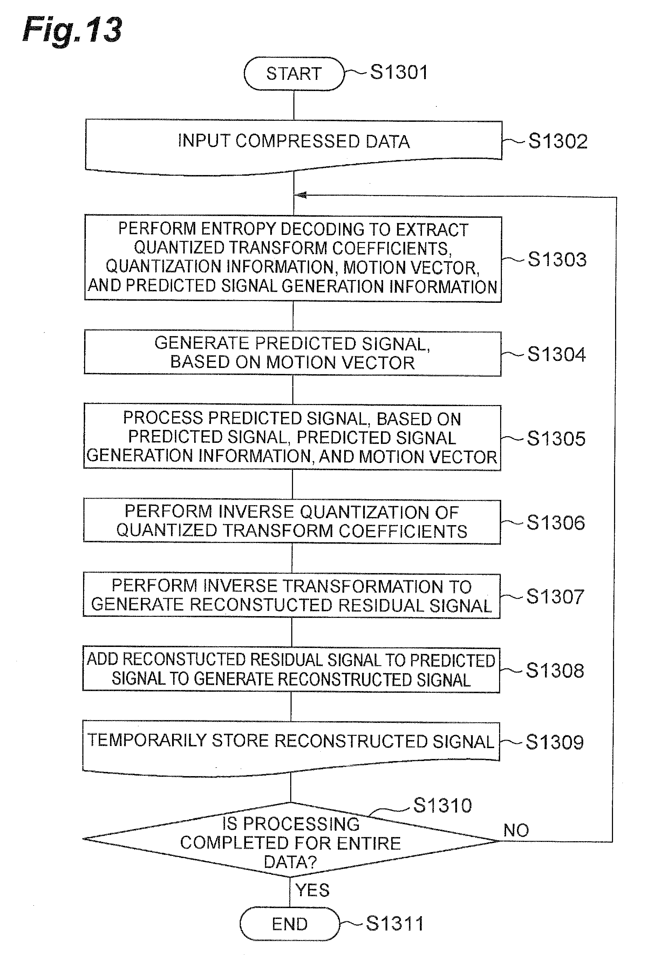

The below will describe a video decoding method being the processing executed by the video decoding device 110 of the present embodiment, using the flowchart of Fig. 13. The video decoding device 110 first imports the compressed data containing the data of the encoded residual signal, the data about the motion vector, and the predicted signal generation information through the input terminal 1100 (S 1302, input step). Subsequently, the data analyzer 1101 performs the entropy decoding process of the compressed data to extract the quantized transform coefficients, the information about quantization, the motion vector about generation of the predicted signal, and the predicted signal generation information about the picture as a target of decoding (S1303). Thereafter, the predicted signal generator 1107 generates the predicted signal using the reference picture, based on the motion vector after completion of the extraction (S1304, predicted signal generating step). Next, the predicted signal processor 1108 generates the (processed) predicted signal using the extracted predicted signal generation information, motion vector, and extraction reference picture from the generated predicted signal. The details are as described with Fig. 7 (S1305, predicted signal generating step).

Then the dequantizer 1102 dequantizes the quantized transform coefficients to generate dequantized transform coefficients (S1306, decoding step). Next, the inverse transformer 1103 transforms the dequantized transform coefficients by inverse discrete cosine transform to generate a reconstructed residual signal (S1307, decoding step). Thereafter, the adder 1104 adds the predicted signal generated in S1305, to the reconstructed residual signal to generate a reconstructed picture, and the reconstructed picture is temporarily stored in the memory 1106 for decoding of the next picture and output through the output terminal 1105 (S1308 and S1309, adding step and output step). This processing is repeated before completion of decoding of entire data (S1310). The above described the video decoding device 110 and video decoding method according to the present embodiment.

According to the first and second embodiments of the present invention, as described above, the spatial frequency components in the predetermined band are extracted from the extraction reference picture and the spatial frequency components, together with the target reference picture, are used for the generation of the predicted signal. Therefore, the predicted signal comes to contain the spatial frequency components in the band not included in the target reference picture. For this reason, even if the video as an object to be encoded is one consisting of a mixture of pictures of different bandwidths, when the bandwidth of the target reference picture is narrower than the bandwidth of the target picture, the target reference picture is compensated for the spatial frequency components in the band not included in the target reference picture, so as to reduce the residual signal of the predicted signal in the band; therefore, it is feasible to implement the encoding and decoding at a high compression rate.

Specifically, for example, even in the case where the bandwidth of the target picture is wider than the bandwidth of the target reference picture as shown in Fig. 22, the spatial frequency components in the predetermined band are extracted from the extraction reference picture and the target reference picture is compensated for the spatial frequency components in the band not included in the target reference picture. It can be contemplated that a reference picture with a bandwidth approximately equal to that of the target picture is selected as a target reference picture, as described above, but if the target reference picture is selected taking only the bandwidth into consideration, the motion of the target reference picture from the target picture can be significant, which leads to a reduction in compression rate.

As described in the present embodiment, the band may be determined as follows: the information (spatial frequency component quantities) indicating the spatial frequency components of the target picture and the target reference picture is acquired, a comparison is made between the acquired information, and the band to extract the spatial frequency components from the extraction reference picture is determined based on the comparison result. Specifically, for example, a preferred configuration is such that the difference (DIF_FREQ) is calculated between the target picture and the target reference picture and the foregoing band is determined based on the difference. This configuration permits the device to appropriately extract the spatial frequency components in the band included in the target picture but not included in the target reference picture, and thereby further reduces the residual signal, enabling the encoding and decoding at a higher compression rate.

As described in the present embodiment, the spatial frequency components may be extracted using the relation of motion between the target reference picture and the extraction reference picture. Specifically, a preferred configuration is such that the extraction reference picture is motion-compensated relative to the target reference picture and the spatial frequency components are extracted from the motion-compensated extraction reference picture. Since this configuration decreases the error between the extraction reference picture and the target reference picture, it permits the device to perform more appropriate extraction of the spatial frequency components from the extraction reference picture, thus enabling the encoding at a higher compression rate.

As described in the present embodiment, the determination of the extraction reference picture is preferably carried out based on at least either one of the information indicating the spatial frequency components of the target picture and the reference picture stored in the memory. This permits the device to use such an extraction reference picture as to have the spatial frequency components in the band included in the target picture but not included in the target reference picture, thus enabling the encoding at a much higher compression rate.

The extracted spatial frequency components may be used for the processing of the target reference picture before execution of the motion compensation, i.e., the processing of the target reference picture before generation of the predicted signal as in the first embodiment, or may be used for the processing of the target reference picture after execution of the motion compensation, i.e., the processing for the predicted signal generated from the target reference picture as in the second embodiment. Either of the methods permits secure implementation of the present invention.

A preferred configuration is such that the image generated by the processing is stored as a reference picture in the memory as in the present embodiment. Since this configuration increases the number of pictures available as reference pictures, the encoding can be performed at a higher compression rate.

[Third Embodiment]

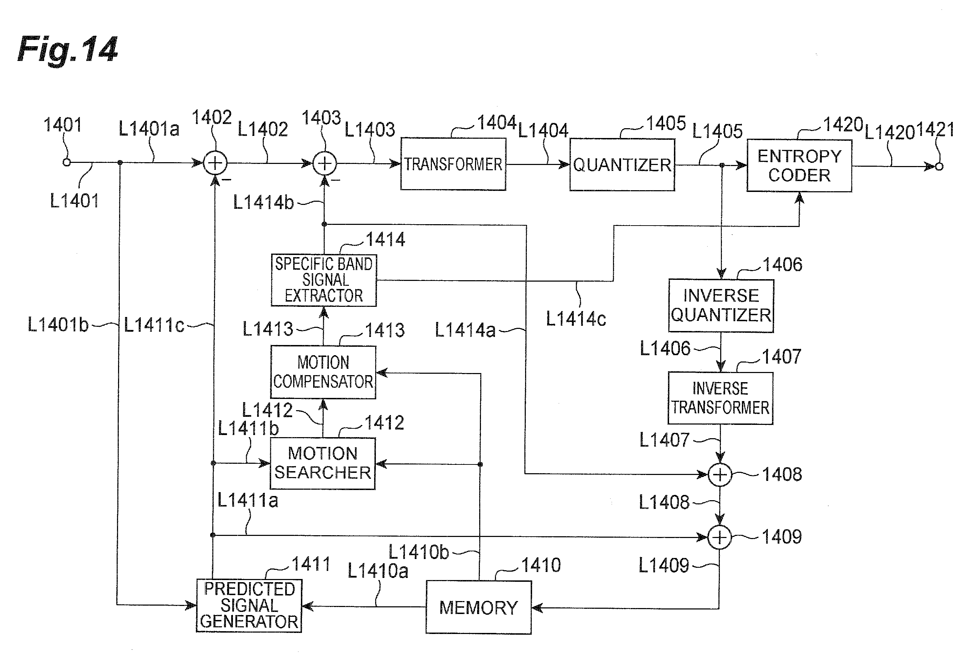

Fig. 14 shows a functional configuration of video encoding device 140 according to the third embodiment of the present invention. The video encoding device 140 is a device that imports pictures (data) (frames) forming a video (data) and sequentially encodes the pictures to generate compressed data (encoded data) resulting from encoding of the video. As shown in Fig. 14, the video encoding device 140 is constructed with input terminal 1401, first subtracter 1402, second subtracter 1403, transformer 1404, quantizer 1405, dequantizer 1406, inverse transformer 1407, first adder 1408, second adder 1409, memory 1410, predicted signal generator 1411, motion searcher 1412, motion compensator 1413, specific band signal extractor 1414, entropy coder 1420, and output terminal 1421.

The input terminal 1401 is a terminal that is an input means for inputting a target picture as an object to be encoded, from a plurality of (still images) pictures forming a video. The input terminal 1401 is connected to a video camera, a memory storing a video, or the like and inputs pictures forming a video output from one of those, one by one. The input terminal 1401 outputs an input picture through line L 1401 a to the first subtracter 1402 and through line L11401b to the predicted signal generator 1411. The picture output to the first subtracter 1402 and the predicted signal generator 1411 is divided into blocks each of which consists of a region of a predetermined size, e.g., $16 \times 16$ pixels, by an unrepresented picture divider or the like, and an encoding process is carried out on a block basis.

The video data input by the input terminal 1401 can also be, for example, such an input object as a video taken by a consumer video camera (including a camera mounted on a cell phone). In this case, the autofocus function of autofocus of the camera becomes active to automatically adjust focus during photography and this can cause the following phenomenon: temporally adjacent pictures taken have varying bands, resulting in acquiring adjacent pictures, one having a signal of a wide bandwidth and the other having a signal of a narrow bandwidth. Another input object can be a video composed of pictures of different bandwidths as alternation of high-resolution and low-resolution frames with expectation of the effect of motion sharpening. There is also a case where a video with a stable bandwidth is input.

The first subtracter 1402 is a subtracting means (first subtracting means) that calculates a difference between a target picture (target block) input through line L1401a and a first predicted signal generated by the predicted signal generator 1411 and input through line L1411c, to generate a first residual signal. The first subtracter 1402 outputs the generated first residual signal through line L1402 to the second subtracter 1403.

In the present embodiment the first residual signal was generated by obtaining the difference from the target signal by use of the first predicted signal, but the difference may be obtained after processing the first predicted signal.

For example, the residual signal may be calculated after the first predicted signal is processed by filtering (e.g., low pass, high pass, or band pass filtering). In that case, it is feasible to realize such a configuration by additionally providing a filtering function on line L1411c.

The second subtracter 1403 is a subtracting means (second subtracting means) that calculates a difference between the first residual signal input through line L 1402 and a specific band signal generated by the specific band signal extractor 1414 and input through line L1414b, to generate a second residual signal. The second subtracter 1403 outputs the second residual signal thus generated, through line L 1403 to the transformer 1404.

The transformer 1404 is a means that subjects the second residual signal input through line L1403, to a discrete cosine transform process to transform the second residual signal into a signal in the frequency domain. Namely, the transformer 1404 is a function of an encoding means which encodes a second residual signal to generate an encoded residual signal. The transformer 1404 outputs the signal in the frequency domain through line L1404 to the quantizer 1405.

The quantizer 1405 is a means that quantizes the signal in the frequency domain input through line L1404, to obtain quantized transform coefficients of the signal in the frequency domain. Namely, the quantizer 1405 is a function of the encoding means that encodes the second residual signal to generate the encoded residual signal. The quantizer 1405 outputs the quantized transform coefficients obtained, through line L1405 to the entropy coder 1420 and the dequantizer 1406. The quantizer 1405 also outputs quantization information indicating a quantization value in the quantized transform coefficients, together to the entropy coder 1420 and the dequantizer 1406.

The dequantizer 1406 is a means that subjects the quantized transform coefficients input through line L1405, to an inverse quantization process to obtain a signal in the frequency domain. Namely, the dequantizer 1406 is a function of a decoding means that decodes an encoded residual signal to generate a decoded residual signal. In the present embodiment, the encoded residual signal decoded by the decoding means corresponds to the quantized transform coefficients. The dequantizer 1406 outputs the signal in the frequency domain thus obtained, through line L 1406 to the inverse transformer 1407.

The inverse transformer 1407 is a means that subjects the signal in the frequency domain input through the line L1406, to inverse discrete cosine transform to generate a reconstructed residual signal in the space domain. Namely, the inverse transformer 1407 is a function of the decoding means that decodes the encoded residual signal to generate the decoded residual signal. In the present embodiment, the decoded residual signal corresponds to the reconstructed residual signal in the space domain. The inverse transformer 1407 outputs the reconstructed residual signal in the space domain thus obtained, through line L1407 to the first adder 1408.

The first adder 1408 is an adding means (first adding means) that adds the specific band signal generated by the specific band signal extractor 1414 and input through line L1414a, to the reconstructed residual signal in the space domain input through line L1407, to generate a first sum signal. The first adder 1408 outputs the first sum signal thus generated, through line L1408 to the second adder 1409.

The second adder 1409 is an adding means (second adding means) that adds the first predicted signal input through line L1412a from the predicted signal generator 1411, to the first sum signal input through line L1408, to generate a reconstructed signal. The second adder 1409 outputs the reconstructed signal thus generated, through line L1409 to the memory 1410 to make the memory 1410 store the reconstructed picture as a reference picture.

The memory 1410 is a storage means that stores the reconstructed picture input through line L1410, as a reference picture to be used for generation of a predicted signal for a target picture, in encoding the target picture. The predicted signal generator 1411, motion searcher 1412, and motion compensator 1413 can retrieve the reference picture stored in the memory 1410, through line L1410a or through line L1410b.

The predicted signal generator 1411 is a predicted signal generating means (first predicted signal generating means) that generates a predicted signal (which will be referred to hereinafter as a first predicted signal) for the target picture input through line L1401b. The predicted signal is generated using a reference picture acquired through line L1410a. The predicated signal is generated by motion, search and motion compensation, or by use of correlation or the like in the spatial direction of the same picture after encoded. In the case of the motion search and motion compensation being carried out, a motion vector (MVx1, MTVy1) (hereinafter referred to as a first motion vector) is calculated by motion search and the first predicted signal St-1(x+MVx1, y+Wy1) is determined as a pixel value at a position resulting from movement by the first motion vector from (x,y) being a position as a processed object in the first reference picture. The predicted signal generator 1411 outputs the generated first predicted signal through line L 1411 a to the second adder 1409 and through line L1411b to the motion searcher 1412. The predicted signal generator 1411 also outputs the first predicted signal through line L1411c to the first subtracter 1402.

The motion searcher 1412 performs the motion search using the predicted signal input through line L1411b and a second reference picture input through line L1410b. Namely, the motion searcher 1412 is a function of a second predicted signal generating means. The motion searcher 1412 outputs a motion vector calculated from the second reference picture with respect to the acquired first predicted signal (which will be referred to hereinafter as a second motion vector), through line L 1412, to the motion compensator 1413. The second reference picture is selected based on a rule to specify the second reference picture preliminarily stored in the video encoding device 140.

The foregoing rule may be any rule that can specify a reference picture other than the first reference picture used in the generation of the predicted signal, as the second reference picture among the reference pictures stored in the memory 1410. For example, it can be a rule based on an encoding order to define use of a picture encoded immediately before the first reference picture used in the generation of the predicted signal, as the second reference picture, or a rule to define as the second reference picture a picture satisfying a predetermined standard, referring to the result of the motion search for the first reference picture among the reference pictures stored in the storage means. In addition thereto, the second reference picture may be selected by any rule, e.g., a rule to determine the second reference picture, based on characteristics of picture-spatial frequency components of the reference picture or the like.

Next, the motion compensator 1413 performs the motion compensation using the second reference picture input through line L1410b and the second motion vector obtained by the motion searcher 1412 and input through line L 1412, to generate a second predicted signal. The method of the motion compensation is the conventional one. Namely, the motion compensator 1413 is a function of the second predicted signal generating means. The motion compensator 1413 outputs the second predicted signal thus generated, through line L 1413 to the specific band signal extractor 1414.

The specific band signal extractor 1414 is a specific band signal extracting means that extracts a specific band signal being a signal in a specific band, from the second predicted signal input through line L1413. The details on how the specific band signal extractor 1414 operates will be described later. The specific band signal extractor 1414 outputs the specific band signal thus generated, through line L1414a to the first adder 1408. The specific band signal is also output through line L1414b to the second subtracter 1403. At the same time, the specific band signal extractor 1414 generates specific band signal extraction information indicating the extracted content of the specific band signal, and outputs the specific band signal extraction information through line L1414c to the entropy coder 1420. The specific band signal extraction information, specifically, contains information indicating the extracted content showing the band or the like for extraction of the specific band signal (more specifically, information indicating a filter), and information indicating the second reference picture.

The entropy coder 1420 is an encoding means that converts the quantized transform coefficients of the signal in the frequency domain and the quantization information input through line L 1405 and the specific band signal extraction information input through line L 1414c, into variable length codes. Namely, in the present embodiment, an encoded residual signal to be output corresponds to variable-length coded or arithmetic coded data. The entropy coder 1420 outputs the variable length codes resulting from the conversion, through line L1420 to the output terminal 1421. This process may be carried out by applying arithmetic coding instead of the variable-length coding.

The output terminal 1421 is a means that outputs the variable length codes input through line L1420, to an external device (e.g., a video decoding device) or the like. Namely, the output terminal 1421 is an output means that outputs the encoded residual signal and the specific band signal extraction information. The above described the functional configuration of the video encoding device 140.

The following will describe the functions and operations of the motion searcher 1412, motion compensator 1413, and specific signal extractor 1414, which are characterizing portions of the present invention, in more detail.

First, the motion searcher 1412 will be described. The motion searcher 1412 receives the first predicted signal, which is the predicted signal obtained using the first reference picture for the target picture as an object to be encoded, and the second reference picture defined by the specific rule. The reference picture is one stored in the memory 1410 and is input through line L1410b into the motion searcher 1412.

In the present embodiment the second reference picture is assumed to be a reference picture, but a plurality of reference pictures may be used. As described above, the motion searcher 1412 acquires the second motion vector (MVx2, MVy2) with respect to the first predicted signal. The operation of the motion searcher 1412 will be explained using a block at a certain arbitrary position in the predicted signal, as an example. First, a pixel signal of the block at the position (x,y) is generated. In the present embodiment, the predicted signal generator 1411 generates the first predicted signal. If on this occasion a block at an arbitrary position is generated using a plurality of motion vectors, a pixel in the block at the position in the first predicted signal will be generated using the motion vectors. After that, the motion detection is performed using the block matching method as usual in the present embodiment, to obtain an optimal motion vector to a position giving a reference block satisfying a standard for a target block.

The standard of the search for the motion vector may be a standard based on a residual signal of a pixel signal (e.g., to select a block with a minimum error like SAD or SSD) or use of a cost function taking coded bits into account. The motion vector may be acquired also taking other information into consideration. For example, the search may be carried out using information such as the width of the band.

The standard of the motion vector search in the motion searcher 1412 does not always have to be the same as that used in the predicted signal generator 1411. The number of motion vectors per block is not limited to one, but a plurality of motion vectors may be acquired. The number of motion vectors in that case does not have to be matched with that in the means used in the predicted signal generator 1411, either.

In the present embodiment the motion search was carried out using the first predicted signal, but the motion search may be carried out after execution of processing of the first predicted signal. For example, the motion search may be performed after execution of filtering, e.g., with a block eliminating filter or a low-pass filter.

In the present embodiment the motion vector was determined by the block matching method, but how to determine the motion vector is not limited to it. For example, the motion vector may be searched for by a technique such as optical flow.

In the present embodiment the motion vector was determined from the relation between pictures, but it may be generated by making use of the first motion vector (MVx1, MVy1) generated in the generation of the first predicted signal. For example, the second motion vector (MVx2, MVy2) may be one at a fixed magnification ratio of the first motion vector (MVx1, MVy1). In this case, the magnification ratio may be sent as additional information, or a predetermined value may be used therefor. The fixed magnification ratio may be determined by making use of a relation of a reference frame. For example, the magnification ratio may be one using scaling according to the numbers of frames in the reference picture and in the target picture.

In the present embodiment the motion search was carried out for generation of the second predicted signal, but the first motion vector (MVx1, MVy1) may be handled as the second motion vector (MVx2, MVy2). In this case, the motion search is unnecessary for the generation of the second predicted signal, and thus the motion searcher 1412 does not have to be provided.

The present embodiment showed the example using the motion vector in order to clarify the relation of motion between the first predicted signal and the second reference picture, but the invention is not limited to it. Any method can be applicable as long as it is a technique capable of interpolating the relation of motion between two pictures. For example, an available method is as follows: all pixels in each of two frame pictures are subjected to discrete Fourier transform or the like, to effect transformation from the pixel space to the frequency space, and identical frequency components of identical frames are subjected to division to allow use of a moving amount using the magnitude of phase. After calculation of phases of respective frequency components, values of all phases are summed up and the sum is used as motion information. Utilization of phases after the frequency transformation is not limited to this, but any method may be applied to the calculation as long as a motion amount between two frames is represented thereby.

The motion searcher 1412 outputs the second motion vector searched for in block units, through line L1412 to the motion compensator 1413.

The motion compensator 1413 generates a second predicted signal St-2(x+MVx2, y+MVy2) being a predicted signal for the first predicted signal, using the second reference picture input through line L1410b and the second motion vector input through line L1412. How to generate St-2(x+MVx2, y+MVy2) is to generate it by acquiring a pixel value in a block unit corresponding to the position (x+MVx2, y+MVy2) in the second reference picture in the same manner as the conventional motion compensation.

In the present embodiment the second predicted signal was generated using the motion vector between the first predicted signal and the second predicted signal, but it is also possible to calculate a motion vector between the target picture and the second reference picture. In that case, the calculated motion vector can be output as additional information from the motion compensator 1413 to the entropy coder 1420.

The specific band signal extractor 1414 will be described in detail. The specific signal extractor 1414 receives the second predicted signal through line L1413. The specific signal extractor 1414 specifies a band included in the second predicted signal, and extracts a signal in the specified band. Specifically, the specific signal extractor 1414 first selects one of band-pass filters dependent on band, which are prepared in advance for the second predicted signal, and performs a filtering process therewith. Then it outputs the information of the selected filter used for extraction, as specific band signal extraction information through line L1415c to the entropy coder.

The present embodiment showed the example of band-pass filters as filters, but the invention is not limited to this; the filtering process may be carried out using low-pass or high-pass filters. In the present embodiment the processing may be carried out by selecting a filter from the predetermined filter group and inputting the specific band signal extraction information from the outside. The present embodiment showed the example of determining one filter and extracting a signal in a specific band at one location, but it is also possible to determine filters so as to extract components in bands at plural locations. In that case, the information about the filters capable of indicating the bands at the plural locations will be prepared as the specific band signal extraction information.

The present embodiment showed the extraction of pixel values including the spatial frequency components in the specific band directly from the second predicted signal, but the extraction may be carried out after processing of the second predicted signal. For example, the second predicted signal may be processed by deblocking or image filtering. Furthermore, the extraction of the specific band signal may be carried out after calculation of the difference between the first predicted signal and the second predicted signal. In that case, a subtracter is interposed on line L1413 and the first predicted signal is input through line L1411 thereinto.

The extracted specific band signal is output through line L1414b to the second subtracter.

The present embodiment showed the generation of the specific band signal using the filtering process to extract the signal in the partial band of the second predicted signal by the specific band signal extractor, but the second predicted signal may be used as it is. Particularly, when the specific band signal extraction information is unnecessary, the line L1415c does not have to be provided.

The present embodiment showed the example of carrying out the processing on a block basis, but the extraction of the specific signal may be carried out in units of multiple blocks of a predetermined size. In the case of the processing on a block basis, a common band to blocks may be used as a band for the extraction.

The present embodiment showed the example to output the specific band signal directly to the second subtracter 1403, but the signal may be processed before output. For example, the extracted specific band signal may be multiplied by a weight factor W and then the weighted signal may be output.

The present embodiment showed the generation of the band specific information as the specific band signal extraction information, but the specific band signal extraction information may be generated also containing the motion information between the first predicted signal and the second reference picture.

The present embodiment showed the subtraction of the specific band signal after calculation of the difference of the first predicted signal from the target picture signal, but the invention is not limited to this. The subtraction from the target picture signal may be carried out after addition of the first predicted signal and the specific band signal. The present embodiment showed the example presenting the addition example of the first predicted signal and the specific band signal, but it is also possible to adopt weighted addition or the like.

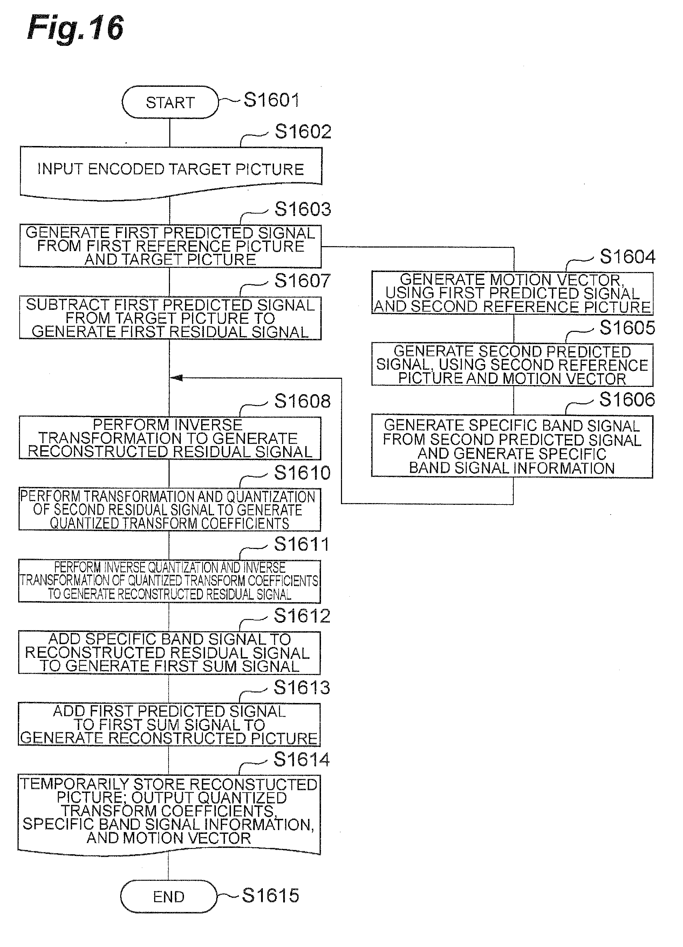

The following will describe a video encoding method being the processing executed by the video encoding device 140 of the present embodiment, using the flowchart of Fig. 16. The video encoding device 140 first receives the target picture as an object to be encoded, through the input terminal 1401 (S1602, input step). Subsequently, the predicted signal generator 1411 generates the first predicted signal using the target picture and a reference picture present in the memory 1410 (S1603, first predicted signal generating step).

Next, the motion searcher 1412 figures out the second motion vector between the first predicted picture and the second reference picture being a reference picture different from the first reference picture (S1604, second predicted signal generating step). A specific method for figuring out the second motion vector is as described previously. Then the motion compensator 1413 generates the second predicted signal, using the second motion vector thus figured out, and the second reference picture (S1605, second predicted signal generating step). Thereafter, the specific band signal extractor 1414 generates the specific band signal being pixels corresponding to the specific band from the second predicted signal and the specific band signal extraction information indicating a type of a filter used for the extraction (S1606, specific band signal extracting step). On the other hand, the first subtracter 1402 generates the first residual signal being the residual between the target picture and the first predicted signal (S 1607, first subtracting step). Furthermore, the second subtracter 1403 subtracts the specific band signal generated in S1606, from the first residual signal to generate the second residual signal (S1608, second subtracting step).

Subsequently, the transformer 1404 transforms the second residual signal by discrete cosine transform and the quantizer 1405 performs quantization to generate quantized transform coefficients (S1610, encoding step). Then the dequantizer 1406 dequantizes the quantized transform coefficients and the inverse transformer 1407 inversely transforms dequantized transform coefficients to generate a reconstructed residual signal (S1611, decoding step). Next, the first adder 1408 adds the specific band signal to the reconstructed residual signal to generate the first sum signal (S1612, first adding step). Furthermore, the first predicted signal is added to the first sum signal generated in S1613, to generate a reconstructed signal (S1613, second adding step). Finally, the reconstructed picture is temporarily stored in the memory 1410 or the like and, at the same time as it, the entropy coder 1420 performs entropy coding of data containing the quantized transform coefficients, the specific band signal extraction information about the specific band signal, and the motion vector and outputs the coded data through the output terminal 1421 (S1614, encoding step and output step). The above described the video encoding device 140 and video encoding method according to the present embodiment.

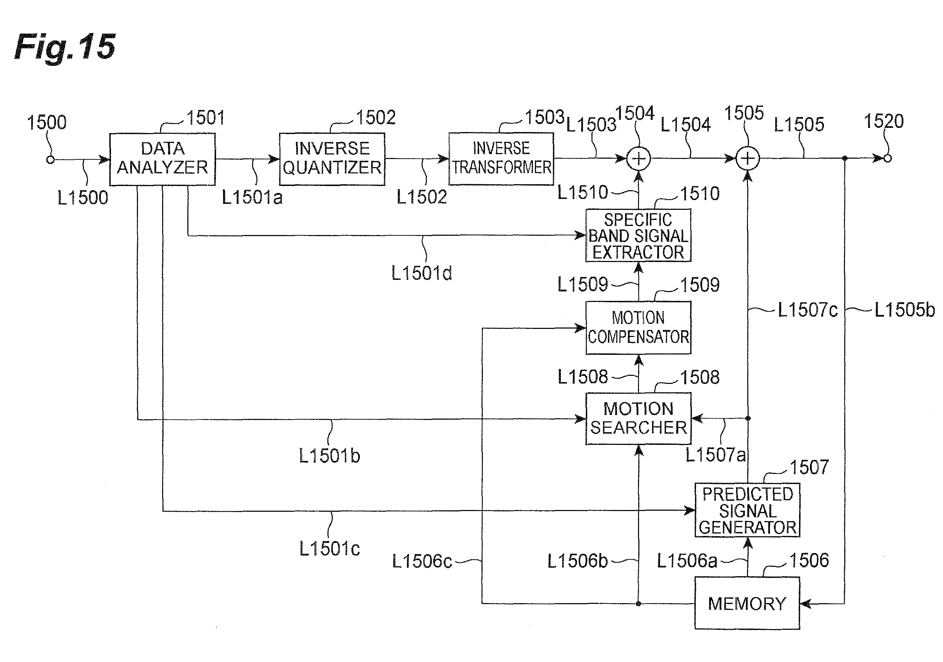

Fig. 15 shows a functional configuration of video decoding device 150 according to the third embodiment of the present invention. The video decoding device 150 is a device that decodes compressed data (encoded data) being the video encoded by the video encoding device 140 of the present embodiment. As shown in Fig. 15, the video decoding device 150 is constructed with input terminal 1500, data analyzer 1501, dequantizer 1502, inverse transformer 1503, first adder 1504, second adder 1505, output terminal 1520, memory 1506, predicted signal generator 1507, motion searcher 1508, motion compensator 1509, and specific band signal extractor 1510.

The input terminal 1500 is an input means that inputs the quantized transform coefficients being the encoded residual signal obtained by predictive coding of the video, the quantization information indicating the quantization value, the motion vector, and the specific band signal extraction information indicating the information about the specific band signal, in the form of compressed data. In the present embodiment the input terminal 1500 inputs the video encoded by the video encoding device 140 of the present embodiment. The input terminal 1500 outputs the input encoded data through line L1500 to the data analyzer 1501.

The data analyzer 1501 is a means that analyzes the compressed data input through line L1500 and that performs an entropy decoding process to extract the quantized transform coefficients resulting from quantization, the quantization information indicating the quantization value, the motion vector, and the specific band signal extraction information. The data analyzer 1501 outputs the quantized transform coefficients resulting from quantization and the quantization information indicating the quantization value, thus extracted, through line L1501a to the dequantizer 1502. The data analyzer 1501 further outputs the information about the second reference picture contained in the specific band signal extraction information, through line L1501b to the motion searcher 1508. If the specific band signal extraction information does not contain the information about the second reference picture, the line L1501b does not have to be provided. Furthermore, the data analyzer 1501 outputs the first motion vector through line L1511c to the predicted signal generator 1507. Furthermore, the data analyzer 1501 outputs the specific band signal extraction information through line L1501d to the specific band signal extractor 1510.

The dequantizer 1502 is a means that dequantizes the quantized transform coefficients resulting from quantization, based on the quantization information indicating the quantization value, which was input through line L1501, to generate the transform coefficients. Namely, the dequantizer 1502 is a function of a decoding means that decodes the encoded residual signal to generate a decoded residual signal. The dequantizer 1502 outputs the generated transform coefficients through line L1502 to the inverse transformer 1503.

The inverse transformer 1503 is a portion that transforms the transform coefficients input through line L1502, by inverse discrete cosine transform to generate a reconstructed residual signal. Namely, the inverse transformer 1503 is a function of the decoding means that decodes the encoded residual signal to generate the decoded residual signal. In the present embodiment the decoded residual signal corresponds to the reconstructed residual signal. The inverse transformer 1503 outputs the reconstructed residual signal thus generated, through line L1503 to the first adder 1504.

The first adder 1504 is an adding means (first adding means) that adds the specific band signal input through line L1510 from the specific band signal extractor 1510, to the reconstructed residual signal input through line L1503, to generate a first sum signal. The details about the specific band signal will be given later. The first adder 1504 outputs the first sum signal thus generated, through line L1504 to the second adder.

The second adder 1505 is an adding means (second adding means) that adds the first predicted signal generated by the predicted signal generator 1507, to the first sum signal input through line L1504, to generate a reconstructed signal. The second adder 1505 outputs the reconstructed signal thus generated, through lines L1505 and L1505b to the memory 1506 to make the memory 1506 store the reconstructed picture as a reference picture. The second adder 1505 also outputs the reconstructed signal thus generated, as a reconstructed picture through line L1505 to the output terminal 1520.

The output terminal 1520 is an output means that outputs the reconstructed picture input through line L1505, to an external device (e.g., a display) or the like.

The memory 1506 is a storage means that stores the reconstructed picture input through line L1505b, as a reference picture to be used for generation of a predicted signal used in decoding of compressed data. The predicted signal generator 1507, motion searcher 1508, and motion compensator 1509 can retrieve the reference picture through line L1506a, through line L1506b, and through line L1506c, respectively.

The predicted signal generator 1507 is a predicted signal generating means (first predicted signal generating means) that generates a first predicted signal for the first sum signal being the sum signal of the reconstructed residual signal generated by the dequantizer 1502 and inverse transformer 1503 and the specific band signal generated by the specific band signal extractor 1510, using a reference picture stored in the memory 1506. The predicted signal generator 1507 outputs the predicted signal generated, through line L1507a to the motion searcher 1508. The predicted signal generator 1507 also outputs the first predicted signal generated, through line L1507b to the first subtracter 1504. Furthermore, the predicted signal generator 1507 outputs the first predicted signal generated, through line L1507c to the second adder 1505.

The motion searcher 1508 is a motion searching means that refers to the specific band signal extraction information input from the data analyzer 1501, to retrieve a predetermined second reference picture stored in the memory 1506, through line L1506b, receives the first predicted signal through line L1507a, and calculates the motion vector between two pictures. Namely, the motion searcher 1508 is a function of a second predicted signal generating means for generating a second predicted signal. The motion searcher 1508 performs the motion detection using the block matching method as usual in the present embodiment and determines an optimal motion vector to a position giving a reference block satisfying a standard for a target block. Then the motion searcher 1508 outputs the motion vector thus obtained, through line L1508 to the motion compensator 1509.

The standard of the search for the motion vector may be a standard based on a residual signal of a pixel signal (e.g., to select a block with a minimum error like SAD or SSD), or use of a cost function taking coded bits into account. The motion vector may be acquired also taking other information into consideration. For example, the search may be carried out using information such as the width of the band.

It is preferably necessary that the standard of the motion vector search be identical with the standard used in the motion searcher 1412 in the video encoding device 140. Therefore, if the standard is not preliminarily defined in the video encoding device, the specific band signal extraction information may contain information about the standard used in the search for the motion vector.

The standard of the search for the motion vector may be a standard based on a residual signal of a pixel signal (e.g., to select a block with a minimum error like SAD or SSD), or use of a cost function taking coded bits into account. The motion vector may be acquired also taking other information into consideration. For example, the search may be carried out using information such as broadness of the band.

In the present embodiment the motion search was carried out using the first predicted signal, but the motion search may be carried out after execution of processing of the first predicted signal. For example, the motion search may be performed after execution of filtering with a block eliminating filter or a low-pass filter.

In the present embodiment the motion vector was determined by the block matching method, but how to determine the motion vector is not limited to it. For example, the motion vector may be searched for by a technique such as optical flow.

In the present embodiment the motion vector was figured out from the relation between pictures, but it may be generated by making use of the first motion vector (MVx1, MVy1) restored by the data analyzer 1501. For example, the second motion vector (MVx2, MVy2) may be one at a fixed magnification ratio of the first motion vector (MVx1, MVy1). On that occasion, when the magnification ratio is sent as additional information, the processing may be carried out based on the restored information and the predetermined value may be used. The fixed magnification ratio may be determined by making use of a relation of a reference frame. For example, the magnification ratio may be one using scaling according to the numbers of frames in the reference picture and in the target picture.

In the present embodiment the motion search was carried out for generation of the second predicted signal, but the restored first motion vector (MVx1, MVy1) may be handled as the second motion vector (MVx2, MVy2). In this case, the motion search is unnecessary for the generation of the second predicted signal, and thus the motion searcher 1508 does not have to be provided.

The motion compensator 1509 is a motion compensating means that generates a second predicted signal using the second motion vector generated by the motion searcher 1508 and input through line L1508 and the second reference picture input from the memory 1506. Namely, the motion compensator 1509 is a function of a second predicted signal generating means for generating the second predicted signal. The motion compensator 1509 generates the second predicted signal and outputs the second predicted signal through line L 1509 to the specific band signal extractor 1510.

Next, the specific band signal extractor 1510 is a specific band signal extracting means that refers to the specific band signal extraction information decoded by the data analyzer 1501 and input through line L1501d, to extract a signal in a specific band in the second predicted signal generated by the motion compensator 1509 and input through line L1509. Specifically, a band in the second predicted signal is specified based on the specific band signal extraction information and the signal in the specified band is extracted. Specifically, the specific signal extractor 1509 first selects the filter designated for the second predicted signal in the specific band signal extraction information and performs a filtering process therewith.

In the present embodiment pixel values including spatial frequency components in the specific band are extracted directly from the second predicted signal, but the extraction may be carried out after processing of the second predicted signal. For example, the second predicted signal may be processed by deblocking or image filtering. The extraction of the specific band signal may be carried out after calculation of the difference between the first predicted signal and the second predicted signal. In that case, a subtracter is interposed on line L1509 and the first predicted signal is input thereinto through line L1507c.

The specific band signal extractor 1511 outputs the specific band signal generated, through line L1510 to the first adder 1504. The above described the functional configuration of the video decoding device 150.

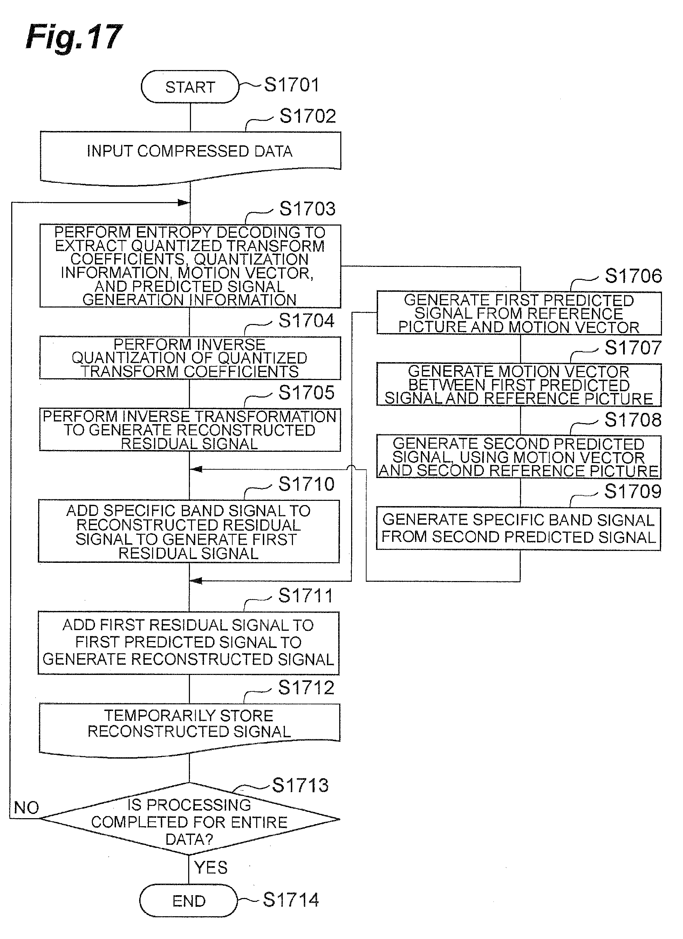

The following will describe a video decoding method being the processing executed by the video decoding device 150 of the present embodiment, using the flowchart of Fig. 17. In the video decoding device 150, the input terminal 1500 first inputs the compressed data containing the data of the encoded residual signal, the data about the motion vector, and the predicted signal generation information (S1702, input step). Subsequently, the data analyzer 1501 performs the entropy decoding process on the compressed data to extract the quantized transform coefficients, the information about quantization, the motion vector about generation of the predicted signal, and the specific band signal extraction information containing the information necessary for generation of the specific band signal for decoding (S1703). Next, the dequantizer 502 dequantizes the quantized transform coefficients to generate dequantized transform coefficients (S1704, decoding step). Then the inverse transformer 503 transforms the dequantized transform coefficients by inverse discrete cosine transform to generate a reconstructed residual signal (S1705, decoding step). On the other hand, the predicted signal generator 1507 generates the first predicted signal, based on the first reference picture and the decoded first motion vector (S 1706, first predicted signal generating step).

Furthermore, the motion searcher 1508 generates the second motion vector between the first predicted signal and the second reference picture with reference to the specific band signal extraction information (S1707, second predicted signal generating step). Then the motion compensator 1509 generates the second predicted signal using the second motion vector and the second reference picture (S 1708, second predicted signal generating step). Thereafter, the specific band signal extractor 1510 generates the specific band signal from the second predicted signal with reference to the specific band signal extraction information (S1709, specific band signal extracting step). The details about the method of generating the specific band signal are as described above. Then the first adder 1504 adds the specific band signal generated in step S1709, to the reconstructed residual signal to generate the first sum signal (S1710, first adding step). Then the second adder 1505 adds the first predicted signal generated in step S1706, to the first sum signal to generate a reconstructed picture and the reconstructed picture is temporarily stored in the memory 1506, for decoding of the next picture (S1712, second adding step), and is output through the output terminal 1520 (S1713, output step). This processing is repeated before entire data is decoded (S1714). The above described the video decoding device 150 and video decoding method according to the present embodiment.

According to the third embodiment of the present invention, as described above, the spatial frequency components in the predetermined band are extracted from the second predicted signal generated from the second reference picture and the spatial frequency components, together with the first predicted signal, are used for generation of the residual signal of the object to be encoded. Therefore, the spatial frequency components in the band not included in the first predicted signal are used for generation of the residual signal. For this reason, even if the video as an object to be encoded is a mixture of pictures of different bandwidths, when the bandwidth of the target reference picture is narrower than that of the first target picture, the target reference picture is compensated for the spatial frequency components in the band not included therein, so as to reduce the residual signal in the band, enabling the encoding and decoding at a high compression rate.

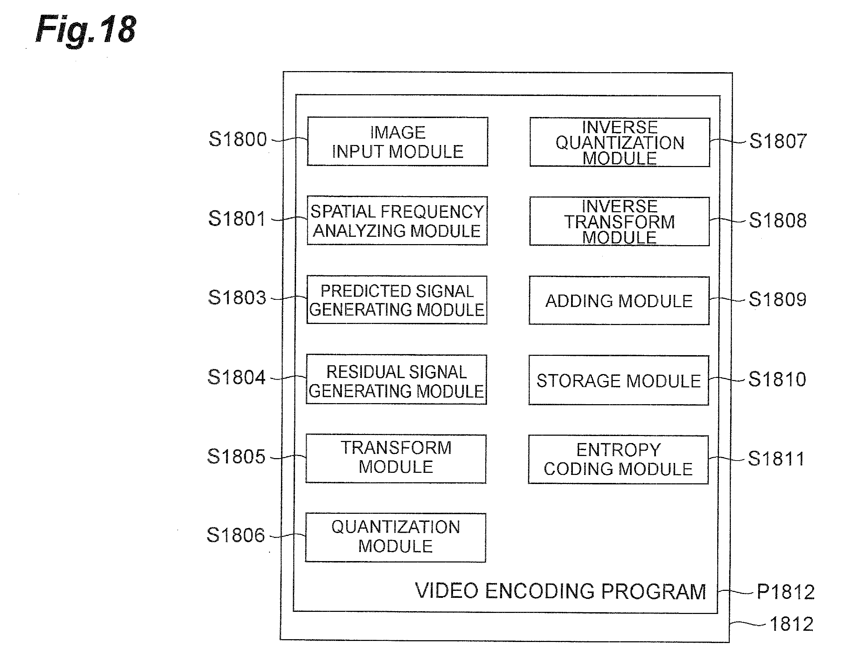

The below will describe a video encoding program to make a computer operate as a video encoding device according to the present invention. Fig. 18 is a drawing showing a configuration of video encoding program P 1812 according to an embodiment of the present invention, along with a recording medium 1812. The recording medium 1812 is, for example, a recording medium such as a floppy disk, CD-ROM, DVD, or ROM, or a semiconductor memory or the like. The video encoding program P 1812 enables a computer to operate as the video encoding device according to the present invention. The details will be explained using Fig. 18.

As shown in Fig. 18, the video encoding program P1812 is provided with image input module 1800, spatial frequency analyzing module 1801, predicted signal generating module 1803, residual signal generating module 1804, transforming module 1805, quantizing module 1806, dequantizing module 1807, inverse transforming module 1808, adding module 1809, storage module 1810, and entropy coding module 1811, which are similar to respective corresponding elements of the input terminal 101, spatial frequency analyzer 120, predicted signal generator 121, subtracter 102, transformer 103, quantizer 104, dequantizer 105, inverse transformer 106, adder 107, memory 108, and entropy coder 130 shown in Fig. 1.

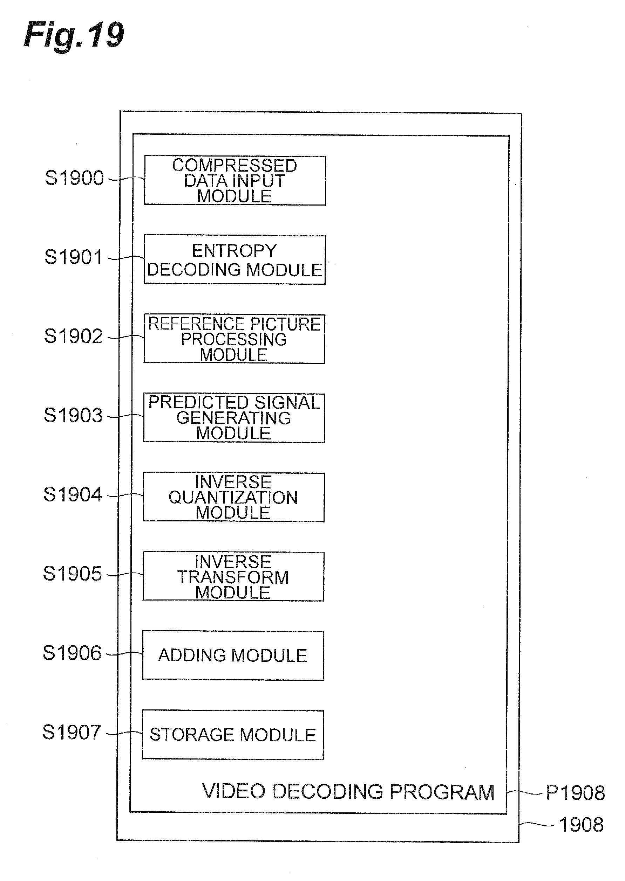

The below will describe a video decoding program for letting a computer operate as a video decoding device according to the present invention. Fig. 19 is a drawing showing a configuration of video decoding program P 1908 according to an embodiment of the present invention, along with a recording medium 1908. The video decoding program P1908 enables a computer to operate as a video decoding device according to the present invention. The details will be explained using Figs. 19, 20, and 21.

As shown in Fig. 19, the video decoding program P1908 is provided with compressed data input module 1900, entropy decoding module 1901, reference picture processing module 1902, predicted signal generating module 1903, dequantizing module 1904, inverse transforming module 1905, adding module 1906, and storage module 1907, which are similar to respective corresponding elements of the input terminal 500, data analyzer 501, reference picture processor 508, predicted signal generator 507, dequantizer 502, inverse transformer 503, adder 504, and memory 506 shown in Fig. 5.

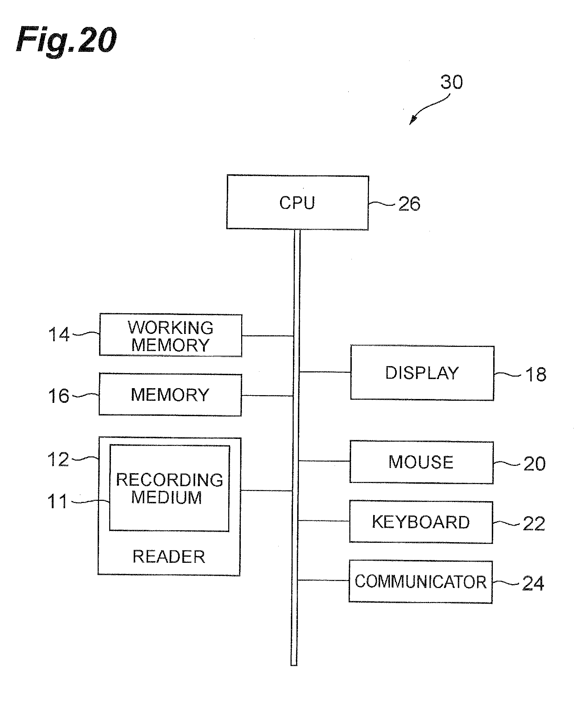

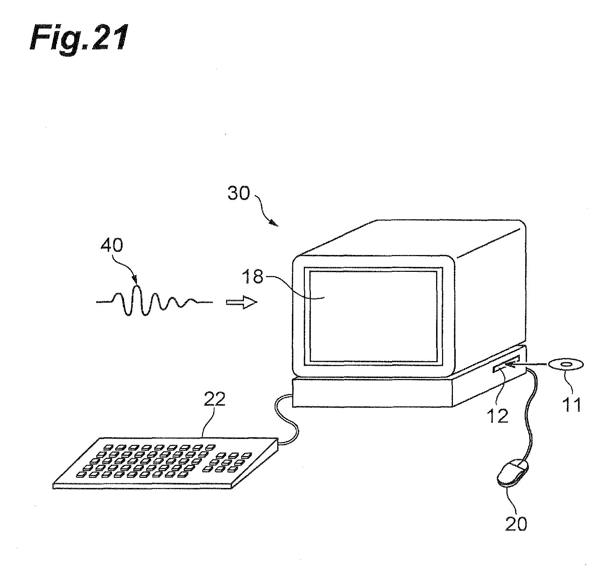

Fig. 20 is a drawing showing a hardware configuration of a computer for executing a program recorded in a recording medium and Fig. 21 a perspective view of a computer for executing a program stored in a recording medium. The term "computer" herein embraces a DVD player, a set top box, a cell phone, etc. with a CPU to perform processing and control based on software.

As shown in Fig. 21, computer 30 is provided with reading device 12 such as a floppy disk drive, a CD-ROM drive, or a DVD drive, working memory (RAM) 14 in which an operating system is resident, memory 16 for storing a program stored in the recording medium 11, display device 18 such as a display, mouse 20 and keyboard 22 as input devices, communication device 24 for transmission and reception of data or the like, and CPU 26 to control execution of the program. When the recording medium 11 is inserted into the reading device 12, the computer 30 becomes accessible to the video encoding program P1812 or the video decoding program P1908 stored in the recording medium 11, through the reading device 12 and becomes operable as the video encoding device or the video decoding device according to the present invention, based on the video encoding program P1812 or the video decoding program P1908.

As shown in Fig. 21, the video encoding program P 1812 or the video decoding program P1908 may be one provided as computer data signal 40 superimposed on a carrier wave, through a network. In this case, the computer 30 saves the video encoding program P1812 or the video decoding program P1908 received by the communication device 24, into the memory 16 and becomes able to execute the video encoding program P 1812 or the video decoding program P 1908.

It is also feasible to realize the video encoding programs or the video decoding programs for letting a computer operate as the video encoding devices 10a, 140 or the video decoding devices 110, 150 in the above-described second and third embodiments, with modules having functions similar to the respective constituent elements of each device as in the above example.

**Claims**

1. A video encoding device comprising:

   input means to input a target picture as an object to be encoded, from a plurality of pictures forming a video;
   storage means to store a reference picture used for generation of a predicted signal for the target picture input by the input means;
   predicted signal generating means to obtain at least two band-dependent predicted signals for a predetermined band of the target picture, using different reference pictures dependent on band among reference pictures stored in the storage means, and to generate predicted signal generation information for generation of the predicted signal for the target picture by a predetermined method using the band-dependent predicted signals obtained;
   subtracting means to obtain a difference between the target picture and the predicted signal generated by the predicted signal generating means, to generate a residual signal;
   encoding means to encode the residual signal generated by the subtracting means, to generate an encoded residual signal;
   decoding means to decode the encoded residual signal generated by the encoding means, to generate a decoded residual signal;
   adding means to add the predicted signal generated by the predicted signal generating means, to the decoded residual signal generated by the decoding means, to generate a reconstructed picture, and to make the storage means store the generated reconstructed picture as a reference picture; and
   output means to output the encoded residual signal generated by the encoding means.

2. A video encoding device comprising:

   input means to input a target picture as an object to be encoded, from a plurality of pictures forming a video;
   storage means to store a reference picture used for generation of a predicted signal for the target picture input by the input means;
   spatial frequency extracting means to extract spatial frequency components in a predetermined band from a predetermined extraction reference picture except for a target reference picture used as a picture for prediction of the target picture among reference pictures stored in the storage means, and to generate spatial frequency extraction information indicating an extracted content of the spatial frequency components;
   predicted signal generating means to generate the predicted signal for the target picture from the target reference picture and the spatial frequency components extracted by the spatial frequency extracting means, and to generate predicted signal generation information indicating a generation content of the predicted signal while containing the spatial frequency extraction information generated by the spatial frequency extracting means;
   subtracting means to obtain a difference between the target picture and the predicted signal generated by the predicted signal generating means, to generate a residual signal;
   encoding means to encode the residual signal generated by the subtracting means, to generate an encoded residual signal;
   decoding means to decode the encoded residual signal generated by the encoding means, to generate a decoded residual signal;
   adding means to add the predicted signal generated by the predicted signal generating means, to the decoded residual signal generated by the decoding means, to generate a reconstructed picture, and to make the storage means store the generated reconstructed picture as a reference picture; and
   output means to output the encoded residual signal generated by the encoding means and the predicted signal generation information generated by the predicted signal generating means.

3. The video encoding device according to claim 2, wherein the spatial frequency extracting means acquires information indicating spatial frequency components of the target picture and the target reference picture, makes a comparison between the acquired information, and determines the predetermined band for extraction of the spatial frequency components from the extraction reference picture, based on a result of the comparison.

4. The video encoding device according to claim 2 or 3, wherein the spatial frequency extracting means extracts the spatial frequency components using a relation of motion between the target reference picture and the extraction reference picture.

5. The video encoding device according to claim 4, wherein the spatial frequency extracting means subjects the extraction reference picture to motion compensation relative to the target reference picture and extracts the spatial frequency components from the extraction reference picture subjected to the motion compensation.

6. The video encoding device according to any one of claims 2 to 5, wherein the spatial frequency extracting means acquires information indicating spatial frequency components of the target picture, the target reference picture, and a reference picture other than the target reference picture stored in the storage means, and determines the extraction reference picture, based on at least any part of the acquired information.

7. The video encoding device according to any one of claims 2 to 6, wherein the predicted signal generating means subjects the target reference picture to processing using the spatial frequency components extracted by the spatial frequency extracting means, and generates the predicted signal using the target reference picture subjected to the processing.

8. The video encoding device according to any one of claims 2 to 6, wherein the predicted signal generating means generates the predicted signal for the target picture using the target reference picture, subjects the generated predicted signal to processing using the spatial frequency components extracted by the spatial frequency extracting means, and defines the predicted signal subjected to the processing, as the predicted signal for the target picture.

9. The video encoding device according to claim 7 or 8, wherein the storage means stores the picture generated by the processing by the predicted signal generating means, as the reference picture.

10. A video encoding device comprising:

    input means to input a target picture as an object to be encoded, from a plurality of pictures forming a video;
    storage means to store a reference picture used for generation of a predicted signal for the target picture input by the input means;
    first predicted signal generating means to generate a predicted signal in a predetermined band of the target picture from a first reference picture stored in the storage means;
    first subtracting means to obtain a difference between the target picture and the first predicted signal generated by the first predicted signal generating means, to generate a first residual signal;
    second predicted signal generating means to generate a second predicted signal for the first predicted signal from at least one second reference picture different from the first reference picture, which is stored in the storage means;
    specific band signal extracting means to extract a specific band signal corresponding to spatial frequency components in a predetermined band of the second predicted signal generated by the second predicted signal generating means, and to generate specific band signal extraction information indicating an extracted content of the specific band signal;
    second subtracting means to obtain a difference between the first residual signal generated by the first subtracting means and the specific band signal extracted by the specific band signal extracting means, to generate a second residual signal;
    encoding means to encode the second residual signal generated by the second subtracting means, by a predetermined method to generate an encoded residual signal;
    decoding means to decode the encoded residual signal generated by the encoding means, to generate a decoded residual signal;
    first adding means to add the specific band signal generated by the specific band signal extracting means, to the decoded residual signal generated by the decoding means, to generate a first sum signal;
    second adding means to add the first predicted signal generated by the first predicted signal generating means, to the first sum signal generated by the first adding means, to generate a reconstructed picture, and to make the storage means store the generated reconstructed picture as a reference picture; and
    output means to output the encoded residual signal generated by the encoding means and the specific band signal extraction information generated by the specific band signal extracting means.

**11.** A video decoding device comprising:

storage means to store a reconstructed picture as a reference picture for generation of a predicted signal used in decoding an encoded video;
input means to input an encoded residual signal resulting from predictive coding of the video;
decoding means to decode the encoded residual signal input by the input means, to generate a decoded residual signal;
predicted signal generating means to generate at least two band-dependent predicted signals for a predetermined band of the decoded residual signal generated by the decoding means, using different reference pictures dependent on band among reference pictures stored in the storage means, and to generate predicted signal generation information for generation of a predicted signal for the decoded residual signal by a predetermined method using the band-dependent predicted signals generated;
adding means to add the predicted signal generated by the predicted signal generating means, to the decoded residual signal to generate a reconstructed picture, and to make the storage means store the generated reconstructed picture; and
output means to output the reconstructed picture generated by the adding means.

**12.** A video decoding device comprising:

storage means to store a reconstructed picture as a reference picture for generation of a predicted signal used in decoding an encoded video;
input means to input an encoded residual signal resulting from predictive coding of the video, and predicted signal generation information indicating a generation content of the predicted signal;
decoding means to decode the encoded residual signal input by the input means, to generate a decoded residual signal;
predicted signal generating means to refer to the predicted signal generation information input by the input means, to generate a predicted signal for the decoded residual signal generated by the decoding means, using a reference picture stored in the storage means;
adding means to add the predicted signal generated by the predicted signal generating means, to the decoded residual signal generated by the decoding means, to generate a reconstructed picture, and to make the storage means store the generated reconstructed picture; and
output means to output the reconstructed picture generated by the adding means,
wherein the predicted signal generation information contains the spatial frequency extraction information indicating an extracted content of spatial frequency components in a predetermined band from a predetermined reference picture stored in the storage means, and
wherein the predicted signal generating means refers to the frequency extraction information to extract spatial frequency components in the predetermined band from a predetermined extraction reference picture stored in the storage means, and generates the predicted signal from a target reference picture used as a picture for generation of the predicted signal among reference pictures stored in the storage means, and the spatial frequency components extracted.

**13.** The video decoding device according to claim 12, wherein the predicted signal generating means extracts the spatial frequency components using a relation of motion between the target reference picture and the extraction reference picture.

**14.** The video decoding device according to claim 13, wherein the predicted signal generating means subjects the extraction reference picture to motion compensation relative to the target reference picture, and extracts the spatial frequency components from the extraction reference picture subjected to the motion compensation.

**15.** The video decoding device according to any one of claims 12 to 14, wherein the predicted signal generating means subjects the target reference picture to processing using the spatial frequency components extracted, and generates the predicted signal using the target reference picture subjected to the processing.

**16.** The video decoding device according to any one of claims 12 to 14, wherein the predicted signal generating means generates the predicted signal for the target picture with the target reference picture, subjects the generated predicted signal to processing using the spatial frequency components extracted, and defines the predicted signal subjected to the processing, as the predicted signal for the target picture.

**17.** The video decoding device according to claim 15 or 16, wherein the storage means stores the picture generated by the processing by the predicted signal generating means, as the reference picture.

**18.** A video decoding device comprising:

storage means to store a reconstructed picture as a reference picture for generation of a predicted signal used in decoding an encoded video;

input means to input an encoded residual signal resulting from predictive coding of the video, and specific band signal extraction information;

decoding means to decode the encoded residual signal input by the input means, to generate a decoded residual signal;

first predicted signal generating means to generate a predicted signal as a first predicted signal for the decoded residual signal generated by the decoding means, using a first reference picture stored in the storage means;

second predicted signal generating means to generate a second predicted signal for the first predicted signal from at least one second reference picture different from the first reference picture, which is stored in the storage means;

specific band signal extracting means to refer to the specific band signal extraction information input by the input means, to extract a specific band signal corresponding to spatial frequency components in a predetermined band of the second predicted signal generated by the second predicted signal generating means;

first adding means to add the specific band signal extracted by the specific band signal extracting means, to the decoded residual signal generated by the decoding means, to generate a first decoded residual signal;

second adding means to add the first predicted signal generated by the first predicted signal generating means, to the first decoded residual signal generated by the first adding means, to generate a reconstructed picture, and to make the storage means store the generated reconstructed picture; and

output means to output the reconstructed picture generated by the second adding means,

wherein the specific band signal extraction information contains the specific band signal extraction information indicating an extracted content of the spatial frequency components in the predetermined band of the second predicted signal with the predetermined second reference picture stored in the storage means and the first reference picture subjected to motion compensation relative to the first predicted signal, and

wherein the specific band signal extracting means refers to the specific band signal extraction information to extract a signal corresponding to the spatial frequency components in the predetermined band from the second predicted signal, and generates the specific band signal.

**19.** A video encoding method comprising:

an input step of inputting a target picture as an object to be encoded, from a plurality of pictures forming a video;

a predicted signal generating step of obtaining at least two band-dependent predicted signals for a predetermined band of the target picture, using different reference pictures dependent on band among reference pictures stored for generation of a predicted signal for the target picture input in the input step, and generating predicted signal generation information for generation of the predicted signal for the target picture by a predetermined method using the band-dependent predicted signals obtained;

a subtracting step of obtaining a difference between the target picture and the predicted signal generated in the predicted signal generating step, to generate a residual signal;

an encoding step of encoding the residual signal generated in the subtracting step, to generate an encoded residual signal;

a decoding step of decoding the encoded residual signal generated in the encoding step, to generate a decoded residual signal;

an adding step of adding the predicted signal generated in the predicted signal generating step, to the decoded residual signal generated in the decoding step, to generate a reconstructed picture, and making the generated reconstructed picture stored as a reference picture; and

an output step of outputting the encoded residual signal generated in the encoding step.

**20.** A video encoding method comprising:

an input step of inputting a target picture as an object to be encoded, from a plurality of pictures forming a video;

a spatial frequency extracting step of extracting spatial frequency components in a predetermined band from a predetermined extraction reference picture except for a target reference picture used as a picture for prediction of the target picture among reference pictures stored for generation of a predicted signal for the target picture input in the input step, and generating spatial frequency extraction information indicating an extracted content of the spatial frequency components;

a predicted signal generating step of generating the predicted signal for the target picture from the target reference picture and the spatial frequency components extracted in the spatial frequency extracting step, and generating predicted signal generation information indicating a generation content of the predicted signal while containing the spatial frequency extraction information generated in the spatial frequency extracting step;

a subtracting step of obtaining a difference between the target picture and the predicted signal generated in the predicted signal generating step, to generate a residual signal;

an encoding step of encoding the residual signal generated in the subtracting step, to generate an encoded residual signal;

a decoding step of decoding the encoded residual signal generated in the encoding step, to generate a decoded residual signal;

an adding step of adding the predicted signal generated in the predicted signal generating step, to the decoded residual signal generated in the decoding step, to generate a reconstructed picture, and making the generated reconstructed picture stored as a reference picture; and

an output step of outputting the encoded residual signal generated in the encoding step and the predicted signal generation information generated in the predicted signal generating step.

21. A video encoding method comprising:

an input step of inputting a target picture as an object to be encoded, from a plurality of pictures forming a video;

a first predicted signal generating step of generating a predicted signal for a predetermined band of the target picture from a first reference picture stored for generation of the predicted signal for the target picture input in the input step;

a first subtracting step of obtaining a difference between the target picture and the first predicted signal generated in the first predicted signal generating step, to generate a first residual signal;

a second predicted signal generating step of generating a second predicted signal for the first predicted signal from at least one second reference picture different from the first reference picture, which is stored for generation of the predicted signal for the target picture input in the input step;

a specific band signal extracting step of extracting a specific band signal corresponding to spatial frequency components in a predetermined band of the second predicted signal generated in the second predicted signal generating step, and generating specific band signal extraction information indicating an extracted content of the specific band signal;

a second subtracting step of obtaining a difference between the first residual signal generated in the first subtracting step and the specific band signal extracted in the specific band signal extracting step, to generate a second residual signal;

an encoding step of encoding the second residual signal generated in the second subtracting step, by a predetermined method to generate an encoded residual signal;

a decoding step of decoding the encoded residual signal generated in the encoding step, to generate a decoded residual signal;

a first adding step of adding the specific band signal generated in the specific band signal extracting step, to the decoded residual signal generated in the decoding step, to generate a first sum signal;

a second adding step of adding the first predicted signal generated in the first predicted signal generating step, to the first sum signal generated in the first adding step, to generate a reconstructed picture, and making the generated reconstructed picture stored as a reference picture; and

an output step of outputting the encoded residual signal generated in the encoding step and the specific band signal extraction information generated in the specific band signal extracting step.

22. A video decoding device comprising:

an input step of inputting an encoded residual signal resulting from predictive coding of a video;

a decoding step of decoding the encoded residual signal input by the input means, to generate a decoded residual signal;

a predicted signal generating step of generating at least two band-dependent predicted signals for a predetermined band of the decoded residual signal generated in the decoding step, using different reference pictures dependent on band among reference pictures as reconstructed pictures stored for generation of a predicted signal used in decoding the encoded video, and generating predicted signal generation information for generation of a predicted signal for the decoded residual signal by a predetermined method using the band-dependent predicted signals generated;

an adding step of adding the predicted signal generated in the predicted signal generating step, to the decoded residual signal to generate a reconstructed picture, and making the generated reconstructed picture stored; and

an output step of outputting the reconstructed picture generated by the adding means.

23. A video decoding method comprising:

an input step of inputting an encoded residual signal resulting from predictive coding of a video, and predicted signal generation information indicating a generation content of a predicted signal;

a decoding step of decoding the encoded residual signal input in the input step, to generate a decoded residual signal;

a predicted signal generating step of referring to the predicted signal generation information input in the input step, to generate a predicted signal for the decoded residual signal generated in the decoding step, using a reference picture as a reconstructed signal stored for generation of the predicted signal used in decoding the encoded video;

an adding step of adding the predicted signal generated in the predicted signal generating step, to the decoded residual signal generated in the decoding step, to generate a reconstructed picture, and making the generated reconstructed picture stored; and

an output step of outputting the reconstructed picture generated in the adding step,

wherein the predicted signal generation information contains the spatial frequency extraction information indicating an extracted content of spatial frequency components in a predetermined band from a predetermined reference picture stored, and

wherein the predicted signal generating step comprises referring to the frequency extraction information to extract spatial frequency components in the predetermined band from a predetermined extraction reference picture stored, and generating the predicted signal from a target reference picture used as a picture for generation of the predicted signal among reference pictures stored, and the spatial frequency components extracted.

24. A video decoding method comprising:

an input step of inputting an encoded residual signal resulting from predictive coding of a video, and specific band signal extraction information;

a decoding step of decoding the encoded residual signal input in the input step, to generate a decoded residual signal;

a first predicted signal generating step of generating a predicted signal as a first predicted signal for the decoded residual signal generated in the decoding step, using a first reference picture as a reconstructed picture stored for generation of a predicted signal used in decoding the encoded video;

a second predicted signal generating step of generating a second predicted signal for the first predicted signal from at least one second reference picture different from the first reference picture, which is stored for generation of the predicted signal used in decoding the encoded video;

a specific band signal extracting step of referring to the specific band signal extraction information input in the input step, to extract a specific band signal corresponding to spatial frequency components in a predetermined band of the second predicted signal generated in the second predicted signal generating step;

a first adding step of adding the specific band signal extracted in the specific band signal extracting step, to the decoded residual signal generated in the decoding step, to generate a first decoded residual signal;

a second adding step of adding the first predicted signal generated in the first predicted signal generating step, to the first decoded residual signal generated in the first adding step, to generate a reconstructed picture, and making the generated reconstructed picture stored; and

an output step of outputting the reconstructed picture generated in the second adding step,

wherein the specific band signal extraction information contains the specific band signal extraction information indicating an extracted content of the spatial frequency components in the predetermined band of the second predicted signal with the predetermined second reference picture and the first reference picture subjected to motion compensation relative to the first predicted signal, and

wherein the specific band signal extracting step comprises referring to the specific band signal extraction information to extract a signal corresponding to the spatial frequency components in the predetermined band from the second predicted signal, and generating the specific band signal.

25. A video encoding program for letting a computer execute:

an input function to input a target picture as an object to be encoded, from a plurality of pictures forming a video;

a storage function to store a reference picture used for generation of a predicted signal for the target picture input by the input function;

a predicted signal generating function to obtain at least two band-dependent predicted signals for a predetermined band of the target picture, using different reference pictures dependent on band among reference pictures stored in the storage function, and to generate predicted signal generation information for generation of the predicted signal for the target picture by a predetermined method using the band-dependent predicted signals obtained;

a subtracting function to obtain a difference between the target picture and the predicted signal generated by the predicted signal generating function, to generate a residual signal;

an encoding function to encode the residual signal generated by the subtracting function, to generate an encoded residual signal;

a decoding function to decode the encoded residual signal generated by the encoding function, to generate a decoded residual signal;

an adding function to add the predicted signal generated by the predicted signal generating function, to the decoded residual signal generated by the decoding function, to generate a reconstructed picture, and to make the storage function store the generated reconstructed picture as a reference picture; and

an output function to output the encoded residual signal generated by the encoding function.

**26.** A video encoding program for letting a computer execute:

an input function to input a target picture as an object to be encoded, from a plurality of pictures forming a video;

a storage function to store a reference picture used for generation of a predicted signal for the target picture input by the input function;

a spatial frequency extracting function to extract spatial frequency components in a predetermined band from a predetermined extraction reference picture except for a target reference picture used as a picture for prediction of the target picture among reference pictures stored in the storage function, and to generate spatial frequency extraction information indicating an extracted content of the spatial frequency components;

a predicted signal generating function to generate the predicted signal for the target picture from the target reference picture and the spatial frequency components extracted by the spatial frequency extracting function, and to generate predicted signal generation information indicating a generation content of the predicted signal while containing the spatial frequency extraction information generated by the spatial frequency extracting function;

a subtracting function to obtain a difference between the target picture and the predicted signal generated by the predicted signal generating function, to generate a residual signal;

an encoding function to encode the residual signal generated by the subtracting function, to generate an encoded residual signal;

a decoding function to decode the encoded residual signal generated by the encoding function, to generate a decoded residual signal;

an adding function to add the predicted signal generated by the predicted signal generating function, to the decoded residual signal generated by the decoding function, to generate a reconstructed picture, and to make the storage function store the generated reconstructed picture as a reference picture; and

an output function to output the encoded residual signal generated by the encoding function and the predicted signal generation information generated by the predicted signal generating function.

**27.** A video encoding program for letting a computer execute:

an input function to input a target picture as an object to be encoded, from a plurality of pictures forming a video;

a storage function to store a reference picture used for generation of a predicted signal for the target picture input by the input function;

a first predicted signal generating function to generate a predicted signal in a predetermined band of the target picture from a first reference picture stored in the storage function;

a first subtracting function to obtain a difference between the target picture and the first predicted signal generated by the first predicted signal generating function, to generate a first residual signal;

a second predicted signal generating function to generate a second predicted signal for the first predicted signal from at least one second reference picture different from the first reference picture, which is stored in the storage function;

a specific band signal extracting function to extract a specific band signal corresponding to spatial frequency components in a predetermined band of the second predicted signal generated by the second predicted signal generating function, and to generate specific band signal extraction information indicating an extracted content of the specific band signal;

a second subtracting function to obtain a residual between the first residual signal generated by the first subtracting function and the specific band signal extracted by the specific band signal extracting function, to generate a second residual signal;

an encoding function to encode the second residual signal generated by the second subtracting function, by a predetermined method to generate an encoded residual signal;

a decoding function to decode the encoded residual signal generated by the encoding function, to generate a decoded residual signal;

a first adding function to add the specific band signal generated by the specific band signal extracting function, to the decoded residual signal generated by the decoding function, to generate a first sum signal;

a second adding function to add the first predicted signal generated by the first predicted signal generating function, to the first sum signal generated by the first adding function, to generate a reconstructed picture, and to make the storage function store the generated reconstructed picture as a reference picture; and

an output function to output the encoded residual signal generated by the encoding function and the specific band signal extraction information generated by the specific band signal extracting function.

28. A video decoding program for letting a computer execute:

a storage function to store a reconstructed picture as a reference picture for generation of a predicted signal used in decoding an encoded video;

an input function to input an encoded residual signal resulting from predictive coding of the video;

a decoding function to decode the encoded residual signal input by the input function, to generate a decoded residual signal;

a predicted signal generating function to generate at least two band-dependent predicted signals for a predetermined band of the decoded residual signal generated by the decoding function, using different reference pictures dependent on band among reference pictures stored in the storage function, and to generate predicted signal generation information for generation of a predicted signal for the decoded residual signal by a predetermined method, using the band-dependent predicted signals generated;

an adding function to add the predicted signal generated by the predicted signal generating function, to the decoded residual signal to generate a reconstructed picture, and to make the storage function store the generated reconstructed picture; and

an output function to output the reconstructed picture generated by the adding function.

29. A video decoding program for letting a computer execute:

a storage function to store a reconstructed picture as a reference picture for generation of a predicted signal used in decoding an encoded video;

an input function to input an encoded residual signal resulting from predictive coding of the video, and predicted signal generation information indicating a generation content of the predicted signal;

a decoding function to decode the encoded residual signal input by the input function, to generate a decoded residual signal;

a predicted signal generating function to refer to the predicted signal generation information input by the input function, to generate a predicted signal for the decoded residual signal generated by the decoding function, using a reference picture stored in the storage function;

an adding function to add the predicted signal generated by the predicted signal generating function, to the decoded residual signal generated by the decoding function, to generate a reconstructed picture, and to make the storage function store the generated reconstructed picture; and

an output function to output the reconstructed picture generated by the adding function,

wherein the predicted signal generation information contains the spatial frequency extraction information indicating an extracted content of spatial frequency components in a predetermined band from a predetermined reference picture stored in the storage function, and

wherein the predicted signal generating function refers to the frequency extraction information to extract spatial frequency components in the predetermined band from a predetermined extraction reference picture stored in the storage function, and generates the predicted signal from a target reference picture used as a picture for generation of the predicted signal among reference pictures stored in the storage, and the spatial frequency components extracted.

**30.** A video decoding program for letting a computer execute:

a storage function to store a reconstructed picture as a reference picture for generation of a predicted signal used in decoding an encoded video;

an input function to input an encoded residual signal resulting from predictive coding of the video, and specific band signal extraction information;

a decoding function to decode the encoded residual signal input by the input function, to generate a decoded residual signal;

a first predicted signal generating function to generate a predicted signal as a first predicted signal for the decoded residual signal generated by the decoding function, using a first reference picture stored in the storage function;

a second predicted signal generating function to generate a second predicted signal for the first predicted signal from at least one second reference picture different from the first reference picture, which is stored in the storage function;

a specific band signal extracting function to refer to the specific band signal extraction information input by the input function, to extract a specific band signal corresponding to spatial frequency components in a predetermined band of the second predicted signal generated by the second predicted signal generating function;

a first adding function to add the specific band signal extracted by the specific band signal extracting function, to the decoded residual signal generated by the decoding function, to generate a first decoded residual signal;

a second adding function to add the first predicted signal generated by the first predicted signal generating function, to the first decoded residual signal generated by the first adding function, to generate a reconstructed picture, and to make the storage function store the generated reconstructed picture; and

an output function to output the reconstructed picture generated by the second adding function,

wherein the specific band signal extraction information contains the specific band signal extraction information indicating an extracted content of the spatial frequency components in the predetermined band of the second predicted signal with the predetermined second reference picture stored in the storage function and the first reference picture subjected to motion compensation relative to the first predicted signal, and

wherein the specific band signal extracting function refers to the specific band signal extraction information to extract a signal corresponding to the spatial frequency components in the predetermined band from the second predicted signal, and generates the specific band signal.

*Fig.1*

EP 2 104 360 A1

*Fig.2*

# Fig.3

# Fig.4

START — S401

INPUT ENCODED TARGET PICTURE — S402

MEASURE SPATIAL FREQUENCIES OF REFERENCE PICTURE AND TARGET PICTURE; GENERATE AND TEMPORARILY STORE SPATIAL FREQUENCY DATA — S403

GENERATE PROCESSED REFERENCE PICTURE — S404

PERFORM MOTION COMPENSATION USING PROCESSED REFERENCE PICTURE TO GENERATE PREDICTED SIGNAL — S405

OBTAIN RESIDUAL SIGNAL FROM PREDICTED SIGNAL AND TARGET SIGNAL — S407

PERFORM TRANSFORMATION AND QUANTIZATION OF RESIDUAL SIGNAL TO GENERATE QUANTIZED TRANSFORM COEFFICIENTS — S408

PERFORM INVERSE QUANTIZATION AND INVERSE TRANSFORMATION OF QUANTIZED TRANSFORM COEFFICIENTS TO GENERATE RECONSTRUCTED REDIDUAL SIGNAL — S409

ADD PREDICTED SIGNAL TO RECONSTRUCTED RESIDUAL SIGNAL TO GENERATE RECONSTRUCTED PICTURE — S410

TEMPORARILY STORE RECONSTRUCTED PICTURE AND MOTION VECTOR; OUTPUT QUANTIZED TRANSFORM COEFFICIENTS, PREDICTED SIGNAL GENERATION INFORMATION, AND MOTION VECTOR — S411

END — S412

# Fig.5

EP 2 104 360 A1

## Fig.6

```
        ( START )——S601
            |
            •————————————————————————————————┐
            |                                 |
┌──────────────────────┐              ┌──────────────────────┐
│ INPUT PREDICTED SIGNAL│——S602        │    INPUT MOTION       │——S604
│ GENERATION INFORMATION│              │     VECTOR IN         │
└──────────────────────┘              │   FRAME MEMORY        │
            |                          └──────────────────────┘
┌──────────────────────┐                      |
│ DETERMINE EXTRACTION  │——S603               |
│  REFERENCE PICTURE,   │                      |
│SPECIFIC BAND INFORMATION,│                  |
│ AND MOTION INFORMATION│◄────────────────────┘
└──────────────────────┘
            |
┌──────────────────────┐
│ GENERATE EXTRACTION   │——S605
│  PREDICTED PICTURE    │
└──────────────────────┘
            |
┌──────────────────────┐
│   PROCESS TARGET      │——S606
│  REFERENCE PICTURE    │
└──────────────────────┘
            |
┌──────────────────────┐
│  OUTPUT PROCESSED     │——S607
│  REFERENCE PICTURE    │
└──────────────────────┘
            |
        ( END )——S608
```

# Fig.7

```
           ( START )~S701
                 │
                 ▼
┌────────────────────────────────┐
│      INPUT COMPRESSED DATA      │~S702
└────────────────────────────────┘
                 │
                 ▼◄──────────────────────┐
┌────────────────────────────────┐       │
│ PERFORM ENTROPY DECODING TO EXTRACT │   │
│   QUANTIZED TRANSFORM COEFFICIENTS, │~S703
│ QUANTIZATION INFORMATION, MOTION VECTOR, │
│ AND PREDICTED SIGNAL GENERATION INFORMATION │
└────────────────────────────────┘       │
                 │                        │
                 ▼                        │
┌────────────────────────────────┐       │
│  PROCESS REFERENCE PICTURE, BASED ON │  │
│ PREDICTED SIGNAL GENERATION INFORMATION │~S704
│    AND MOTION VECTOR IN MEMORY    │     │
└────────────────────────────────┘       │
                 │                        │
                 ▼                        │
┌────────────────────────────────┐       │
│    GENERATE PREDICTED PICTURE,   │      │
│ BASED ON PROCESSED REFERENCE PICTURE │~S705
│       AND MOTION VECTOR         │       │
└────────────────────────────────┘       │
                 │                        │
                 ▼                        │
┌────────────────────────────────┐       │
│   PERFORM INVERSE QUANTIZATION OF │     │
│  QUANTIZED TRANSFORM COEFFICIENTS │~S706 │
└────────────────────────────────┘       │
                 │                        │
                 ▼                        │
┌────────────────────────────────┐       │
│  PERFORM INVERSE TRANSFORMATION TO │    │
│ GENERATE RECONSTRUCTED RESIDUAL SIGNAL │~S707
└────────────────────────────────┘       │
                 │                        │
                 ▼                        │
┌────────────────────────────────┐       │
│ ADD PREDICTED SIGNAL TO RECONSTRUCTED RESIDUAL │
│ SIGNAL TO GENERATE RECONSTRUCTED SIGNAL │~S708 │
└────────────────────────────────┘       │
                 │                        │
                 ▼                        │
┌────────────────────────────────┐       │
│ TEMPORARILY STORE RECONSTRUCTED SIGNAL │~S709
└────────────────────────────────┘       │
                 │                        │
                 ▼                        │
            S710                          │
         ╱IS PROCESSING╲        NO        │
        ╱ COMPLETED FOR ENTIRE ╲──────────┘
        ╲       DATA?         ╱
            ╲             ╱
                 │YES
                 ▼
            ( END )~S711
```

**Fig.8**

TARGET PICTURE         PREDICTED PICTURE

L807

MOTION DETECTION-MOTION COMPENSATION UNIT (803)

L803b

PREDICTED SIGNAL PROCESSOR (804)

L804b

L804a

L803a

MOTION INFORMATION -SPATIALFREQUENCY INFORMATION STORAGE (802)

L802a

L805

SPATIAL FREQUENCY DATA

L806

L802b

EXTRACTED SPATIAL FREQUENCY DETERMINER (801)

L801

800

50

REFERENCE PICTURES (FROM MEMORY)

INFORMATION OF COMPLEMENTING METHOD

EP 2 104 360 A1

*Fig.9*

```
          ( START )~S901
                │
                │──────────────────────┐
                │        S902           │
   ┌─────────────────────────┐          │
   │  INPUT SPATIAL FREQUENCY │          │        S906
   │  DATA OF TARGET PICTURE  │   ┌───────────────────┐
   │  AND REFERENCE PICTURE   │   │  INPUT REFERENCE  │
   └─────────────────────────┘   │  PICTURE AND INPUT│
                │        S903     │ MOTION INFORMATION│
   ┌─────────────────────────────┐└───────────────────┘
   │ DETERMINE EXTRACTED BAND FROM│          │
   │ SPATIAL FREQUENCY DATA OF TARGET│       │
   │ PICTURE AND REFERENCE PICTURE │         │
   └─────────────────────────────┘          │
                │        S904               │
   ┌─────────────────────────────┐          │
┌──│   GENERATE PREDICTED SIGNAL  │          │
│  └─────────────────────────────┘          │
│      S905        │◄──────────────────────┘
│ ┌──────────────┐ │        S907
│ │ STORE MOTION │ │
│ │   VECTOR     │ ┌─────────────────────────────┐
│ └──────────────┘ │ GENERATE EXTRACTION PICTURE │
│         │        └─────────────────────────────┘
└─────────►──────────────►
                │        S908
   ┌─────────────────────────────┐
   │   GENERATE PREDICTED         │
   │   REFERENCE PICTURE          │
   └─────────────────────────────┘
                │        S909
   ┌─────────────────────────────┐
   │   GENERATE PROCESSED         │
   │   PREDICTED SIGNAL           │
   └─────────────────────────────┘
                │
           ( END )~S910
```

# Fig.10

```
                   ( START )~S1001
                        │
    ┌───────────────────────────────────────┐
    │      INPUT ENCODED TARGET PICTURE       │~S1002
    └───────────────────────────────────────┘
                        │
    ┌───────────────────────────────────────┐
    │ MEASURE SPATIAL FREQUENCIES OF REFERENCE│
    │ PICTURE AND TARGET PICTURE; GENERATE AND│~S1003
    │ TEMPORARILY STORE SPATIAL FREQUENCY DATA│
    └───────────────────────────────────────┘
                        │
    ┌───────────────────────────────────────┐
    │         GENERATE PREDICTED SIGNAL       │~S1004
    └───────────────────────────────────────┘
                        │
    ┌───────────────────────────────────────┐
    │  GENERATE PROCESSED PREDICTED SIGNAL,   │~S1005
    │    USING EXTRACTION REFERENCE PICTURE   │
    └───────────────────────────────────────┘
                        │
    ┌───────────────────────────────────────┐
    │       OBTAIN RESIDUAL SIGNAL FROM       │~S1007
    │    PREDICTED SIGNAL AND TARGET SIGNAL   │
    └───────────────────────────────────────┘
                        │
    ┌───────────────────────────────────────┐
    │ PERFORM TRANSFORMATION AND QUANTIZATION │
    │     OF RESIDUAL SIGNAL TO GENERATE      │~S1008
    │    QUANTIZED TRANSFORM COEFFICIENTS     │
    └───────────────────────────────────────┘
                        │
    ┌───────────────────────────────────────┐
    │  PERFORM INVERSE TRANSFORMATION AND     │
    │   INVERSE QUANTIZATION OF QUANTIZED     │~S1009
    │  TRANSFORM COEFFICIENTS TO GENERATE     │
    │   RECONSTRUCTED RESIDUAL SIGNAL         │
    └───────────────────────────────────────┘
                        │
    ┌───────────────────────────────────────┐
    │ ADD PREDICTED SIGNAL TO RECONSTRUCTED   │
    │         RESIDUAL SIGNAL TO              │~S1010
    │   GENERATE RECONSTRUCTED PICTURE        │
    └───────────────────────────────────────┘
                        │
    ┌───────────────────────────────────────┐
    │ TEMPORARILY STORE RECONSTRUCTED PICTURE │
    │   AND MOTION VECTOR; OUTPUT QUANTIZED   │~S1011
    │  TRANSFORM COEFFICIENTS, PREDICTED SIGNAL│
    │ GENERATION INFORMATION, AND MOTION VECTOR│
    └───────────────────────────────────────┘
                        │
                   ( END )~S1012
```

*Fig.11*

# *Fig.12*

```
                    ( START )~S1201
                        |
        ┌───────────────┴───────────────┐
        |    INPUT PREDICTED             |                                    |
        |  SIGNAL GENERATION   ~S1202    |                                    |
        |    INFORMATION                 |                                    |
        └───────────────┬───────────────┘        ┌─────────────────────────┐
                        |                         |   INPUT MOTION          |
                        |                         | VECTOR IN FRAME  ~S1204 |
                        |                         |    MEMORY               |
        ┌───────────────┴───────────────┐        └────────────┬────────────┘
        | DETERMINE EXTRACTION REFERENCE |                     |
        |PICTURE, SPECIFIC BAND INFORMATION,~S1203             |
        |   AND MOTION INFORMATION       |                     |
        └───────────────┬───────────────┘                     |
                        |                                      |
        ┌───────────────┴───────────────┐                     |
        | GENERATE PREDICTED SIGNAL ~S1205                     |
        └───────────────┬───────────────┘                     |
                        |◄─────────────────────────────────────┘
        ┌───────────────┴───────────────┐
        | PROCESS PREDICTED SIGNAL ~S1206|
        └───────────────┬───────────────┘
                        |
        ┌───────────────┴───────────────┐
        |   OUTPUT PROCESSED             |
        | PREDICTED SIGNAL      ~S1207   |
        └───────────────┬───────────────┘
                        |
                    ( END )~S1208
```

# Fig.13

START — S1301

INPUT COMPRESSED DATA — S1302

PERFORM ENTROPY DECODING TO EXTRACT QUANTIZED TRANSFORM COEFFICIENTS, QUANTIZATION INFORMATION, MOTION VECTOR, AND PREDICTED SIGNAL GENERATION INFORMATION — S1303

GENERATE PREDICTED SIGNAL, BASED ON MOTION VECTOR — S1304

PROCESS PREDICTED SIGNAL, BASED ON PREDICTED SIGNAL, PREDICTED SIGNAL GENERATION INFORMATION, AND MOTION VECTOR — S1305

PERFORM INVERSE QUANTIZATION OF QUANTIZED TRANSFORM COEFFICIENTS — S1306

PERFORM INVERSE TRANSFORMATION TO GENERATE RECONSTUCTED RESIDUAL SIGNAL — S1307

ADD RECONSTUCTED RESIDUAL SIGNAL TO PREDICTED SIGNAL TO GENERATE RECONSTRUCTED SIGNAL — S1308

TEMPORARILY STORE RECONSTRUCTED SIGNAL — S1309

IS PROCESSING COMPLETED FOR ENTIRE DATA? — S1310    NO

YES

END — S1311

**Fig.14**

EP 2 104 360 A1

## Fig.15

EP 2 104 360 A1

EP 2 104 360 A1

# Fig.16

START ─ S1601

S1602
INPUT ENCODED TARGET PICTURE

S1603
GENERATE FIRST PREDICTED SIGNAL
FROM FIRST REFERENCE PICTURE
AND TARGET PICTURE

S1604
GENERATE MOTION VECTOR,
USING FIRST PREDICTED SIGNAL
AND SECOND REFERENCE PICTURE

S1607
SUBTRACT FIRST PREDICTED SIGNAL
FROM TARGET PICTURE TO
GENERATE FIRST RESIDUAL SIGNAL

S1605
GENERATE SECOND PREDICTED
SIGNAL, USING SECOND REFERENCE
PICTURE AND MOTION VECTOR

S1608
PERFORM INVERSE
TRANSFORMATION TO GENERATE
RECONSTRUCTED RESIDUAL SIGNAL

S1606
GENERATE SPECIFIC BAND SIGNAL
FROM SECOND PREDICTED SIGNAL
AND GENERATE SPECIFIC
BAND SIGNAL INFORMATION

S1610
PERFORM TRANSFORMATION AND QUANTIZATION
OF SECOND RESIDUAL SIGNAL TO GENERATE
QUANTIZED TRANSFORM COEFFICIENTS

S1611
PERFORM INVERSE QUANTIZATION AND INVERSE
TRANSFORMATION OF QUANTIZED TRANSFORM COEFFICIENTS
TO GENERATE RECONSTRUCTED RESIDUAL SIGNAL

S1612
ADD SPECIFIC BAND SIGNAL TO
RECONSTRUCTED RESIDUAL SIGNAL
TO GENERATE FIRST SUM SIGNAL

S1613
ADD FIRST PREDICTED SIGNAL
TO FIRST SUM SIGNAL TO
GENERATE RECONSTRUCTED PICTURE

S1614
TEMPORARILY STORE RECONSTUCTED
PICTURE; OUTPUT QUANTIZED
TRANSFORM COEFFICIENTS,
SPECIFIC BAND SIGNAL INFORMATION,
AND MOTION VECTOR

END ─ S1615

58

# Fig.17

START ~S1701

~S1702

INPUT COMPRESSED DATA

~S1703

PERFORM ENTROPY DECODING TO EXTRACT QUANTIZED TRANSFORM COEFFICIENTS, QUANTIZATION INFORMATION, MOTION VECTOR, AND PREDICTED SIGNAL GENERATION INFORMATION

~S1704

PERFORM INVERSE QUANTIZATION OF QUANTIZED TRANSFORM COEFFICIENTS

~S1705

PERFORM INVERSE TRANSFORMATION TO GENERATE RECONSTRUCTED RESIDUAL SIGNAL

~S1706

GENERATE FIRST PREDICTED SIGNAL FROM REFERENCE PICTURE AND MOTION VECTOR

~S1707

GENERATE MOTION VECTOR BETWEEN FIRST PREDICTED SIGNAL AND REFERENCE PICTURE

~S1708

GENERATE SECOND PREDICTED SIGNAL, USING MOTION VECTOR AND SECOND REFERENCE PICTURE

~S1709

GENERATE SPECIFIC BAND SIGNAL FROM SECOND PREDICTED SIGNAL

~S1710

ADD SPECIFIC BAND SIGNAL TO RECONSTRUCTED RESIDUAL SIGNAL TO GENERATE FIRST RESIDUAL SIGNAL

~S1711

ADD FIRST RESIDUAL SIGNAL TO FIRST PREDICTED SIGNAL TO GENERATE RECONSTRUCTED SIGNAL

~S1712

TEMPORARILY STORE RECONSTRUCTED SIGNAL

~S1713

NO

IS PROCESSING COMPLETED FOR ENTIRE DATA?

YES

END ~S1714

Fig.18

EP 2 104 360 A1

S1800 — IMAGE INPUT MODULE

S1801 — SPATIAL FREQUENCY ANALYZING MODULE

S1803 — PREDICTED SIGNAL GENERATING MODULE

S1804 — RESIDUAL SIGNAL GENERATING MODULE

S1805 — TRANSFORM MODULE

S1806 — QUANTIZATION MODULE

INVERSE QUANTIZATION MODULE — S1807

INVERSE TRANSFORM MODULE — S1808

ADDING MODULE — S1809

STORAGE MODULE — S1810

ENTROPY CODING MODULE — S1811

VIDEO ENCODING PROGRAM — P1812

1812

# Fig.19

S1900 — COMPRESSED DATA INPUT MODULE

S1901 — ENTROPY DECODING MODULE

S1902 — REFERENCE PICTURE PROCESSING MODULE

S1903 — PREDICTED SIGNAL GENERATING MODULE

S1904 — INVERSE QUANTIZATION MODULE

S1905 — INVERSE TRANSFORM MODULE

S1906 — ADDING MODULE

S1907 — STORAGE MODULE

VIDEO DECODING PROGRAM — P1908

— 1908

# Fig.20

30

CPU — 26

14 — WORKING MEMORY

16 — MEMORY

12 — RECORDING MEDIUM
11 — 
READER

DISPLAY — 18

MOUSE — 20

KEYBOARD — 22

COMMUNICATOR — 24

# Fig.21

*Fig.22*

(a)

MAGNITUDE OF COMPONENT

x%

DC BANDWIDTH SPATIAL FREQUENCY

TARGET PICTURE

(b)

MAGNITUDE OF COMPONENT

DC SPATIAL FREQUENCY

TARGET REFERENCE PICTURE

(c)

MAGNITUDE OF COMPONENT

T

DC $F_2$ $F_2$ SPATIAL FREQUENCY

DIF_FREQ

## INTERNATIONAL SEARCH REPORT

| | International application No. |
|---|---|
| | PCT/JP2007/074984 |

A.　CLASSIFICATION OF SUBJECT MATTER
*H04N7/32(2006.01)i*

According to International Patent Classification (IPC) or to both national classification and IPC

B.　FIELDS SEARCHED

Minimum documentation searched (classification system followed by classification symbols)
H04N7/24-7/68

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.　DOCUMENTS CONSIDERED TO BE RELEVANT

| Category* | Citation of document, with indication, where appropriate, of the relevant passages | Relevant to claim No. |
|---|---|---|
| A | WO 2006/112272 A1　(NTT Docomo Inc.),<br>26 October, 2006 (26.10.06),<br>Full text; all drawings<br>& EP 1881707 A1 | 1-30 |
| A | JP 10-341443 A　(Fujitsu Ltd.),<br>22 December, 1998 (22.12.98),<br>Full text; all drawings<br>& US 6078617 A　　　　& EP 883299 A2 | 1-30 |
| A | JP 6-508014 A　(Thomson-CSF),<br>08 September, 1994 (08.09.94),<br>Full text; all drawings<br>& WO 1993/019557 A1　　& US 5459515 A | 1-30 |

| ☒　Further documents are listed in the continuation of Box C. | ☐　See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered　to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 March, 2008 (10.03.08) | 18 March, 2008 (18.03.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2007/074984

C (Continuation).　DOCUMENTS CONSIDERED TO BE RELEVANT

| Category* | Citation of document, with indication, where appropriate, of the relevant passages | Relevant to claim No. |
|---|---|---|
| A | JP 10-136371 A  (Victor Company Of Japan, Ltd.),<br>22 May, 1998 (22.05.98),<br>Full text; all drawings<br>(Family: none) | 1-30 |

Form PCT/ISA/210 (continuation of second sheet) (April 2007)